# EUROPEAN PATENT APPLICATION

(11) **EP 4 496 385 A1**
(43) Date of publication of application: **22.01.2025**
(21) Application number: 24189886.5
(22) Date of filing: 19.07.2024
(51) Int. Cl.: H04W 48/18, H04W 60/00, H04W 12/00

(54) **MULTIPLE ACCESS NETWORK CONTROL**

(30) Priority: 21.07.2023 US 202363528147 P
(71) Applicant: Comcast Cable Communications LLC, Philadelphia, Pennsylvania 19103 (US)
(72) Inventor: CHUN, SungDuck, Philadelphia, 19103 (US); PARK, Kyungmin, Philadelphia, 19103 (US); DINAN, Esmael Hejazi, Philadelphia, 19103 (US); FILIN, Stanislav, Philadelphia, 19103 (US); KIM, Taehun, Philadelphia, 19103 (US); XU, Jian, Philadelphia, 19103 (US); TALEBI FARD, Peyman, Philadelphia, 19103 (US); NORMANN, Henrik Andreas, Philadelphia, 19103 (US)
(74) Representative: V.O.

(57) **Abstract**

Multiple access paths may allow a wireless device to communicate with a plurality of network nodes simultaneously. Multiple access policy information may be sent to the wireless device. Using the multiple access policy information, the wireless device may determine to perform one or more registration requests over multiple access paths and one or more network slices to request for the access paths. The wireless device may send the registration requests, including the network slices, over the multiple access paths.

## Description

### CROSS-REFERENCE TO RELATED APPLICATIONS

This application claims the benefit of U.S. Provisional Application No. 63/528,147, filed on July 21, 2023. The above referenced application is hereby incorporated by reference in its entirety.

### BACKGROUND

A wireless device is assigned is assigned with a registration area and an allowed network slice in the registration area. The wireless device can establish a session for the allowed network slice.

### SUMMARY

The following summary presents a simplified summary of certain features. The summary is not an extensive overview and is not intended to identify key or critical elements.

Multiple access paths may allow a wireless device to communicate with a plurality of network nodes simultaneously. The wireless device may support use of multiple access paths, such as to boost network capacity and/or to increase reliability. Multi access policy information (e.g., such as dual steer policy information) may be provided to a wireless device. Based on the multi access policy information, the wireless device may determine whether to perform one or more registrations over multiple access paths and/or may determine one or more network slices to request for the access path(s). One or more registration requests may be sent over the multiple access paths, and the one or more registration requests may comprise the one or more network slices allowed by the multi access policy information.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1A and FIG. 1B show example communication networks.
FIG. 2A, FIG. 2B, FIG. 2C, and FIG. 2D show examples frameworks for a service-based architecture within a core network.
FIG. 3 shows an example communication network.
FIG. 4A and FIG. 4B show example core network architectures.
FIG. 5 shows an example of a core network architecture.
FIG. 6 shows an example of network slicing.
FIG. 7A shows an example a user plane protocol stack.
FIG. 7B shows an example a control plane protocol stack.
FIG. 7C shows example services provided between protocol layers of the user plane protocol stack.
FIG. 8 shows an example quality of service (QoS) model.
FIG. 9A, FIG. 9B, FIG. 9C, and FIG. 9D show example states and state transitions of a wireless device.
FIG. 10 shows an example registration procedure for a wireless device.
FIG. 11 shows an example service request procedure for a wireless device.
FIG. 12 shows an example of a protocol data unit session establishment procedure for a wireless device.
FIG. 13A shows example elements in a communications network.
FIG. 13B shows example elements of a computing device that may be used to implement any of the various devices described herein.
FIG. 14A, FIG. 14B, FIG. 14C, and FIG. 14D show various example arrangements of physical core network deployments.
FIG. 15A shows an example of a wireless device (e.g., UE) accessing a 3rd Generation Partnership Project (3GPP) system via one or more access types.
FIG. 15B shows an example of a wireless device (e.g., UE) accessing a 3rd Generation Partnership Project (3GPP) system via one or more access types.
FIG. 16 shows an example of a wireless device (e.g., UE) exchanging one or more data with a data network via a 3GPP access type.
FIG. 17 shows an example of a wireless device (e.g., UE) exchanging one or more data with the data network via a non-3GPP (N3GPP) access type.
FIG. 18 shows an example of a wireless device (e.g., UE) establishing a multi access (MA) protocol data unit (PDU) session with the network..
FIG. 19 shows an example of a wireless device (e.g., UE) and a user plane function (UPF) may establish the MA PDU session.
FIG. 20 shows an example of one or more 3GPP radio access networks (RANs) diversified and/or deployed in differentiated areas.
FIG. 21 shows an example of a wireless device (e.g., UE) registering to one or more core network nodes.
FIG. 22 shows an example of a wireless device (e.g., UE) registering to one or more core network nodes.
FIG. 23 shows an example of a wireless device (e.g., UE) using a dualsteer policy.
FIG. 24 shows an example of a first core network node delivering a dualsteer policy relevant to a wireless device (e.g., UE).
FIG. 25 shows an example of assisting a first core network node to fetch a dualsteer policy information from one or more second core network nodes.
FIG. 26 shows an example of assisting a wireless device (e.g., UE) to determine when to request and/or register a network slice over one or more access paths.
FIG. 27 shows an example of dualsteer policy information.
FIG. 28 shows an example of a wireless device (e.g., UE) using configuration information.
FIG. 29 shows an example of a wireless device (e.g., UE) registering to one or more network slices over one or more access paths.
FIG. 30 shows an example of a wireless device (e.g., UE) changing an access path a network slice.
FIG. 31 shows an example of updating a unified data management (UDM) with one or more network slices allowed for a wireless device (e.g., UE).
FIG. 32 shows an example of determining one or more network slice allowed for dual steer.
FIG. 33 shows an example of a wireless device (e.g., UE) managing one or more registration for one or more access paths for an access type.
FIG. 34 shows an example of a wireless device (e.g., UE) using a dualsteer policy to establish a PDU session.
FIG. 35 shows an example of a wireless device (e.g., UE) using dualsteer policy to establish a PDU session.
FIG. 36 shows an example of sending a message, indicating registration of a network slice, to a wireless device (e.g., UE).
FIG. 37 shows an example of a wireless device (e.g., UE) using a dualsteer policy to register a network slice.
FIG. 38 shows an example of a wireless device (e.g., UE) establishing a PDU session.
FIG. 39 shows an example of a session management function (SMF) sending dualsteer configuration information.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to a multiple access procedure for wireless communications.

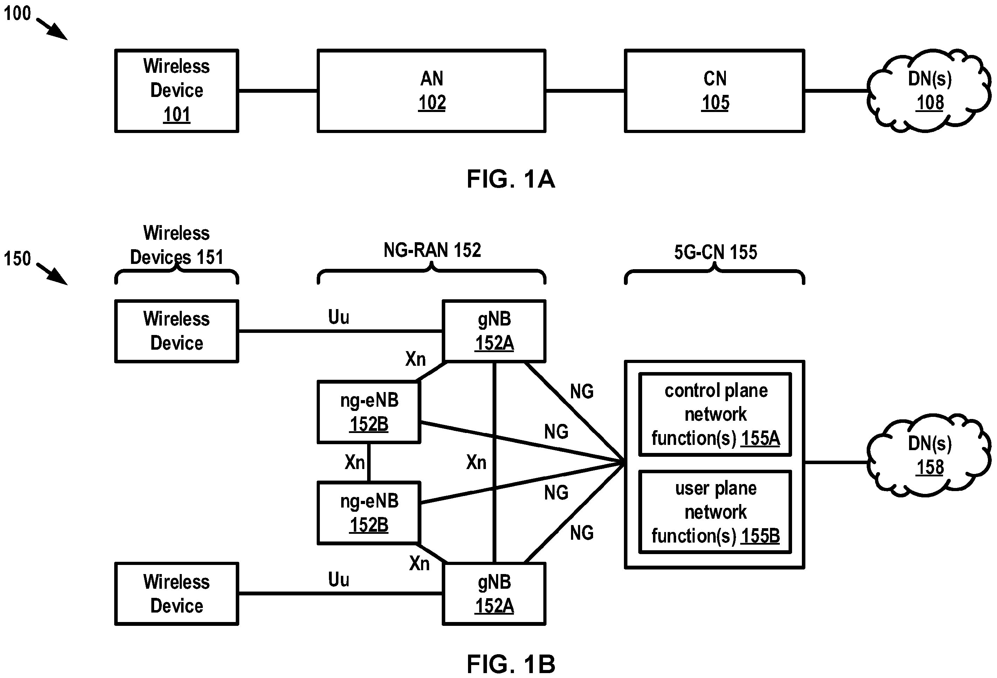

FIG. 1A shows an example communication network 100. The communication network 100 may comprise, for example, a public land mobile network (PLMN) operated/managed/run by a network operator. The communication network 100 comprise one or more of a wireless device 101, an access network (AN) 102, a core network (CN) 105, and/or one or more data network(s) (DNs) 108.

The wireless device 101 may communicate with DNs 108, for example, via AN 102 and/or CN 105. As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, an unmanned aerial vehicle, an urban air mobility aircraft, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The AN 102 may connect the wireless device 101 to the CN 105. A communication direction from the AN 102 to the wireless device 101 may be referred to as a downlink and/or a downlink communication direction. The communication direction from the wireless device 101 to the AN 102 may be referred to as an uplink and/or an uplink communication direction. Downlink transmissions may be separated and/or distinguished from uplink transmissions using frequency division duplexing (FDD), time-division duplexing (TDD), any other duplexing and/or multiplexing schemes, and/or some combination of the two duplexing techniques. The AN 102 may connect to and/or communicate with wireless device 101 via radio communications over an air interface. An AN that at least partially operates over the air interface may be referred to as a radio access network (RAN). A RAN may comprise one or more of: a radio unit (RU), distributed unit (DU), and/or a centralized unit (CU). A RAN may operate in a virtualized and/or in a non-virtualized environment. A RAN may perform one or more network functions in hardware. A RAN may perform one or more network functions in software. A RAN may perform one or more network functions in hardware and/or software. The CN 105 may set up/configure one or more end-to-end connections between wireless device 101 and the one or more DNs 108. The CN 105 may authenticate wireless device 101, provide a charging functionality, and/or provide/configure one or more additional functionalities/services for the wireless device 101.

As used throughout, the term "base station" may refer to, comprise, and/or encompass any element of the AN 102 that facilitates communication between wireless device 101 and the AN 102 (and/or any other elements of the communication network 100). A base station may comprise an RU. ANs and base stations may be referred to by other terminologies and/or may have other implementations. The base station may be a terrestrial base station at a fixed location on the earth. The base station may be a mobile base station with a moving coverage area. The base station may be on an aerial vehicle and/or may be located in space. For example, the base station may be on board an aircraft or a satellite. The RAN may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

The base station may be referred to using different terminologies in different communication standards/protocols. For example, WiFi and other standards may use the term access point. The Third-Generation Partnership Project (3GPP) has produced specifications for three generations of mobile networks, each of which uses a different terminology. Third Generation (3G) and/or Universal Mobile Telecommunications System (UMTS) standards may use the term Node B. 4G, Long Term Evolution (LTE), and/or Evolved Universal Terrestrial Radio Access (E-UTRA) standards may use the term Evolved Node B (eNB). 5G and/or New Radio (NR) standards may describe AN 102 as a next-generation radio access network (NG-RAN) and may refer to base stations as Next Generation eNB (ng-eNB) and/or Generation Node B (gNB). Future standards (for example, 6G, 7G, 8G) may use different terminologies to refer to the elements/components which implement the methods described in the present disclosure (e.g., wireless devices, base stations, ANs, CNs, components thereof, and/or other elements in a communication network). A base station may be and/or comprise a repeater or relay node used to extend the coverage area of a donor node. A repeater node may amplify and rebroadcast a radio signal received from a donor node. A relay node may perform the same/similar functions as a repeater node. A relay node may decode radio signals received from the donor node (e.g., to remove noise) before amplifying and rebroadcasting the radio signal.

The AN 102 may include one or more base stations. The one or more base stations may have/serve one or more coverage areas. A geographical size and/or an extent of a coverage area may be based on a range at which a receiver of AN 102 can successfully receive transmissions from a transmitter (e.g., the wireless device 101) operating within the coverage area (and/or vice-versa). The coverage areas may be referred to as sectors or cells. In some contexts, the term cell may refer to a carrier frequency used in a particular coverage area. Base stations with large coverage areas may be referred to as macrocell base stations. Base stations may cover/serve smaller areas, for example, to provide coverage in areas/locations with weak macrocell coverage, and/or to provide additional coverage in areas with high traffic (e.g., referred to as hotspots). Examples of small cell base stations comprise (e.g., in order of decreasing coverage areas) microcell base stations, picocell base stations, femtocell base stations, and/or home base stations. In combination, the coverage areas of the base stations may provide radio coverage/service to the wireless device 101 over a wide geographic area to support wireless device mobility.

A base station may comprise one or more sets of antennas for communicating with the wireless device 101 over an air interface. Each set of antennas may be separately controlled by the base station. Each set of antennas may have a corresponding coverage area. For example, a base station may comprise three sets of antennas to respectively control three coverage areas (e.g., on three different sides) of the base station. A base station may comprise any quantity of antennas, which may correspond to any quantity of coverage areas. The entirety of the base station (and its corresponding antennas) may be deployed at a single location or at a plurality of locations. A controller (e.g., at a central location) may control/operate one or more sets of antennas at one or more distributed locations. The controller may be, for example, a baseband processing unit that comprises a centralized and/or cloud-based RAN architecture. The baseband processing unit may be either centralized in a pool of baseband processing units or may be virtualized. A set of antennas at a distributed location may be referred to as a remote radio head (RRH).

FIG. 1B shows another example communication network 150. The communication network 150 may comprise, for example, a PLMN operated/run by a network operator. The communication network 150 may comprise wireless devices 151, a next generation radio access network (NG-RAN) 152, a 5G core network (5G-CN) 155, and one or more DNs 158. The NG-RAN 152 may comprise one or more base stations (e.g., generation node Bs (gNBs) 152A and/or next generation evolved Node Bs (ng eNBs) 152B). The 5G-CN 155 may comprise one or more network functions (NFs). The one or more NFs may comprise control plane functions 155A and user plane functions 155B. The one or more DNs 158 may comprise public DNs (e.g., the Internet), private DNs, and/or intra-operator DNs. The components/elements shown in FIG. 1B may represent specific implementations and/or terminology of components/elements shown in FIG. 1A.

The base stations of the NG-RAN 152 may be connected to the wireless devices 151 via one or more Uu interfaces. The base stations of the NG-RAN 152 may be connected to each other via one or more first interface(s) (e.g., Xn interface(s)). The base stations of the NG-RAN 152 may be connected to 5G-CN 155 via one or more second interfaces (e.g., NG interface(s)). An interfaces may comprise one or more air interfaces, direct physical connections, indirect connections, and/or combinations thereof. For example, the Uu interface may comprise an air interface. The NG and Xn interfaces may comprise an air interface, direct physical connections, and/or indirect connections over an underlying transport network (e.g., an internet protocol (IP) transport network).

Each of the Uu, Xn, and NG interfaces may be associated with a protocol stack. The protocol stacks may comprise a user plane (UP) protocol stack and a control plane (CP) protocol stack. User plane data may comprise data corresponding to (e.g., associated with and/or pertaining to) users of the wireless devices 151. For example, user plane data may comprise internet content downloaded via a web browser application, sensor data uploaded via a tracking application, and/or email data communicated to and/or from an email server. Control plane data may comprise signaling and/or control message messages. For example, control plane data may facilitate packaging and routing of user plane data such that the user plane data may be communicated with (e.g., sent to and/or received from) the DN(s). The NG interface may be divided into (e.g., may comprise) an NG user plane interface (NG-U) and an NG control plane interface (NG-C). The NG-U interface may provide/perform delivery of user plane data between the base stations and the one or more user plane network functions 155B. The NG-C interface may be used for control signaling between the base stations and the one or more control plane network functions 155A. The NG-C interface may provide, for example, NG interface management, wireless device context management, wireless device mobility management, transport of non-access stratum (NAS) messages, paging, protocol data unit (PDU) session management, and configuration transfer and/or warning message transmission. In at least some scenarios, the NG-C interface may support transmission of user data (e.g., a small data transmission for an IoT device).

One or more of the base stations of the NG-RAN 152 may be split into a central unit (CU) and one or more distributed units (DUs). A CU may be coupled to one or more DUs via an interface (e.g., an F1 interface). The CU may handle one or more upper layers in the protocol stack and the DU may handle one or more lower layers in the protocol stack. For example, the CU may handle a radio resource control (RRC) layer, a physical data convergence protocol (PDCP) layer, and/or a service data application protocol (SDAP) layer, and the DU may handle radio link control (RLC) layer, a medium access control (MAC) layer, and/or a physical (PHY) layer. The one or more DUs may be in geographically diverse locations relative to the CU and/or each other. The CU/DU split architecture may permit increased coverage and/or better coordination.

The gNBs 152A and ng-eNBs 152B may provide different user plane and control plane protocol termination towards the wireless devices 151. For example, the gNB 154A may provide new radio (NR) protocol terminations over a Uu interface associated with a first protocol stack. The ng-eNBs 152B may provide Evolved UMTS Terrestrial Radio Access (E-UTRA) protocol terminations over a Uu interface associated with a second protocol stack.

The 5G-CN 155 may authenticate wireless devices 151, set up end-to-end connections between wireless devices 151 and the one or more DNs 158, and/or provide charging functionality. The 5G-CN 155 may be based on a service-based architecture. The service-based architecture may enable the NFs comprising the 5G-CN 155 to offer services to each other and to other elements of the communication network 150 via interfaces. The 5G-CN 155 may include any quantity of other NFs and any quantity of instances of each NF.

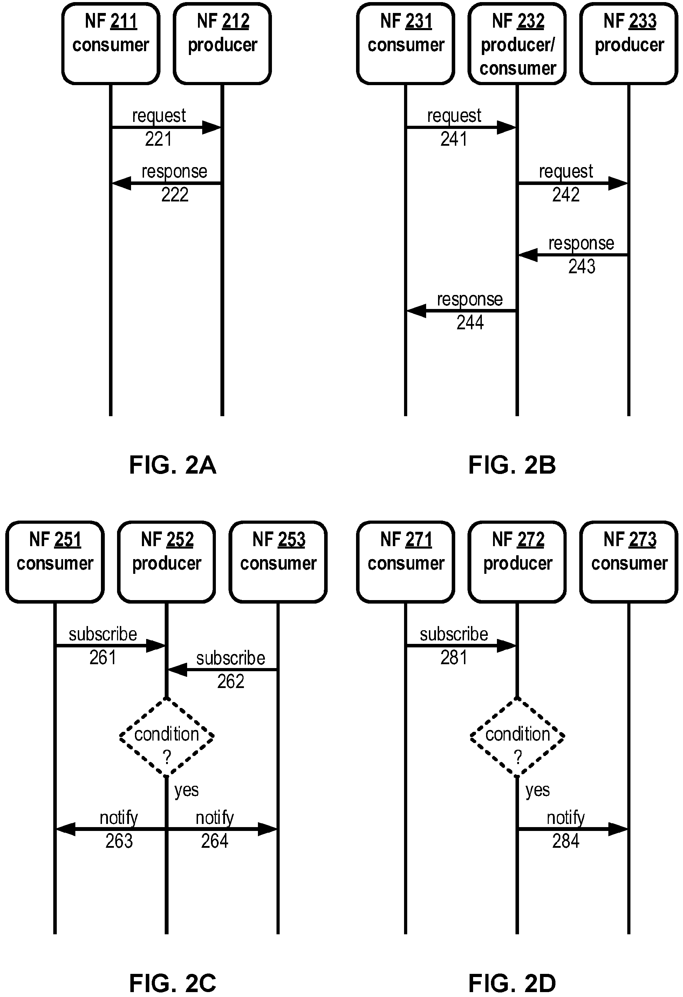

FIG. 2A, FIG. 2B, FIG. 2C, and FIG. 2D show example frameworks for a service-based architecture within a core network. A service, in a service-based architecture, may be requested/sought by a service consumer and provided by a service producer. An NF may determine, prior to obtaining the requested service, where the requested service may be obtained. The NF may communicate with a network repository function (NRF) to discover a service. For example, an NF that provides one or more services may register with a network repository function (NRF). The NRF may store data relating to the one or more services that the NF is prepared to provide to other NFs in the service-based architecture. A consumer NF may query the NRF to discover/determine a producer NF. For example, the consumer NF may obtain, from the NRF, a list of NF instances that provide a particular service).

As shown in FIG. 2A, an NF 211 (e.g., a consumer NF) may send a request 221 to an NF 212 (e.g., a producer NF). The request 221 may be a request for a particular service. The request 221 may be sent based on a discovery that NF 212 is a producer of that service. The request 221 may comprise data relating to NF 211 and/or the requested service. The NF 212 may receive the request 221, perform one or more actions associated with the requested service (e.g., retrieving data), and provide/send a response 221. The one or more actions performed by the NF 212 may be based on request data included in the request 221, data stored by the NF 212, and/or data retrieved by the NF 212. The response 222 may notify/indicate, to the NF 211, that the one or more actions have been completed. The response 222 may comprise response data relating to the NF 212, the one or more actions, and/or the requested service.

As shown in FIG. 2B, an NF 231 may send a request 241 to an NF 232. A service produced/provided by the NF 232 may comprise sending a request 242 to an NF 233 (e.g., based on receiving the request 241). The NF 233 may perform one or more actions and provide/send a response 243 to the NF 232. The NF 232 may send a response 244 to the NF 231, for example, based on receiving the response 243. As shown in FIG. 2B, an NF (e.g., a single NF) may perform the role of a producer of services, consumer of services, and/or both. A particular NF service may comprise any quantity/number of nested NF services produced by one or more other NFs.

FIG. 2C shows an example of subscribe-notify interactions between a consumer NF and a producer NF. An NF 251 may send a subscription 261 (e.g., a subscription request) to an NF 252. An NF 253 may send a subscription 262 (e.g., a subscription request) to the NF 252. Although FIG. 2C shows two NFs and the NF 252 providing multiple subscription services to the two NFs, a subscribe-notify interaction may comprise one subscriber, and/or any other quantity of subscribers. The NFs 251, 253 may be independent from one another. For example, the NFs 251, 253 may independently discover the NF 252 and/or independently determine to subscribe to the service offered by the NF 252. The NF 252 may provide/send a notification to a subscribing NF, for example, based on receiving the subscription. For example, the NF 252 may send a notification 263 to the NF 251 based on the subscription 261 and/or may send a notification 264 to the NF 253 based on the subscription 262.

The sending of the notifications 263, 264 may be conditional. The sending of the notifications 263, 264 may be based on a determination that a condition has occurred. The notifications 263, 264 may be based on a determination that a particular event has occurred, a determination that a particular condition is outstanding, and/or a determination that a duration of time associated with the subscription has elapsed. The duration of time may be a time period associated with a subscription for notifications (e.g., periodic notifications). The NF 252 may send the notifications 263, 264 to the NFs 251, 253 simultaneously, substantially simultaneously, and/or based on/in response to a same condition. The NF 252 may send the notifications 263, 264 at different times and/or based on/in response to different notification conditions. The NF 251 may request a notification based on a certain parameter, as measured by the NF 252, exceeding a first threshold. The NF 252 may request a notification based on the parameter exceeding a second threshold (e.g., different from the first threshold). A parameter of interest and/or a corresponding threshold may be indicated in the subscriptions 261, 262.

FIG. 2D shows another example of a subscribe-notify interaction. An NF 271 may send a subscription 281 to an NF 272. The NF 272 may send a notification 284, for example, based on/in response to receipt of the subscription 281 and/or a determination that a notification condition has occurred. The notification 284 may be sent to an NF 273. While the example of FIG. 2C shows a notification being sent to the subscribing NF, the example of FIG. 2D shows that a subscription and its corresponding notification may be associated with (e.g., received from and sent to) different NFs. For example, the NF 271 may subscribe to the service provided by the NF 272 on behalf of the NF 273.

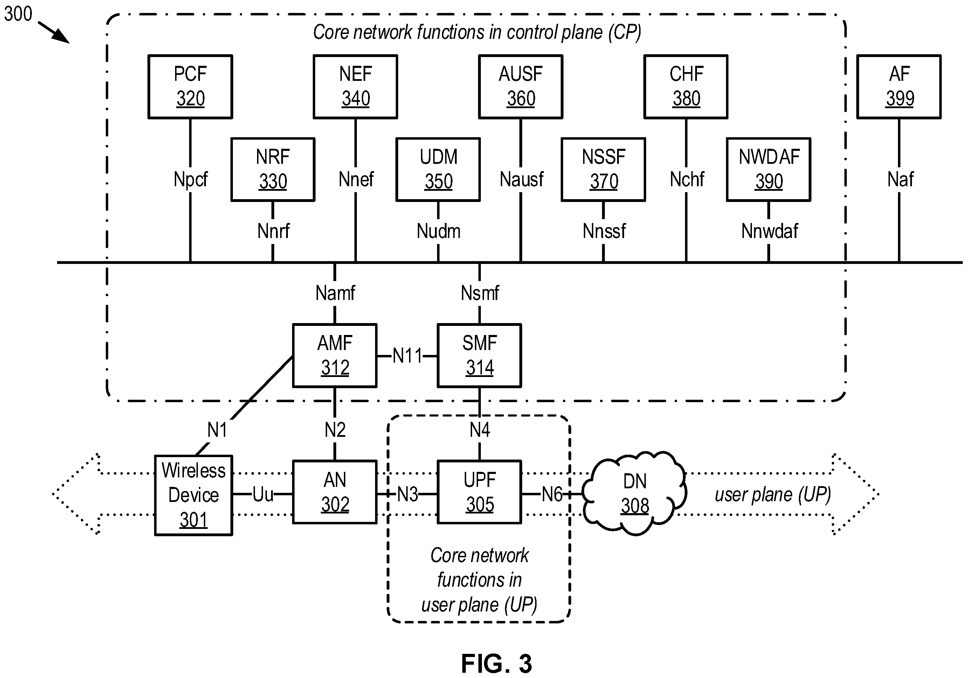

FIG. 3 shows an example communication network 300. The Communication network 300 may comprise a wireless device 301, an AN 302, and/or a DN 308. The other elements shown in FIG. 3 may be included in and/or associated with a core network. An element (e.g., each element) of the core network may be an NF.

The NFs may comprise a user plane function (UPF) 305, an access and mobility management function (AMF) 312, a session management function (SMF) 314, a policy control function (PCF) 320, a network repository function (NRF) 330, a network exposure function (NEF) 340, a unified data management (UDM) 350, an authentication server function (AUSF) 360, a network slice selection function (NSSF) 370, a charging function (CHF) 380, a network data analytics function (NWDAF) 390, and/or an application function (AF) 399. The UPF 305 may be a user plane core network function. The NFs 312, 314, and 320-390 may be control plane core network functions. The core network may comprise additional instances of any of the NFs shown in FIG. 3 and/or one or more different types of NF that provide different services. Other examples of NF type may comprise a gateway mobile location center (GMLC), a location management function (LMF), an operations, administration, and maintenance function (OAM), a public warning system (PWS), a short message service function (SMSF), a unified data repository (UDR), and/or an unstructured data storage function (UDSF).

An element (e.g., each element) shown in FIG. 3 may comprise an interface with at least one other element. The interface may be a logical connection and/or a direct physical connection. Any interface may be identified/indicated using a reference point representation and/or a service-based representation. In a reference point representation, the letter N may be used followed by a numeral to indicate an interface between two specific elements. For example, as shown in FIG. 3, the AN 302 and the UPF 305 may interface via N3, whereas UPF 305 and DN 308 may interface via N6. In a service-based representation, the letter N may be followed by one or more alphabets/letters. The letters may identify/indicate an NF that provides services to the core network. For example, PCF 320 may provide services via interface Npcf. The PCF 320 may provide services to any NF in the core network via Npcf. A service-based representation may correspond to a bundle of reference point representations. For example, the Npcf interface between PCF 320 and the core network may generally correspond to an N7 interface between PCF 320 and SMF 314, an N30 interface between PCF 320 and NEF 340, and/or an N# interface between any functions where # may indicate any number.

The UPF 305 may serve as a gateway for user plane traffic between the AN 302 and the DN 308. The wireless device 301 may connect to UPF 305 via a Uu interface and an N3 interface (also described as NG-U interface). The UPF 305 may connect to the DN 308 via an N6 interface. The UPF 305 may connect to one or more other UPFs (not shown) via an N9 interface. The wireless device 301 may be configured to receive services through a protocol data unit (PDU) session. The PDU session may be a logical connection between the wireless device 301 and the DN 308. The UPF 305 (or a plurality of UPFs) may be selected by the SMF 314 to handle/process a particular PDU session between the wireless device 301 and the DN 308. The SMF 314 may control the functions of the UPF 305 with respect to the PDU session. The SMF 314 may connect to the UPF 305 via an N4 interface. The UPF 305 may handle/process any quantity of PDU sessions associated with any quantity of wireless devices (via any quantity of ANs). The UPF 305 may be controlled, for handling the one or more PDU sessions, by any quantity of SMFs via any quantity of corresponding N4 interfaces.

The AMF 312 may control wireless device access to the core network. The wireless device 301 may register with the network via the AMF 312. for the wireless device 301 may register with the network prior to establishing a PDU session. The AMF 312 may manage a registration area of the wireless device 301, which may enable the network to track the physical location of wireless device 301 within the network. The AMF 312 may manage wireless device mobility for a wireless device in connected mode. For example, the AMF 312 may manage wireless device handovers from one AN (or portion thereof) to another. The AMF 312 may perform, for a wireless device in idle mode, registration updates, and/or page the wireless device to transition the wireless device to connected mode.

The AMF 312 may receive, from the wireless device 301, NAS messages. The NAS messages may be sent/transmitted in accordance with NAS protocol. NAS messages may relate to communications between the wireless device 301 and the core network. NAS messages may be relayed to the AMF 312 via the AN 302. Communication between the wireless device 301 and the AMF 312 may be represented as communication via the N1 interface. NAS messages may facilitate wireless device registration and mobility management, for example, by authenticating, identifying, configuring, and/or managing a connection of the wireless device 301. NAS messages may support session management procedures for maintaining user plane connectivity and quality of service (QoS) of a session between the wireless device 301 and the DN 309. The AMF 312 may send a NAS message to SMF 314, for example, if the NAS message involves (e.g., is associated with, corresponds to) session management. NAS messages may be used to transport messages between wireless device 301 and other components of the core network (e.g., core network components other than AMF 312 and SMF 314). The AMF 312 may act on/process a NAS message, or alternatively, forward the NAS message to an appropriate core NF (e.g., SMF 314, etc.).

The SMF 314 may establish, modify, and/or release a PDU session based on messaging received from the wireless device 301. The SMF 314 may allocate, manage, and/or assign an IP address to the wireless device 301, for example, based on establishment of a PDU session. Multiple SMFs may be in/associated with the network. Each of the SMFs may be associated with a respective group of wireless devices, base stations, and/or UPFs. A wireless device with multiple PDU sessions may be associated with a different SMF for each PDU session. The SMF 314 may select one or more UPFs to handle/process a PDU session. The SMF 314 may control the handling/processing of the PDU session by the selected UPF by providing rules for packet handling (e.g., packet detection rules (PDRs), forwarding action rules (FARs), QoS enforcement rules (QERs), etc.). Rules relating to QoS and/or charging for a particular PDU session may be obtained from the PCF 320 and provided to the UPF 305 (e.g., by the SMF 314).

The PCF 320 may provide/send, to other NFs, services relating to policy rules. The PCF 320 may use subscription data and information about network conditions to determine policy rules. The PCF 320 may provide the policy rules to a particular NF which may be responsible for enforcement of those rules. Policy rules may relate to policy control for access and mobility, and may be enforced by the AMF 312. Policy rules may relate to session management, and may be enforced by the SMF 314. Policy rules may be network-specific, wireless device-specific, session-specific, and/or data flow-specific.

The NRF 330 may provide service discovery functions. The NRF 330 may belong/correspond to a particular PLMN. The NRF 330 may maintain NF profiles relating to other NFs in the communication network 300. The NF profile may comprise, for example, an address, PLMN, and/or type of the NF, a slice indicator/identifier, a list of the one or more services provided by the NF, and/or authorization required to access the services.

The NEF 340 may provide an interface to external domains, permitting the external domains to selectively access the control plane of the communication network 300. The external domain may comprise, for example, third-party network functions, application functions, and/or any other functions. The NEF 340 may act as a proxy between external elements and network functions such as the AMF 312, the SMF 314, the PCF 320, the UDM 350, and/or any other functions. As an example, the NEF 340 may determine a location and/or reachability status of the wireless device 301 based on reports from the AMF 312, and/or may provide status information to an external element. An external element may provide, via the NEF 340, information that facilitates the setting of parameters for establishment of a PDU session. The NEF 340 may determine which data and capabilities of the control plane are exposed to the external domain. The NEF 340 may provide secure exposure (e.g., by authenticating and/or authorizing an external entity) to exposed data or capabilities of the communication network 300. The NEF 340 may selectively control the exposure such that the internal architecture of the core network is hidden/obscured from the external domain.

The UDM 350 may provide data storage for other NFs. The UDM 350 may permit a consolidated view of network information. The consolidated view may be used to ensure that the most relevant information may be made available to different NFs from a single resource. The UDM 350 may store and/or retrieve information from a unified data repository (UDR). For example, the UDM 350 may obtain user subscription data relating to the wireless device 301 from the UDR.

The AUSF 360 may support mutual authentication of the wireless device 301 by the core network and authentication of the core network by the wireless device 301. The AUSF 360 may perform key agreement procedures and provide keying material that may be used to improve security.

The NSSF 370 may select/determine one or more network slices to be used by the wireless device 301. The NSSF 370 may select a slice based on slice selection information. For example, the NSSF 370 may receive single network slice selection assistance information (S-NSSAI) and map the S-NSSAI to a network slice instance identifier (NSI).

The CHF 380 may control billing-related tasks associated with wireless device 301. For example, the UPF 305 may report/send traffic usage information, associated with wireless device 301, to the SMF 314. The SMF 314 may collect usage data from the UPF 305 and one or more other UPFs. The usage data may indicate a quantity of data exchanged, a DN that the data is exchanged with, a network slice associated with the data, and/or any other information that may influence billing. The SMF 314 may share the collected usage data with the CHF 380. The CHF 380 may use the collected usage data to perform billing-related tasks associated with wireless device 301. The CHF 380 may, depending on the billing status of wireless device 301, instruct the SMF 314 to limit and/or influence/control access of the wireless device 301 and/or provide billing-related notifications to wireless device 301.

The NWDAF 390 may collect and/or analyze data from other NFs and/or offer data analysis services to other NFs. The NWDAF 390 may receive/collect, from the UPF 305, the AMF 312, and/or the SMF 314, data/information relating to a load level for a particular network slice instance. The NWDAF 390 may provide (e.g., based on the collected data) load level data to the PCF 320 and/or the NSSF 370, and/or may notify the PCF 320 and/or the NSSF 370 if a load level for a slice reaches and/or if a load level for a slice exceeds a load level threshold.

The AF 399 may be outside the core network, but may interact with the core network to provide information relating to the QoS requirements and/or traffic routing preferences associated with a particular application. The AF 399 may access the core network based on the exposure constraints imposed by the NEF 340. An operator of the core network may consider the AF 399 to be a trusted domain that may directly access the core network (and/or the communication network 300).

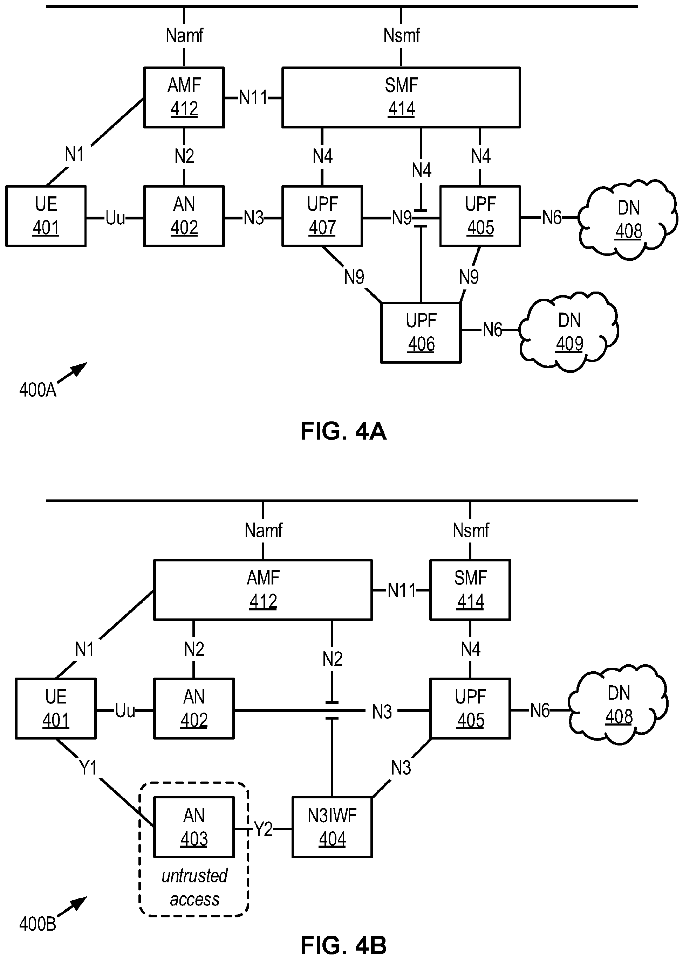

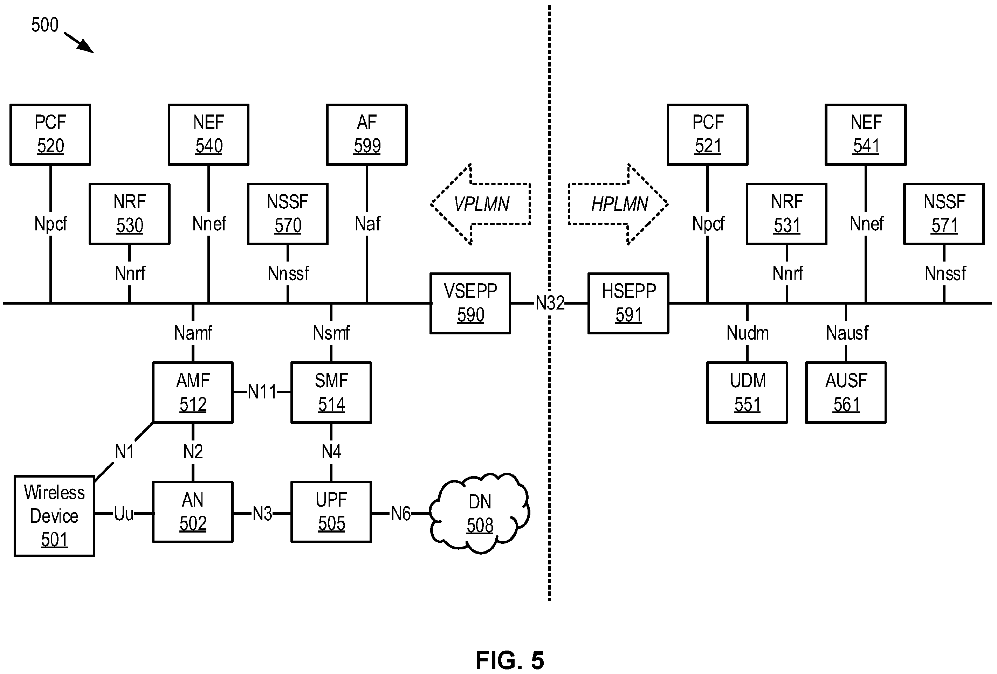

FIGS. 4A, 4B, and 5 show examples of core network architectures. The core network architectures shown in FIGS. 4A, 4B, and 5 may be analogous in some respects to the core network architecture 300 shown in FIG. 3. For brevity, some of the core network elements shown in FIG. 3 are not shown in FIGS. 4A, 4B, and 5 but may be included in one or more of these core network architectures. Many of the elements shown in FIGS. 4A, 4B, and 5 may be analogous in some respects to elements depicted in FIG. 3. For brevity, some of the details relating to their functions or operation are not shown but may be included in one or more of these core network architectures. Operation of one or more elements shown in FIGS. 4A, 4B, and 5 may be similar, or substantially similar, to corresponding elements shown in FIG. 3.

FIG. 4A shows an example of a core network architecture. The core network architecture 400A of FIG. 4A may comprise an arrangement of multiple UPFs. Core network architecture 400A may comprise one or more of: a wireless device 401, an AN 402, an AMF 412, and/or an SMF 414. The core network architecture 400A may comprise multiple UPFs (e.g., a UPF 405, a UPF 406, and a UPF 407) and multiple DNs (e.g., a DN 408 and a DN 409). Each of the multiple UPFs 405, 406, 407 may communicate with the SMF 414 via a corresponding N4 interface. The DNs 408, 409 may communicate with the UPFs 405, 406, respectively, via N6 interfaces. The multiple UPFs 405, 406, 407 may communicate with one another via N9 interfaces.

The UPFs 405, 406, 407 may perform traffic detection. The UPFs 405, 406, 407 may indicate, identify, and/or classify packets. Packet indication/identification may be performed based on PDRs provided by the SMF 414. PDRs may comprise packet detection information. Packet detection information may comprise one or more of: a source interface, a wireless device IP address, core network (CN) tunnel information (e.g., a CN address of an N3/N9 tunnel corresponding to a PDU session), a network instance indicator/identifier, a QoS flow indicator/identifier (QFI), a filter set (e.g., an IP packet filter set and/or an ethernet packet filter set), and/or an application indicator/identifier.

PDRs may indicate one or more rules for handling the packet upon detection thereof. The one or more rules may comprise, for example, FARs, multi-access rules (MARs), usage reporting rules (URRs), QERs, and/or any other rule. For example, the PDR may comprise one or more FAR identifiers, MAR identifiers, URR identifiers, and/or QER identifiers. The identifiers may indicate the rules that are prescribed/to be used for the handling of a particular detected packet.

The UPF 405 may perform traffic forwarding in accordance with a FAR. For example, the FAR may indicate that a packet associated with a particular PDR is to be forwarded, duplicated, dropped, and/or buffered. The FAR may indicate a destination interface (e.g., "access" for downlink or "core" for uplink). The FAR may indicate a buffering action rule (BAR), for example, if a packet is to be buffered. The UPF 405 may perform data buffering of a certain quantity downlink packets, for example, if a PDU session is deactivated.

The UPF 405 may perform QoS enforcement in accordance with a QER. For example, the QER may indicate a guaranteed bitrate that is authorized and/or a maximum bitrate to be enforced for a packet associated with a particular PDR. The QER may indicate that a particular guaranteed and/or maximum bitrate may be for uplink packets and/or downlink packets. The UPF 405 may mark/indicate packets belonging to a particular QoS flow with a corresponding QFI. The marking may enable a recipient of the packet to determine a QoS of the packet (e.g., a QoS to be enforced for the packet).

The UPF 405 may provide/send usage reports to the SMF 414 in accordance with a URR. The URR may indicate one or more triggering conditions for generation and/or reporting of the usage report. The reporting may be based on immediate reporting, periodic reporting, a threshold for incoming uplink traffic, and/or any other suitable triggering condition. The URR may indicate a method for measuring usage of network resources (e.g., data volume, duration, and/or event).

The DNs 408, 409 may comprise public DNs (e.g., the Internet), private DNs (e.g., private, internal corporate-owned DNs), and/or intra-operator DNs. A DN (e.g., each DN) may provide an operator service and/or a third-party service. The service provided by a DN may be an Internet service, an IP multimedia subsystem (IMS), an augmented or virtual reality network, an edge computing or mobile edge computing (MEC) network, and/or any other service. A DN (e.g., each DN) may be indicated/identified using a data network name (DNN). The wireless device 401 may be configured to establish a first logical connection with the DN 408 (e.g., a first PDU session), a second logical connection with DN 409 (e.g., a second PDU session), or both simultaneously (e.g., the first PDU session and the second PDU sessions).

A PDU session (e.g., each PDU) session may be associated with at least one UPF configured to operate as a PDU session anchor (PSA, or anchor). The anchor may be a UPF that may provide an N6 interface with a DN.

The UPF 405 may be the anchor for the first PDU session between wireless device 401 and DN 408. The UPF 406 may be the anchor for the second PDU session between wireless device 401 and DN 409. The core network may use the anchor to provide service continuity of a particular PDU session (e.g., IP address continuity) as wireless device 401 moves from one access network to another. The wireless device 401 may establish a PDU session using a data path to the DN 408 and using an access network other than AN 402. The data path may use the UPF 405 acting as anchor. The wireless device 401 may (e.g., later) move into the coverage area of the AN 402. The SMF 414 may select a new UPF (e.g., the UPF 407) to bridge the gap between the newly-entered access network (e.g., the AN 402) and the anchor UPF (e.g., the UPF 405). The continuity of the PDU session may be preserved as any quantity/number of UPFs may be added and/or removed from the data path. A UPF added to a data path (e.g., as shown in FIG. 4A) may be described as an intermediate UPF and/or a cascaded UPF.

The UPF 406 may be the anchor for the second PDU session between wireless device 401 and the DN 409. The anchor for the first PDU session and the anchor for the second PDU sessions being associated with different UPFs (e.g., as shown in FIG. 4A) is merely exemplary. Multiple PDU sessions with a single DN may correspond to any quantity/number of anchors. A UPF at the branching point (e.g., the UPF 407 in FIG. 4) may operate as an uplink classifier (UL-CL), for example, if there are multiple UPFs. The UL-CL may divert uplink user plane traffic to different UPFs.

The SMF 414 may allocate, manage, and/or assign an IP address to the wireless device 401. The SMF 414 may allocate, manage, and/or assign an IP address to the wireless device 401, for example, based on establishment of a PDU session. The SMF 414 may maintain an internal pool of IP addresses to be assigned. The SMF 414 may (e.g., if necessary) assign an IP address provided by a dynamic host configuration protocol (DHCP) server or an authentication, authorization, and accounting (AAA) server. IP address management may be performed in accordance with a session and service continuity (SSC) mode. In SSC mode 1, an IP address of wireless device 401 may be maintained (and the same anchor UPF may be used) as the wireless device moves within the network. In SSC mode 2, the IP address of wireless device 401 may be changed as the wireless device 401 moves within the network. For example, the old IP address and an old anchor UPF may be abandoned and a new IP address and a new anchor UPF may be established, for example, as the wireless device 401 moves within the network. In SSC mode 3, it may be possible to maintain an old IP address (e.g., similar to SSC mode 1) temporarily while establishing a new IP address (e.g., similar to SSC mode 2). Applications that may be sensitive to IP address changes may operate in accordance with SSC mode 1.

UPF selection may be controlled by the SMF 414. The SMF 414 may select the UPF 405 as the anchor for the PDU session and/or the UPF 407 as an intermediate UPF, for example, based on establishment and/or modification of a PDU session between the wireless device 401 and DN 408. Criteria for UPF selection may comprise path efficiency and/or speed (e.g., a data rate) between the AN 402 and the DN 408. Reliability, load status, location, slice support and/or other capabilities of candidate UPFs may also be considered for UPF selection.

FIG. 4B shows an example of a core network architecture. The core network architecture 400B of FIG. 4B may accommodate untrusted access. The wireless device 401, as shown in FIG. 4B, may communicate with (e.g., connect to) the DN 408 via the AN 402 and the UPF 405. The AN 402 and the UPF 405 may constitute/comprise/provide trusted (e.g., 3GPP) access to the DN 408. The wireless device 401 may access the DN 408 using an untrusted access network. The untrusted access network may comprise the AN 403 and/or a non-3GPP interworking function (N3IWF) 404.

The AN 403 may be a wireless local area network (WLAN) (e.g., operating in accordance with the IEEE 802.11 standard). The wireless device 401 may communicate with (e.g., connect to) the AN 403 via an interface Y1. The connection may be in a manner that is prescribed for the AN 403. The connection to the AN 403 may or may not involve authentication. The wireless device 401 may obtain/receive an IP address from the AN 403. The wireless device 401 may determine to connect to the core network 400B using untrusted access. The AN 403 may communicate with N3IWF 404 via a Y2 interface. After selecting untrusted access, the wireless device 401 may provide N3IWF 404 with sufficient information to select an AMF. The selected AMF may be, for example, the same AMF that is used by wireless device 401 for 3GPP access (AMF 412 in the present example). The N3IWF 404 may communicate with AMF 412 via an N2 interface. The UPF 405 may be selected and N3IWF 404 may communicate with UPF 405 via an N3 interface. The UPF 405 may be a PDU session anchor (PSA). The UPF 405 may remain the anchor for a PDU session, for example, even as wireless device 401 shifts between trusted access and untrusted access.

FIG. 5 shows an example of a core network architecture. The core network architecture 500 of FIG. 5 may correspond to an example in which a wireless device 501 may be roaming. The wireless device 501 (e.g., in a roaming scenario) may be a subscriber of a first PLMN (e.g., a home PLMN, or HPLMN) but may attach to a second PLMN (e.g., a visited PLMN, or VPLMN). The core network architecture 500 may comprise a wireless device 501, an AN 502, a UPF 505, and/or a DN 508. The AN 502 and the UPF 505 may be associated with a VPLMN. The VPLMN may manage the AN 502 and/or the UPF 505 using core network elements associated with the VPLMN. The core network elements associated with the VPLMN may comprise an AMF 512, an SMF 514, a PCF 520, an NRF 530, an NEF 540, and/or an NSSF 570. An AF 599 may be adj acent the core network of the VPLMN.

The wireless device 501 may not be a subscriber of the VPLMN. The AMF 512 may authorize the wireless device 501 to access the network (e.g., the VPLMN), for example, based on roaming restrictions that may apply to wireless device 501. The core network of the VPLMN may interact with core network elements of an HPLMN of the wireless device 501 (e.g., a PCF 521, an NRF 531, an NEF 541, a UDM 551, and/or an AUSF 561), for example, to obtain network services provided by the VPLMN. The VPLMN and the HPLMN may communicate using an N32 interface connecting respective security edge protection proxies (SEPPs). The respective SEPPs may be a VSEPP 590 and/or an HSEPP 591.

The VSEPP 590 and/or the HSEPP 591 may communicate via an N32 interface (e.g., for defined purposes). The VSEPP 590 and the HSEPP 591 may communicate via an N32 interface while concealing information about each PLMN from the other. The SEPPs may apply roaming policies, for example, based on communications via the N32 interface. The PCF 520 and/or the PCF 521 may communicate via the SEPPs to exchange policy-related signaling. The NRF 530 and/or the NRF 531 may communicate via the SEPPs to enable service discovery of NFs in the respective PLMNs. The VPLMN and HPLMN may independently maintain the NEF 540 and the NEF 541. The NSSF 570 and/or the NSSF 571 may communicate via the SEPPs to coordinate slice selection for the wireless device 501. The HPLMN may handle all authentication and subscription related signaling. The VPLMN may authenticate the wireless device 501 and/or obtain subscription data of the wireless device 501 by accessing, via the SEPPs, the UDM 551 and the AUSF 561 of the HPLMN, for example, if the wireless device 501 registers and/or requests service via the VPLMN.

The core network architecture 500 may be referred to as a local breakout configuration, in which the wireless device 501 may access the DN 508 using one or more UPFs of the VPLMN (i.e., the UPF 505). Other configurations are possible. For example, in a home-routed configuration (not shown in FIG. 5), the wireless device 501 may access a DN using one or more UPFs of the HPLMN. In the home-routed configuration, an N9 interface may run parallel to the N32 interface, crossing the frontier between the VPLMN and the HPLMN, to carry user plane data. One or more SMFs of the respective PLMNs may communicate, via the N32 interface, to coordinate session management for the wireless device 501. The SMFs may control their respective UPFs on either side of the frontier.

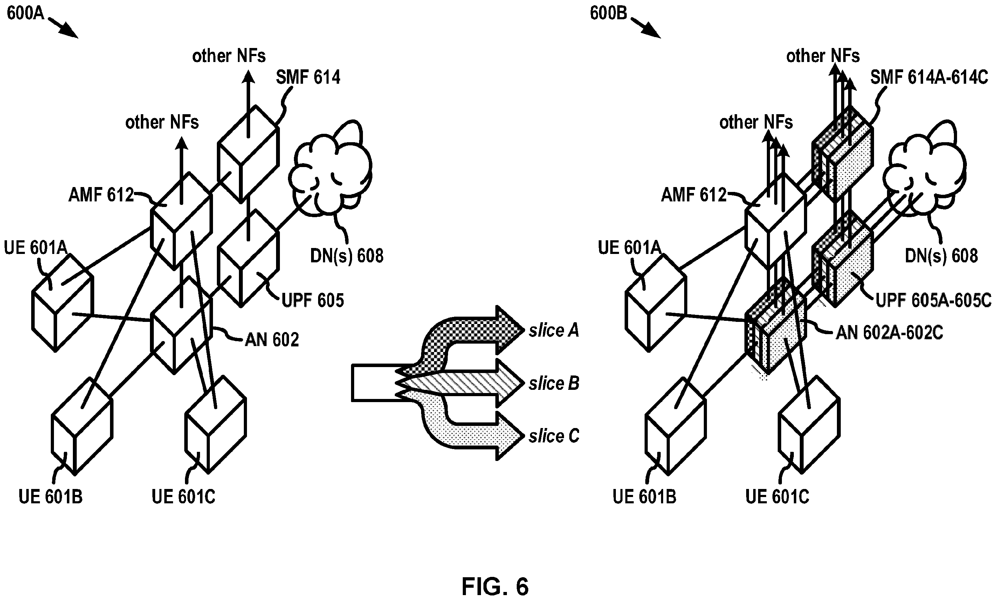

FIG. 6 shows an example of network slicing. Network slicing may refer to division of shared infrastructure (e.g., physical infrastructure) into distinct logical networks. These distinct logical networks may be independently controlled, isolated from one another, and/or associated with dedicated resources.

Network architecture 600A shows an un-sliced physical network corresponding to a single logical network. The network architecture 600A may comprise a user plane. Wireless devices 601A, 601B, 601C (collectively, wireless devices 601) may have a physical and/or a logical connection to a DN 608 via an AN 602 and a UPF 605 of the user plane. The network architecture 600A may comprise a control plane. An AMF 612 and an SMF 614, in the control plane, may control various aspects of the user plane.

The network architecture 600A may have a specific set of characteristics (e.g., relating to maximum bit rate, reliability, latency, bandwidth usage, power consumption, etc.). The set of characteristics may be affected by the nature/properties of the network elements (e.g., processing power, availability of free memory, proximity to other network elements, etc.) and/or the management thereof (e.g., optimization to maximize bit rate or reliability, reduce latency, reduce power, reduce bandwidth usage, etc.). The characteristics of the network architecture 600A may change over time. For example, by upgrading equipment and/or by modifying procedures to target a particular characteristic may change the characteristics of the network architecture 600A. At any given time, the network architecture 600A may have a single set of characteristics that may or may not be optimized for a particular use case. For example, wireless devices 601A, 601B, 601C may have different requirements, with the network architecture 600A being optimized for one of the three wireless devices.

The network architecture 600B shows an example of a sliced physical network divided into multiple logical networks. The physical network may be divided into three logical networks (e.g., slice A, slice B, and slice C). For example, the wireless device 601A may be served by AN 602A, UPF 605A, AMF 612, and SMF 614A. Wireless device 601B may be served by AN 602B, UPF 605B, AMF 612, and SMF 614B. Wireless device 601C may be served by AN 602C, UPF 605C, AMF 612, and SMF 614C. Although the respective wireless devices 601 may communicate with different network elements from a logical perspective, the network elements may be deployed by a network operator using the same physical network elements.

One or more network slices (e.g., each network slice) may be configured for providing network services with different sets of characteristics. For example, slice A may correspond to an enhanced mobile broadband (eMBB) service. Mobile broadband may refer to internet access by mobile users, commonly associated with smartphones. Slice B may correspond to ultra-reliable low-latency communication (URLLC), which may focus on reliability and speed. Relative to eMBB, URLLC may improve the feasibility of use cases such as autonomous driving and telesurgery. Slice C may correspond to massive machine type communication (mMTC), which may focus on low-power services delivered to a large number of users. For example, slice C may be optimized for a dense network of battery-powered sensors that may provide small amounts of data at regular intervals. Many mMTC use cases may be prohibitively expensive if they operated using an eMBB or URLLC network.

A network slice serving a wireless device 601 may be updated (e.g., to provide better and/or more suitable services), for example, if service requirements for one of the wireless devices 601 changes. The set of network characteristics corresponding to eMBB, URLLC, and mMTC may be varied, such that differentiated species of eMBB, URLLC, and mMTC may be provided for a wireless device. Network operators may provide entirely new services, for example, based on/in response to customer demand.

A wireless device 601 (e.g., each of the wireless devices 601) may have/use (or be associated with) a corresponding network slice. A single slice may serve any number/quantity of wireless devices and a single wireless device may operate using any number/quantity of slices. The AN 602, the UPF 605 and the SMF 614 may be separated into three separate slices, and the AMF 612 may be unsliced. A network operator may deploy any architecture that selectively utilizes any mix of sliced and unsliced network elements, with different network elements divided into different numbers/quantities of slices. Although FIG. 6 shows three core network functions (e.g., the UPF 605, the AMF 612, the SMF 614), other core network functions (e.g., such as other core network functions not shown) may be sliced. A PLMN that supports multiple network slices may maintain a separate network repository function (NFR) for each slice, which may enable other NFs to discover network services associated with that slice.

Network slice selection may be controlled by an AMF, or alternatively, by a separate network slice selection function (NSSF). For example, a network operator may define/configure and implement distinct network slice instances (NSIs). Each NSI may be associated with single network slice selection assistance information (S-NSSAI). The S-NSSAI may comprise a particular slice/service type (SST) indicator (e.g., indicating eMBB, URLLC, mMTC, etc.). For example, a particular tracking area may be associated with one or more configured S-NSSAIs. wireless devices may identify one or more requested and/or subscribed S-NSSAIs (e.g., during registration). The network may indicate to the wireless device one or more allowed and/or rejected S-NSSAIs.

The S-NSSAI may comprise a slice differentiator (SD) to distinguish between different tenants of a particular slice and/or service type. For example, a tenant may be a customer (e.g., a vehicle manufacture, a service provider, etc.) of a network operator that obtains (e.g., purchases) guaranteed network resources and/or specific policies for servicing its subscribers. The network operator may configure different slices and/or slice types, and use the SD to determine which tenant is associated with a particular slice.

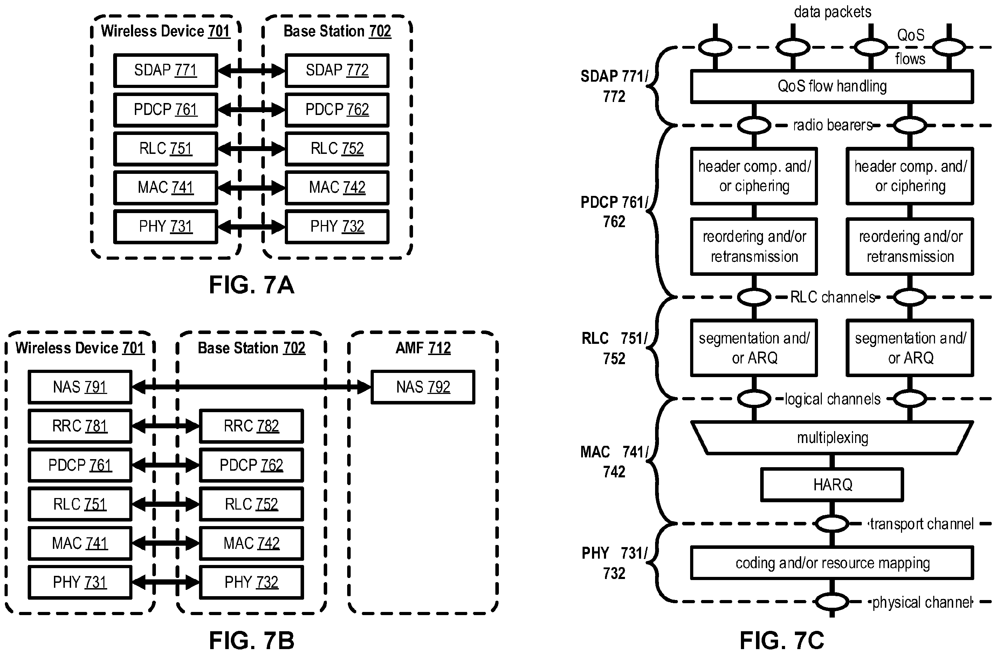

FIG. 7A shows an example UP protocol stack. FIG. 7B shows an example CP protocol stack. FIG. 7C shows example services provided between protocol layers of the UP protocol stack.

The layers may be associated with an open system interconnection (OSI) model of computer networking functionality. In the OSI model, layer 1 may correspond to the bottom layer, with higher layers on top of the bottom layer. Layer 1 may correspond to a PHY layer. PHY layer may correspond to physical infrastructure used for transfer of signals (e.g., cables, fiber optics, and/or radio frequency transceivers). Layer 1 (e.g., in NR protocols) may comprise a PHY layer. Layer 2 may correspond to a data link layer. Layer 2 may correspond to/be associated with packaging of data (into, e.g., data frames) for transfer, between nodes of the network (e.g., using the physical infrastructure of layer 1). Layer 2 (e.g., in NR protocols) may comprise a MAC layer, an RLC layer, a PDCP layer, and an SDAP layer.

Layer 3 may correspond to a network layer. Layer 3 may be associated with routing of the data which has been packaged in layer 2. Layer 3 may handle prioritization of data and traffic avoidance. Layer 3 (e.g., in NR protocols) may comprise an RRC layer and a NAS layer. Layers 4 through 7 may correspond to a transport layer, a session layer, a presentation layer, and an application layer. The application layer may interact with an end user to provide data associated with an application. An end user, implementing the application, may generate data associated with the application and initiate sending of that information to a targeted data network (e.g., the Internet, an application server, etc.). Starting at the application layer, each layer in the OSI model may manipulate and/or repackage the information and/or deliver it to a lower layer. At the lowest layer, the manipulated and/or repackaged information may be exchanged via physical infrastructure (e.g., electrically, optically, and/or electromagnetically). The information, approaching/received at the targeted data network, may be unpackaged and provided to higher layers, for example, until it reaches the application layer in a form that is usable by the targeted data network (e.g., the same form in which it was provided by the end user). The data network may perform this procedure, in reverse, for responding to the end user.

FIG. 7A shows an example UP protocol stack. The UP protocol stack may be an NR protocol stack for a Uu interface between a wireless device 701 and a base station 702. In layer 1 of the UP protocol stack, the wireless device 701 may implement a PHY layer (e.g., PHY 731) and the base station 702 may implement a PHY layer (e.g., PHY 732). In layer 2 of the UP protocol stack, the wireless device 701 may implement a MAC layer (e.g., MAC 741), an RLC layer (e.g., RLC 751), a PDCP layer (e.g., PDCP 761), and an SDAP layer (e.g., SDAP 771). The base station 702 may implement a MAC layer (e.g., MAC 742), an RLC layer (e.g., RLC 752), a PDCP layer (e.g., PDCP 762), and an SDAP layer (e.g., SDAP 772).

FIG. 7B shows a CP protocol stack. The CP protocol stack may be an NR protocol stack for the Uu interface between the wireless device 701 and the base station 702 and/or an N1 interface between the wireless device 701 and an AMF 712. In layer 1 of the CP protocol stack, the wireless device 701 may implement the PHY 731 and the base station 702 may implement the PHY 732. In layer 2 of the CP protocol stack, the wireless device 701 may implement the MAC 741, the RLC 751, the PDCP 761, an RRC layer (e.g., RRC 781), and a NAS layer (e.g., NAS 791). The base station 702 may implement the MAC 742, the RLC 752, the PDCP 762, and an RRC layer (e.g., RRC 782). The AMF 712 may implement a NAS layer (e.g., NAS 792).

The NAS (e.g., NAS 791 and NAS 792) may be concerned with/correspond to the non-access stratum. The non-access stratum may comprise communication between the wireless device 701 and the core network (e.g., the AMF 712). Lower layers may be concerned with/correspond to the access stratum. The access stratum may comprise communication between the wireless device 701 and the base station 702. Messages sent between the wireless device 701 and the core network may be referred to as NAS messages. A NAS message may be relayed by the base station 702 Content of the NAS message (e.g., information elements of the NAS message) may not be visible to the base station 702.

FIG. 7C shows an example of services provided between protocol layers (e.g., of the NR user plane protocol stack shown in FIG. 7A). The wireless device 701 may receive services through a PDU session. The PDU session may be a logical connection between the wireless device 701 and a DN. The wireless device 701 and the DN may exchange data packets associated with the PDU session. The PDU session may comprise one or more QoS flows. The SDAP 771 and/or the SDAP 772 may perform mapping and/or demapping between the one or more QoS flows of the PDU session and one or more radio bearers (e.g., data radio bearers). The mapping between the QoS flows and the data radio bearers may be determined in the SDAP 772 by the base station 702. The wireless device 701 may be notified of the mapping (e.g., based on control signaling and/or reflective mapping). The SDAP 772 of the base station 220 may mark downlink packets with a QFI and/or deliver the downlink packets to the wireless device 701 (e.g., for reflective mapping). The wireless device 701 may determine the mapping based on the QFI of the downlink packets.

The PDCP 761 and the PDCP 762 may perform header compression and/or decompression. Header compression may reduce the amount of data transmitted over the physical layer. The PDCP 761 and the PDCP 762 may perform ciphering and/or deciphering. Ciphering may reduce unauthorized decoding of data sent/transmitted over the physical layer (e.g., intercepted on an air interface), and/or may protect data integrity (e.g., to ensure control messages originate from intended sources). The PDCP 761 and/or the PDCP 762 may perform retransmissions of undelivered packets, in-sequence delivery and/or reordering of packets, duplication of packets, and/or identification and removal of duplicate packets. The PDCP 761 and/or the PDCP 762 may perform mapping between a split radio bearer and RLC channels, for example, in a dual connectivity scenario.

The RLC 751 and the RLC 752 may perform segmentation and retransmission through automatic repeat request (ARQ). The RLC 751 and the RLC 752 may perform removal of duplicate data units received from the MAC 741 and the MAC 742, respectively. The RLC 751 and the RLC 752 may provide RLC channels as a service to the PDCP 761 and the PDCP 762, respectively.

The MAC 741 and/or the MAC 742 may perform multiplexing and/or demultiplexing of logical channels. The MAC 741 and/or the MAC 742 may map logical channels to transport channels. The wireless device 701 may (e.g., in MAC 741) multiplex data units of one or more logical channels into a transport block. The wireless device 701 may send/transmit the transport block to the base station 702 using PHY 731. The base station 702 may receive the transport block using the PHY 732. The base station 702 may demultiplex data units of the transport blocks back into logical channels. The MAC 741 and/or the MAC 742 may perform error correction through hybrid automatic repeat request (HARQ), logical channel prioritization, and/or padding.

The PHY 731 and/or the PHY 732 may perform mapping of transport channels to physical channels. The PHY 731 and/or the PHY 732 may perform digital and analog signal processing functions (e.g., coding/decoding and modulation/demodulation) for sending and receiving information (e.g., transmission via an air interface). The PHY 731 and/or the PHY 732 may perform multi-antenna mapping.

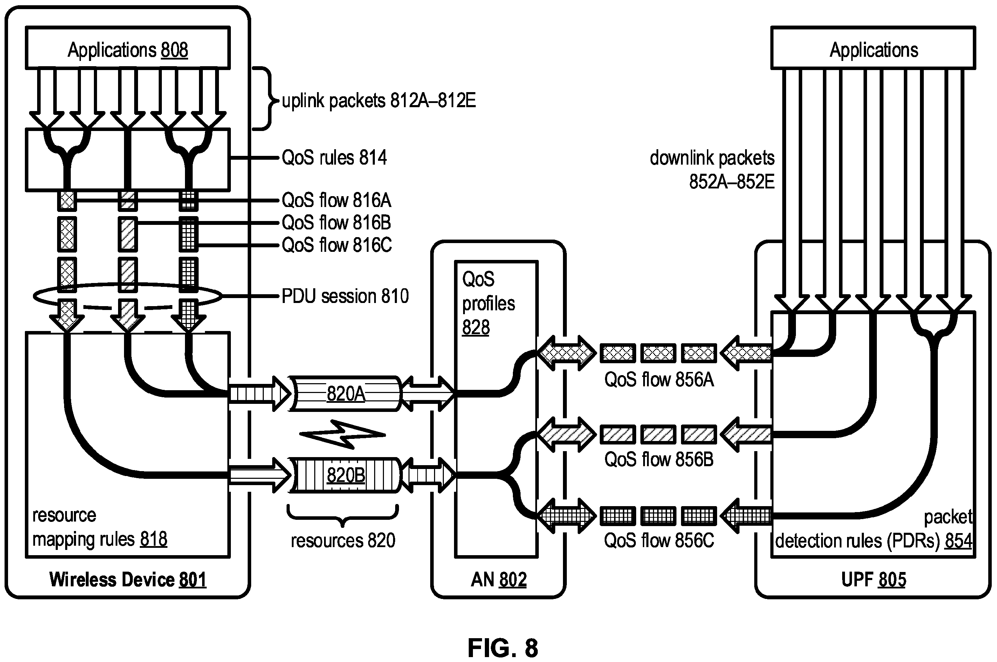

FIG. 8 shows an example of a QoS model. The QoS model may be for differentiated data exchange. The QoS model may comprise a wireless device 801, an AN 802, and/or a UPF 805. The QoS model may facilitate prioritization of PDUs (which may also be referred to as packets). Higher-priority packets may be exchanged faster and/or more reliably than lower-priority packets. The network may devote more resources to exchange of high QoS packets (e.g., high priority packets).

A PDU session 810 may be established between the wireless device 801 and the UPF 805. The PDU session 810 may be a logical connection enabling the wireless device 801 to exchange data with a particular data network (e.g., the Internet). The wireless device 801 may request establishment of the PDU session 810. The wireless device 801 may indicate/identify the targeted data network based on its data network name (DNN), for example, at the time that the PDU session 810 is established. The PDU session 810 may be managed by an SMF (not shown). The SMF may select the UPF 805 (and/or optionally, one or more other UPFs, not shown), for example, to facilitate exchange of data associated with the PDU session 810, between the wireless device 801 and the data network.

One or more applications 808 associated with wireless device 801 may generate uplink packets 812A-812E associated with the PDU session 810. The wireless device 801 may apply QoS rules 814 to the uplink packets 812A-812E in accordance with a QoS model. The QoS rules 814 may be associated with the PDU session 810. The QoS rules 814 may be determined by and/or provided to the wireless device 801, for example, based on establishment and/or modification of the PDU session 810 (e.g., if/when the PDU session 810 is established and/or modified). The wireless device 801, based on the QoS rules 814, may classify the uplink packets 812A-812E, map each of the uplink packets 812A-812E to a QoS flow, and/or mark the uplink packets 812A-812E with a QFI. A packet may be sent through the network. A packet may mix with other packets from other wireless devices (e.g., having potentially different priorities). The QFI may indicate how the packet should be handled in accordance with the QoS model. As shown in the example of FIG. 8, uplink packets 812A, 812B may be mapped to a QoS flow 816A, an uplink packet 812C may be mapped to a QoS flow 816B, and the remaining packets may be mapped to QoS flow 816C.

The QoS flows may be the finest granularity of QoS differentiation in a PDU session. In FIG. 8, three QoS flows 816A-816C are shown. A different quantity/number of QoS flows may be present/used (e.g., 1, 2, 4, 5, or any other number/quantity). One or more QoS flows may be associated with a guaranteed bit rate (e.g., guaranteed bit rate (GBR) QoS flows). One or more QoS flows may have bit rates that are not guaranteed (non-GBR QoS flows). QoS flows may be subject to per-wireless device and/or per-session aggregate bit rates. A QoS flow of the QoS flows may be a default QoS flow. QoS flows may have different priorities. For example, the QoS flow 816A may have a higher priority than the QoS flow 816B, which may have a higher priority than the QoS flow 816C. Different priorities may be reflected by different QoS flow characteristics. For example, QoS flows may be associated with flow bit rates. A particular QoS flow may be associated with a guaranteed flow bit rate (GFBR) and/or a maximum flow bit rate (MFBR). QoS flows may be associated with specific packet delay budgets (PDBs), packet error rates (PERs), and/or maximum packet loss rates. QoS flows may be subject to per-wireless device and/or per-session aggregate bit rates.

The wireless device 801 may apply resource mapping rules 818 to the QoS flows 816A-816C for operating within the QoS model. The air interface between wireless device 801 and/or the AN 802 may be associated with resources 820. The QoS flow 816A may be mapped to resource 820A, and the QoS flows 816B, 816C may be mapped to resource 820B. The resource mapping rules 818 may be provided by the AN 802. The resource mapping rules 818 may designate more resources for relatively high priority QoS flows for meeting QoS requirements. A high priority QoS flow (e.g., the QoS flow 816A) may, based on the resources, be more likely to obtain the high flow bit rate, low packet delay budget, and/or other satisfy other characteristics associated with QoS rules 814. The resources 820 may comprise radio bearers. The radio bearers (e.g., data radio bearers) may be established between the wireless device 801 and the AN 802. The radio bearers in 5G, between the wireless device 801 and the AN 802, may be distinct from bearers in LTE (e.g., evolved packet system (EPS) bearers between a wireless device and a packet data network gateway (PGW), S1 bearers between an eNB and a serving gateway (SGW), and/or an S5/S8 bearer between an SGW and a PGW).

A packet associated with a particular QoS flow may be received at the AN 802 via the resource 820A or the resource 820B. The AN 802 may separate packets into respective QoS flows 856A-856C based on QoS profiles 828. The QoS profiles 828 may be received from an SMF. A QoS profile (e.g., each QoS profile) may correspond to a QFI (e.g., the QFI marked on the uplink packets 812A-812E). A QoS profile (e.g., each QoS profile) may comprise QoS parameters. The QoS parameters may comprise/indicate one or both of 5G QoS identifier (5QI) and/or an allocation and retention priority (ARP). The QoS profile for non-GBR QoS flows may comprise/indicate other/additional QoS parameters (e.g., a reflective QoS attribute (RQA)). The QoS profile for GBR QoS flows may further comprise/indicate additional QoS parameters (e.g., a GFBR, an MFBR, and/or a maximum packet loss rate). The 5QI may be a standardized 5QI having one-to-one mapping to a standardized combination of 5G QoS characteristics. The 5QI may be a dynamically assigned 5QI for which the standardized 5QI values may not be defined. The 5QI may represent 5G QoS characteristics. The 5QI may comprise/indicate one or more of a resource type, a default priority level, a packet delay budget (PDB), a packet error rate (PER), a maximum data burst volume, and/or an averaging window. The resource type may indicate a non-GBR QoS flow, a GBR QoS flow, and/or a delay-critical GBR QoS flow. The averaging window may represent a duration over which the GFBR and/or MFBR may be calculated/determined. The ARP may be a priority level comprising pre-emption capability and a pre-emption vulnerability. The AN 802 may apply admission control for the QoS flows (e.g., if resource limitations are determined), for example, based on the ARP.

The AN 802 may select/determine one or more N3 tunnels for transmission of the QoS flows 856A-856C. The packets (e.g., the uplink packets 812A-812E) may be sent to the UPF 805 (e.g., towards a DN) via the selected one or more N3 tunnels. The UPF 805 may verify that the QFIs of the uplink packets 812A-812E are aligned with the QoS rules 814 provided to the wireless device 801. The UPF 805 may measure, count packets, and/or provide packet metrics to one or more other entities in the network (e.g., a NF such as a PCF).

FIG. 8 shows a process that may comprise downlink transmissions. One or more applications may generate downlink packets 852A-852E. The UPF 805 may receive the downlink packets 852A-852E from one or more DNs and/or one or more other UPFs. The UPF 805 may apply PDRs 854 to downlink the packets 852A-852E, for example, based on the QoS model. The UPF 805 may map, based on the PDRs 854, the packets 852A-852E into QoS flows. As shown in FIG. 8, downlink packets 852A, 852B may be mapped to a QoS flow 856A, downlink packet 852C may be mapped to a QoS flow 856B, and/or the remaining packets may be mapped to a QoS flow 856C.

The QoS flows 856A-856C may be sent to the AN 802. The AN 802 may apply resource mapping rules to the QoS flows 856A-856C. The QoS flow 856A may be mapped to the resource 820A. The QoS flows 856B, 856C may be mapped to the resource 820B. The resource mapping rules may designate more resources to high priority QoS flows in order to meet QoS requirements.

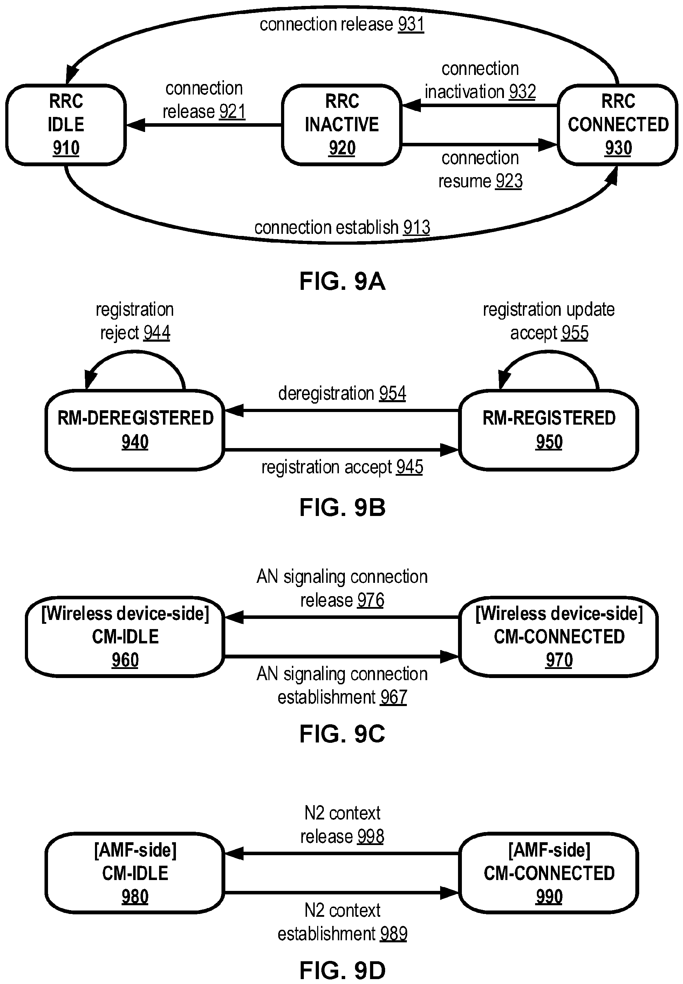

FIGS. 9A- 9D show example states and state transitions of a wireless device. The wireless device, at any given time, may have (or be associated with) one or more of an RRC state, a registration management (RM) state, and/or a connection management (CM) state.

FIG. 9A shows RRC state transitions of a wireless device. The wireless device may be in one of three RRC states: RRC idle 910 (e.g., RRC_IDLE), RRC inactive 920 (e.g., RRC INACTIVE), or RRC connected 930 (e.g., RRC_CONNECTED). The wireless device may implement/apply/use different RAN-related control plane procedures, for example, depending on the RRC state of the wireless device. Other elements of the network (e.g., a base station) may track RRC state(s) of one or more wireless devices and/or implement/apply/use RAN-related control plane procedures appropriate to an RRC state of each wireless device.

The wireless device may exchange data with a network (e.g., a base station) in an RRC connected state (e.g., RRC connected 930). The parameters necessary for exchange of data may be established and/or may be known to both the wireless device and the network. The parameters may be referred to (and/or may be included in) an RRC context of the wireless device (e.g., which may be referred to as a wireless device context). The parameters may comprise, for example, one or more access stratum (AS) contexts, one or more radio link configuration parameters, bearer configuration information (e.g., relating to a data radio bearer, signaling radio bearer, logical channel, QoS flow, and/or PDU session), security information, and/or PHY layer, MAC layer, RLC layer, PDCP layer, and/or SDAP layer configuration information. The base station with which the wireless device may be connected may store the RRC context of the wireless device.

Mobility of the wireless device, in the RRC connected state, may be managed by the access network. The wireless device may manage mobility, for example, if the wireless device is in an RRC idle state (e.g., the RRC idle 910) and/or an RRC inactive state (e.g., the RRC inactive 920). The wireless device may manage mobility, for example, by measuring signal levels (e.g., reference signal levels) of signals from a serving cell and neighboring cells, and/or by reporting measurements to the base station currently serving the wireless device. The network may initiate handover, for example, based on the reported measurements. The RRC state may transition from the RRC connected state to the RRC idle state via a connection release procedure 930. The RRC state may transition from the RRC connected state to the RRC inactive state via a connection inactivation procedure 932.

An RRC context may not be established for the wireless device. For example, this may be during the RRC idle state. During the RRC idle state (e.g., the RRC idle 910), an RRC context may not be established for the wireless device. During the RRC idle state (e.g., the RRC idle 910), the wireless device may not have an RRC connection with the base station. During the RRC idle state (e.g., the RRC idle 910), the wireless device may be in a sleep state for the majority of the time (e.g., to conserve battery power). The wireless device may wake up periodically (e.g., each discontinuous reception (DRX) cycle) to monitor for paging messages (e.g., paging messages set from the AN). Mobility of the wireless device may be managed by the wireless device via a procedure of a cell reselection. The RRC state may transition from the RRC idle state (e.g., the RRC idle 910) to the RRC connected state (e.g., the RRC connected 930) via a connection establishment procedure 913, which may involve a random-access procedure.

A previously established RRC context may be maintained for the wireless device. For example, this may be during the RRC inactive state. During the RRC inactive state (e.g., the RRC inactive 920), the RRC context previously established may be maintained in the wireless device and the base station. The maintenance of the RRC context may enable/allow a fast transition to the RRC connected state (e.g., the RRC connected 930) with reduced signaling overhead as compared to the transition from the RRC idle state (e.g., the RRC idle 910) to the RRC connected state (e.g., the RRC connected 930). The RRC state may transition from the RRC inactive state (e.g., the RRC inactive 920) to the RRC connected state (e.g., the RRC connected 930) via a connection resume procedure 923. The RRC state may transition from the RRC inactive state (e.g., the RRC inactive 920) to the RRC idle state (e.g., the RRC idle 910) via a connection release procedure 921 that may be the same as or similar to connection release procedure 931.

An RRC state may be associated with a mobility management mechanism. During the RRC idle state (e.g., RRC idle 910) and the RRC inactive state (e.g., the RRC inactive 920), mobility may be managed/controlled by the wireless device via a cell reselection. The purpose of mobility management during the RRC idle state (e.g., the RRC idle 910) or during the RRC inactive state (e.g., the RRC inactive 920) may be to enable/allow the network to be able to notify the wireless device of an event via a paging message without having to broadcast the paging message over the entire mobile communications network. The mobility management mechanism used during the RRC idle state (e.g., the RRC idle 910) and/or during the RRC inactive state (e.g., the RRC inactive 920) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms may be based on different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN may send to the wireless device a list of TAIs associated with a wireless device registration area (e.g., a wireless device registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 920), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 920).

FIG. 9B shows example registration management (RM) state transitions of a wireless device. The states may be RM deregistered 940, (e.g., an RM deregistered state, RM-DEREGISTERED) and RM registered 950 (e.g., an RM deregistered state, RM-REGISTERED).

The wireless device (e.g., in RM deregistered state) may not be registered with the network, and/or the wireless device may not be reachable by the network. The wireless device may perform an initial registration, for example, in order to be reachable by the network. The wireless device may register with an AMF of the network. The wireless device may remain in the RM deregistered state, for example, if registration is rejected (e.g., via a registration reject procedure 944). The wireless device may transition to the RM registered state, for example, if the registration is accepted (e.g., via a registration accept procedure 945). The network may store, keep, and/or maintain a wireless device context for the wireless device, for example, if (e.g., while) the wireless device is in RM registered state. The wireless device context corresponding to network registration (e.g., maintained by the core network) may be different from the RRC context corresponding to RRC state (e.g., maintained by an access network or an element thereof, such as a base station). The wireless device context may comprise a wireless device indicator/identifier and a record of information relating to the wireless device. The information relating to the wireless device may comprise one or more of wireless device capability information, policy information for access and mobility management of the wireless device, lists of allowed or established slices or PDU sessions, and/or a registration area of the wireless device (i.e., a list of tracking areas covering the geographical area where the wireless device is likely to be found).

The network may store the wireless device context of the wireless device, for example, if (e.g., while) the wireless device is in an RM registered state. The network may (e.g., if necessary) use the wireless device context to reach/communicate the wireless device, for example, if (e.g., while) the wireless device is in an RM registered state. Some services may not be provided by the network unless the wireless device is registered. The wireless device may update its wireless device context while remaining in the RM registered state (e.g., via a registration update accept procedure 955). The wireless device may provide a tracking area indicator/identifier to the network, for example, if the wireless device leaves one tracking area and enters another tracking area. The network may deregister the wireless device, or the wireless device may deregister itself (e.g., via a deregistration procedure 954). The network may automatically deregister the wireless device if the wireless device is inactive for a certain amount of time. The wireless device may transition to the RM deregistered state, for example, based on the deregistration.

FIG. 9C shows example connection management (CM) state transitions of a wireless device. The example CM state transitions of the wireless device as shown in FIG. 9C are from a perspective of the wireless device. The wireless device may be in CM idle 960 (e.g., CM idle state, CM-IDLE) or CM connected 970 (e.g., CM connected state, CM-CONNECTED).

The wireless device may not have a NAS signaling connection with the network, for example, if the wireless device is in a CM idle state. The wireless device may not communicate with core network functions, for example, based on not having the NAS signaling connection. The wireless device may transition to a CM connected state by establishing an AN signaling connection (e.g., via an AN signaling connection establishment procedure 967). The transition may be initiated by sending an initial NAS message. The initial NAS message may be a registration request (e.g., if the wireless device is in an RM deregistered state) or a service request (e.g., if the wireless device is in an RM registered state). The wireless device may initiate the AN signaling connection establishment by sending a service request and/or the network may send a page (e.g., triggering the wireless device to send the service request), for example, If the wireless device is in an RM registered state.

The wireless device may communicate with core network functions using NAS signaling, for example, if the wireless device is in a CM connected state. For example, the wireless device may exchange (e.g., send and/or receive) NAS signaling with an AMF for registration management purposes, service request procedures, and/or authentication procedures. The wireless device may exchange NAS signaling, with an SMF, to establish and/or modify a PDU session. The network may disconnect the wireless device, or the wireless device may disconnect itself (e.g., via an AN signaling connection release procedure 976). The wireless device may transition to the CM idle state, for example, if the wireless device transitions to the RM deregistered state. The network may deactivate a user plane connection of a PDU session of the wireless device, for example, based on the wireless device transitioning to the CM idle state.

FIG. 9D shows example CM state transitions of the wireless device. The example CM state transitions of the wireless device as shown in FIG. 9D may be from a network perspective (e.g., an AMF perspective). The CM state of the wireless device, as tracked by the AMF, may be CM idle 980 (e.g., CM idle state, CM-IDLE) or CM connected 990 (e.g., CM connected state, CM-CONNECTED). The AMF many establish an N2 context of the wireless device (e.g., via an N2 context establishment procedure 989), for example, based on the wireless device transitioning from CM idle 980 to CM connected 990. The AMF may release the N2 context of the wireless device (e.g., via an N2 context release 998 procedure), for example, based on the wireless device transitioning from CM connected 990 to CM idle 980.

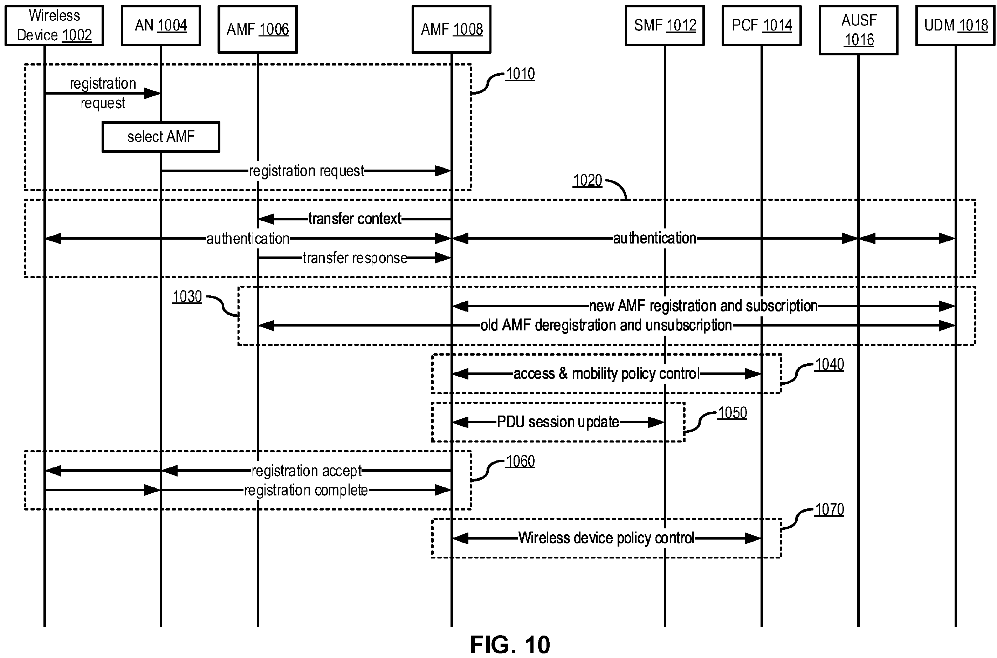

FIG. 10, FIG. 11, and FIG. 12 show example procedures for registering, service request, and PDU session establishment of a wireless device. FIG. 10 shows an example registration procedure for a wireless device. The wireless device 1002 may transition from an RM deregistered state (e.g., RM deregistered 940) to an RM registered state (e.g., RM registered 950), for example, based on the registration procedure.

Registration may be initiated by a wireless device 1002 for obtaining authorization to receive services, enabling mobility tracking, enabling reachability, and/or any other purpose. The wireless device 1002 may perform an initial registration (e.g., as a first step toward connecting to the network). For example, the wireless device 1002 may perform an initial registration based on the wireless device being powered on (e.g., if the wireless device is powered on), based on an airplane mode being turned off (e.g., if an airplane mode is turned off), and/or based on one or more other conditions and/or events. Registration may be performed periodically which may keep the network informed of the wireless device's presence (e.g., while the wireless device 1002 is in a CM idle state). Registration may be performed based on (e.g., in response to) a change in wireless device capability and/or registration area. Deregistration (not shown in FIG. 10) may be performed to stop network access.

At step 1010, the wireless device 1002 may send/transmit a registration request to an AN 1004. For example, the wireless device 1002 may have moved from a coverage area of a previous AMF (e.g., AMF 1006) into a coverage area of a new AMF (e.g., AMF 1008). The registration request may be/comprise a NAS message. The registration request may comprise a wireless device identifier. The AN 1004 may determine/select an AMF for registration of the wireless device. The AN 1004 may select a default AMF, or may determine/select an AMF that is already mapped to the wireless device 1002 (e.g., a previous AMF). The NAS registration request may comprise a network slice identifier. The AN 1004 may determine/select an AMF based on the requested slice. The AN 1004 may send the registration request to the selected AMF, for example, based on determination of the selected AMF. The selected AMF (e.g., AMF 1008) may receive the registration request.

At step 1020, the AMF that receives the registration request (e.g., AMF 1008) may perform a context transfer. The context may be a wireless device context (e.g., an RRC context for the wireless device). The AMF 1008 may send, to the AMF 1006, a message (e.g., an Namf_Communication_UEContextTransfer message) requesting a context of the wireless device. The message may comprise the wireless device indicator/identifier. The AMF 1006 may send, to the AMF 1008, a message (e.g., an Namf_Communication_UEContextTransfer message) that comprises the requested wireless device context. The AMF 1008 may coordinate authentication of the wireless device 1002, for example, based on receiving the wireless device context. The AMF 1008 may send, to the AMF 1006 and based on completion of authentication, a message (e.g., an Namf_Communication_UEContextTransfer Response message) indicating that the wireless device context transfer is complete.

The authentication may involve participation of one or more of the wireless device 1002, an AUSF 1016, a UDM 1018 and/or a UDR (not shown). The AMF 1008 may request that the AUSF 1016 authenticate the wireless device 1002. The AUSF may execute authentication of the wireless device 1002 (e.g., based on the request). The AUSF 1016 may get authentication data from the UDM 1018. The AUSF 1016 may send, to the AMF 1008, a subscription permanent identifier (SUPI), for example, based on the authentication being successful. The AUSF 1016 may provide an intermediate key to the AMF 1008. The intermediate key may be used to derive an access-specific security key for the wireless device 1002. The access-specific security key may enable the AMF 1008 to perform security context management (SCM). The AUSF 1016 may obtain subscription data from the UDM 1018. The subscription data may be based on information obtained from the UDM 1018 (and/or the UDR). The subscription data may comprise subscription identifiers/indicators, security credentials, access and mobility related subscription data, and/or session related data.

At step 1030, the AMF 1008 may register and/or subscribe to the UDM 1018. The AMF 1008 may perform registration using a wireless device context management service of the UDM 1018 (e.g., Nudm_UECM). The AMF 1008 may obtain subscription information of the wireless device 1002 using a subscriber data management service of the UDM 1018 (e.g., Nudm_SDM). The AMF 1008 may further request that the UDM 1018 notify/send a notification to the AMF 1008 if the subscription information of the wireless device 1002 changes. The AMF 1006 may deregister and unsubscribe, for example, based on the AMF 1008 registering and/or subscribing. The AMF 1006 may no longer need to perform mobility management of the wireless device 1006, for example, based on (e.g., after) deregistering.

At step 1040, the AMF 1008 may retrieve access and mobility (AM) policies from the PCF 1014. The AMF 1008 may provide subscription data of the wireless device 1002 to the PCF 1014. The PCF 1014 may determine access and mobility policies for the wireless device 1002, for example, based on the subscription data, network operator data, current network conditions, and/or other suitable information. For example, the owner/user of a first wireless device may purchase a higher level of service than the owner/user of a second wireless device. The PCF 1014 may provide the rules associated with the different levels of service. The network may apply different policies which facilitate different levels of service, for example, based on the subscription data of the respective wireless devices.

Access and mobility policies may relate to (e.g., may be based on and/or comprise) service area restrictions, radio access technology (RAT) frequency selection priority (RFSP), authorization and prioritization of access type (e.g., LTE versus NR), and/or selection of non-3GPP access (e.g., access network discovery and selection policy (ANDSP)). The service area restrictions may comprise list(s) of tracking areas where the wireless device is allowed to be served (and/or forbidden from being served). The access and mobility policies may comprise a wireless device (e.g., UE) route selection policy (URSP) that may influence routing to an established PDU session and/or a new PDU session. Different policies may be obtained and/or be enforced based on subscription data of the wireless device, location of the wireless device (e.g., location of the AN and/or AMF), and/or other suitable factors.

At step 1050, the AMF 1008 may update a context of a PDU session. The AMF 1008 may coordinate/communicate with an SMF (e.g., SMF 1012) to activate a user plane connection associated with an existing PDU session, for example, if the wireless device has/is associated with the existing PDU session. The SMF 1012 may update and/or release a session management context of the PDU session (e.g., Nsmf_PDUSession_UpdateSMContext, Nsmf_PDUSession_ReleaseSMContext).

At step 1060, the AMF 1008 may send a registration accept message to the AN 1004. The AN 1004 may forward the registration accept message to the wireless device 1002. The registration accept message may comprise a new wireless device indicator/identifier and/or a new configured slice indicator/identifier. The wireless device 1002 may send/transmit a registration complete message to the AN 1004. The AN 1004 may forward the registration complete message to the AMF 1008. The registration complete message may acknowledge receipt of the new wireless device identifier and/or new configured slice identifier.

At step 1070, the AMF 1008 may receive/obtain wireless device policy control information from the PCF 1014. The PCF 1014 may send/provide an ANDSP (e.g., to facilitate non-3GPP access). The PCF 1014 may provide URSP to facilitate mapping of particular data traffic to particular PDU session connectivity parameters. The URSP may indicate that data traffic associated with a particular application should be mapped to a particular SSC mode, network slice, PDU session type, and/or preferred access type (e.g., 3GPP or non-3GPP).

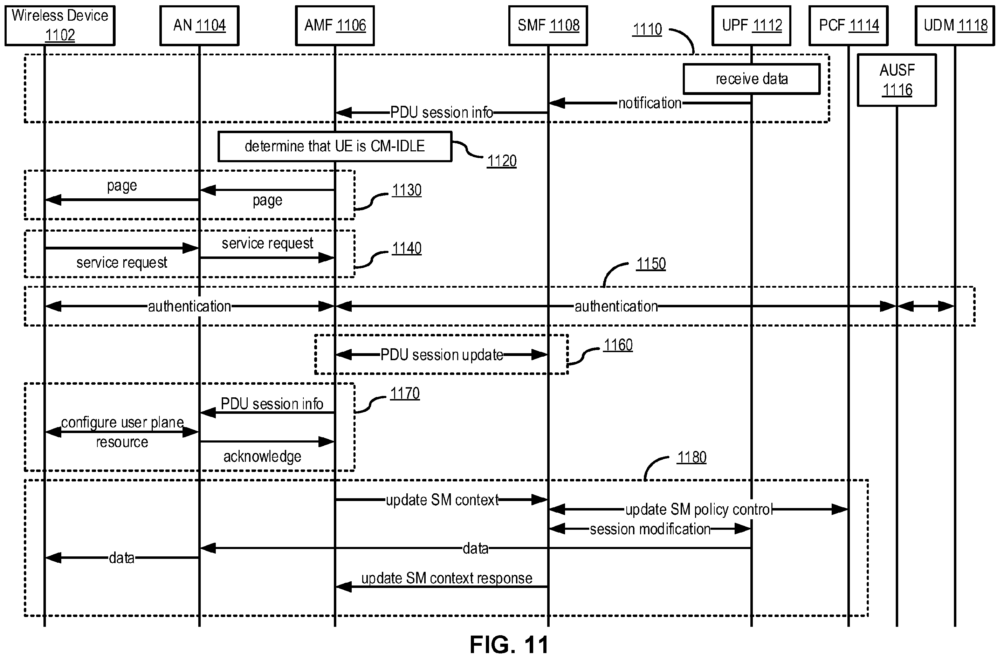

FIG. 11 shows an example service request procedure for a wireless device. The service request procedure may be a network-triggered service request procedure for a wireless device in a CM idle state. Other service request procedures (e.g., a wireless device-triggered service request procedure) may be performed in a manner similar to that described with reference to FIG. 11.

At step 1110, a UPF 1112 may receive data. The data may be downlink data for transmission to a wireless device (e.g., wireless device 1102). The data may be associated with an existing PDU session between the wireless device 1102 and a DN. The data may be received from a DN and/or another UPF. The UPF 1112 may buffer the received data. The UPF 1112 may notify an SMF (e.g., SMF 1108) of the received data, for example, based on (e.g., in response to) receiving the data. The identity of the SMF to be notified may be determined based on the received data. The notification may be an N4 session report. The notification may indicate that the UPF 1112 has received data associated with the wireless device 1102 and/or a particular PDU session associated with the wireless device 1102. The SMF 1108 may send PDU session information to an AMF 1106, for example, based on (e.g., in response to) receiving the notification. The PDU session information may be sent in an N1N2 message transfer for forwarding to an AN 1104. The PDU session information may comprise UPF tunnel endpoint information and/or QoS information.

At step 1120, the AMF 1106 may determine that the wireless device 1102 is in a CM idle state. The determining may be based on (e.g., in response to) the receiving of the PDU session information. The service request procedure may proceed to steps 1130 and 1140, for example, based on the determination that the wireless device is in CM idle state. The steps 1130 and 1140 may be skipped, and the service request procedure may proceed directly to 1150, for example, based on determining that the wireless device is not in CM idle state (e.g., the wireless device is in CM connected state).

At step 1130, the AMF 1106 may page the wireless device 1102. The paging at step 1130 may be performed based on the wireless device being in a CM idle state. The AMF 1106 may send a page to the AN 1104 to perform the paging. The page may be referred to as a paging or a paging message. The page may be an N2 request message. The AN 1104 may be one of a plurality of ANs in a RAN notification area of the wireless device 1102. The AN may send a page to the wireless device 1102. The wireless device 1102 may be in a coverage area of the AN 1104 and may receive the page.

At step 1140, the wireless device 1102 may request service. The wireless device 1102 may send/transmit a service request to the AMF 1106 via the AN 1104. The wireless device 1102 may request service at step 1140, for example, based on (e.g., in response to) receiving the paging at step 1130. The wireless device 1102 may receive the page and request service based on the service request procedure being a network-triggered service request procedure. The wireless device 1102 may commence a wireless device-triggered service request procedure in some scenarios (e.g., if uplink data becomes available at the wireless device). The wireless device-triggered service request procedure may commence starting at step 1140 (e.g., one or more of steps 1110 and 1120 may be skipped).

At step 1150, the network may authenticate the wireless device 1102. Authentication may require participation of the wireless device 1102, an AUSF 1116, and/or a UDM 1118 (e.g., as described herein). The authentication at step 1150 may be skipped, for example, in one or more scenarios (e.g., if the wireless device 1102 has recently been authenticated).

At step 1160, the AMF 1106 and the SMF 1108 may perform a PDU session update. The PDU session update may comprise the SMF 1108 providing, to the AMF 1106, with one or more UPF tunnel endpoint identifiers. The SMF 1108 may coordinate with one or more other SMFs and/or one or more other UPFs to set up a user plane.

At step 1170, the AMF 1106 may send PDU session information to the AN 1104. The PDU session information may be included in an N2 request message. The AN 1104 may configure a user plane resource for the wireless device 1102, for example, based on the PDU session information. The AN 1104 may perform an RRC reconfiguration of the wireless device 1102, for example, to configure the user plane resource. The AN 1104 may acknowledge the AMF 1106 (e.g., send an acknowledgment message to the AMF 1106 indicating) that the PDU session information has been received. The AN 1104 may notify the AMF 1106 (e.g., via the acknowledgment message) that the user plane resource has been configured, and/or provide information relating to the user plane resource configuration.

The wireless device 1102 may receive (e.g., at step 1170), for a wireless device-triggered service procedure, a NAS service accept message from the AMF 1106 via the AN 1104. The wireless device 1102 may send/transmit uplink data (e.g., the uplink data that caused the wireless device 1102 to trigger the service request procedure), for example, based on (e.g., after) configuring the user plane resource.

At step 1180, the AMF 1106 may update a session management (SM) context of the PDU session. The AMF 1106 may notify the SMF 1108 (and/or one or more other associated SMFs) that the user plane resource has been configured, and/or may provide information relating to the user plane resource configuration. The AMF 1106 may provide/send to the SMF 1108 (and/or one or more other associated SMFs) one or more AN tunnel endpoint identifiers/indicators of the AN 1104. The SMF 1108 may send an update SM context response message to the AMF 1106, for example, based on (e.g., after) the SM context update being complete.

The SMF 1108 may update a PCF (e.g., the PCF 1114) for purposes of policy control, for example, based on the update of the session management context. For example, the SMF 1108 may notify (e.g., via PCF 1114 update) the PCF 1114 of a new location of the wireless device 1102 if a location of the wireless device 1102 has changed. The SMF 1108 and the UPF 1112 may perform a session modification, for example, based on the update of the session management context. The session modification may be performed using N4 session modification messages. The UPF 1112 may send/transmit downlink data (e.g., the downlink data that caused the UPF 1112 to trigger the network-triggered service request procedure) to the wireless device, for example, based on the session modification being completed. The sending/transmitting of the downlink data may be based on the one or more AN tunnel endpoint identifiers of the AN 1104.

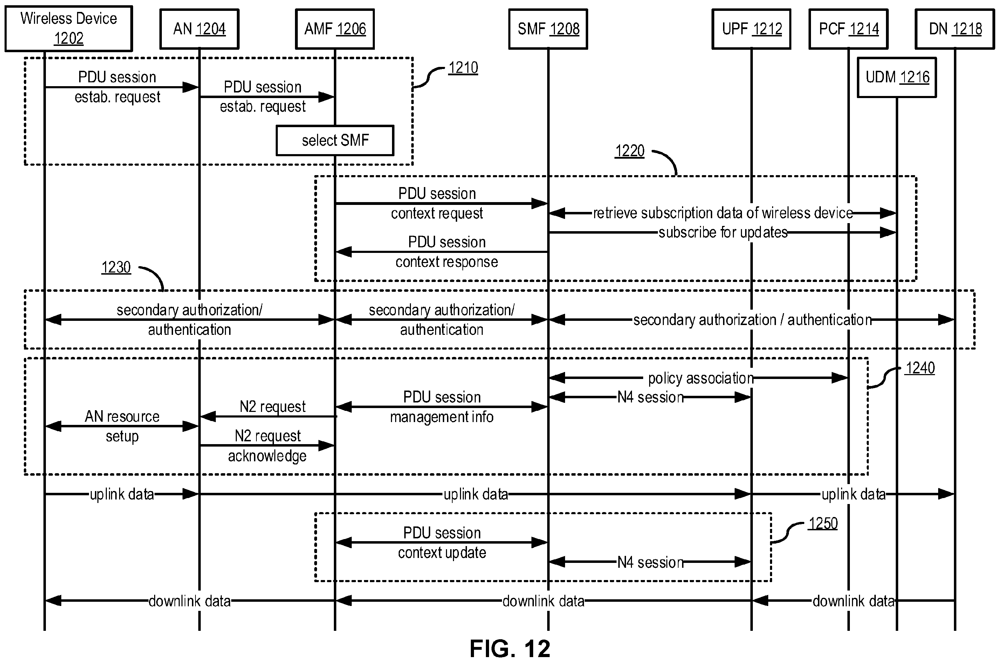

FIG. 12 shows an example PDU session establishment procedure for a wireless device. The wireless device 1202 may determine to send/transmit a PDU session establishment request (e.g., for the PDU session establishment procedure) to create a new PDU session, to hand over an existing PDU session to a 3GPP network, and/or for any other suitable reason.

At step 1210, the wireless device 1202 may initiate PDU session establishment. The wireless device 1202 may send/transmit a PDU session establishment request, via an AN 1204, to an AMF 1206. The PDU session establishment request may be a NAS message. The PDU session establishment request may indicate/comprise one or more of: a PDU session indicator/ID; a requested PDU session type (e.g., whether the requested PDU session is new or existing); a requested DN (e.g., a DNN); a requested network slice (S-NSSAI); a requested SSC mode; and/or any other suitable information. The PDU session ID may be generated by the wireless device 1202. The PDU session type may be, for example, an Internet Protocol (IP)-based type (e.g., IPv4, IPv6, or dual stack IPv4/IPv6), an Ethernet type, or an unstructured type.

The AMF 1206 may determine/select an SMF (e.g., SMF 1208) based on the PDU session establishment request. The requested PDU session may, in at least some scenarios, already be associated with a particular SMF. For example, the AMF 1206 may store a wireless device context of the wireless device 1202, and the wireless device context may indicate that the PDU session ID of the requested PDU session is already associated with the particular SMF. In some scenarios, the AMF 1206 may select the SMF based on a determination that the SMF is prepared to handle the requested PDU session. For example, the requested PDU session may be associated with a particular DNN and/or S-NSSAI. The SMF may be selected based on a determination that the SMF can manage a PDU session associated with the particular DNN and/or S-NSSAI.

At step 1220, the network may manage a context of the PDU session. The AMF 1206 may send a PDU session context request to the SMF 1208, for example, based on (e.g., after) selecting the SMF 1208 at 1210. The PDU session context request may comprise the PDU session establishment request received from the wireless device 1202 at step 1210. The PDU session context request may be a Nsmf_PDUSession_CreateSMContext Request and/or a Nsmf_PDUSession_UpdateSMContext Request. The PDU session context request may indicate/comprise indicators/identifiers of the wireless device 1202; the requested DN; and/or the requested network slice. The SMF 1208 may retrieve subscription data from a UDM 1216, for example, based on the PDU session context request. The subscription data may be session management subscription data of the wireless device 1202. The SMF 1208 may subscribe for updates to the subscription data. The PCF 1208 may send, to the SMF 1208, new information if the subscription data of the wireless device 1202 changes, for example, based on the SMF 1208 subscribing for the updates. The SMF 1208 may send/transmit a PDU session context response to the AMF 1206, for example, based on (e.g., after) receiving/obtaining the subscription data of the wireless device 1202. The PDU session context response may be a Nsmf_PDUSession_CreateSMContext Response and/or a Nsmf_PDUSession_UpdateSMContext Response. The PDU session context response may include/comprise a session management context ID.

At step 1230, secondary authorization/authentication may be performed, if necessary. The secondary authorization/authentication may involve the wireless device 1202, the AMF 1206, the SMF 1208, and/or the DN 1218. The SMF 1208 may access the DN 1218 via a server (e.g., a data network authentication, authorization, and accounting (DN AAA) server).

At step 1240, the network may set up a data path for uplink data associated with the PDU session. The SMF 1208 may select/determine a PCF (e.g., a PCF 1214). The SMF 1208 may establish a session management policy association. The PCF 1214 may provide an initial set of policy control and charging rules (PCC rules) for the PDU session, for example, based on the association. The PCF 1214 may (e.g., if targeting a particular PDU session) indicate, to the SMF 1208, one or more of a method for allocating an IP address to the PDU Session, a default charging method for the PDU session, an address of the corresponding charging entity, triggers for requesting new policies, and/or any other method, action, and/or information. The PCF 1214 may target a service data flow (SDF) comprising one or more PDU sessions. The PCF may (e.g., if targeting an SDF) indicate, to the SMF 1208, policies for one or more of applying QoS requirements, monitoring traffic (e.g., for charging purposes), steering traffic (e.g., by using one or more particular N6 interfaces), and/or any other purpose.

The SMF 1208 may determine and/or allocate an IP address for the PDU session. The SMF 1208 may select one or more UPFs (e.g., a single UPF 1212 as shown in FIG. 12) to handle the PDU session. The SMF 1208 may send an N4 session message to the selected UPF 1212. The N4 session message may be an N4 session establishment request and/or an N4 session modification request. The N4 session message may include/comprise packet detection, enforcement, and/or reporting rules associated with the PDU session. The UPF 1212 may acknowledge the N4 session message by sending an N4 session establishment response and/or an N4 session modification response.

The SMF 1208 may send PDU session management information to the AMF 1206. The PDU session management information may be/comprise a Namf_Communication_N1N2MessageTransfer message. The PDU session management information may include/comprise the PDU session ID. The PDU session management information may be/comprise a NAS message. The PDU session management information may include/comprise N1 session management information and/or N2 session management information. The N1 session management information may include/comprise a PDU session establishment accept message. The PDU session establishment accept message may include/comprise tunneling endpoint information of the UPF 1212 and QoS information associated with the PDU session.

The AMF 1206 may send an N2 request to the AN 1204. The N2 request may include/comprise the PDU session establishment accept message. The AN 1204 may determine AN resources for the wireless device 1202, for example, based on the N2 request. The AN resources may be used by the wireless device 1202 to establish the PDU session, via the AN 1204, with the DN 1218. The AN 1204 may determine resources to be used for the PDU session and indicate, to the wireless device 1202, the determined resources. The AN 1204 may send the PDU session establishment accept message to the wireless device 1202. The AN 1204 may perform an RRC reconfiguration of the wireless device 1202. The AN 1204 may send an N2 request acknowledge to the AMF 1206, for example, based on (e.g., after) the AN resources being set up. The N2 request acknowledge may include/comprise N2 session management information (e.g., the PDU session ID and tunneling endpoint information of the AN 1204).

The wireless device 1202 may (e.g., optionally) send uplink data associated with the PDU session, for example, based on the data path for uplink data being set up (e.g., at step 1240). The uplink data may be sent to a DN 1218, associated with the PDU session, via the AN 1204 and the UPF 1212.

At step 1250, the network may update the PDU session context. The AMF 1206 may send/transmit a PDU session context update request to the SMF 1208. The PDU session context update request may be a Nsmf_PDUSession_UpdateSMContext request. The PDU session context update request may comprise the N2 session management information received from the AN 1204. The SMF 1208 may acknowledge (e.g., send an acknowledgment message based on/in response to) the PDU session context update. The acknowledgement may be a Nsmf_PDUSession_UpdateSMContext response. The acknowledgement may comprise a subscription requesting that the SMF 1208 be notified of any wireless device mobility event. The SMF 1208 may send an N4 session message to the UPF 1212, for example, based on the PDU session context update request. The N4 session message may be an N4 session modification request. The N4 session message may comprise tunneling endpoint information of the AN 1204. The N4 session message may comprise forwarding rules associated with the PDU session. The UPF 1212 may acknowledge (e.g., reception of the N4 session message) by sending an N4 session modification response.

The UPF 1212 may relay downlink data associated with the PDU session, for example, based on (e.g., after) the UPF 1212 receiving the tunneling endpoint information of the AN 1204The downlink data may be received from a DN 1218, associated with the PDU session, via the AN 1204 and the UPF 1212.

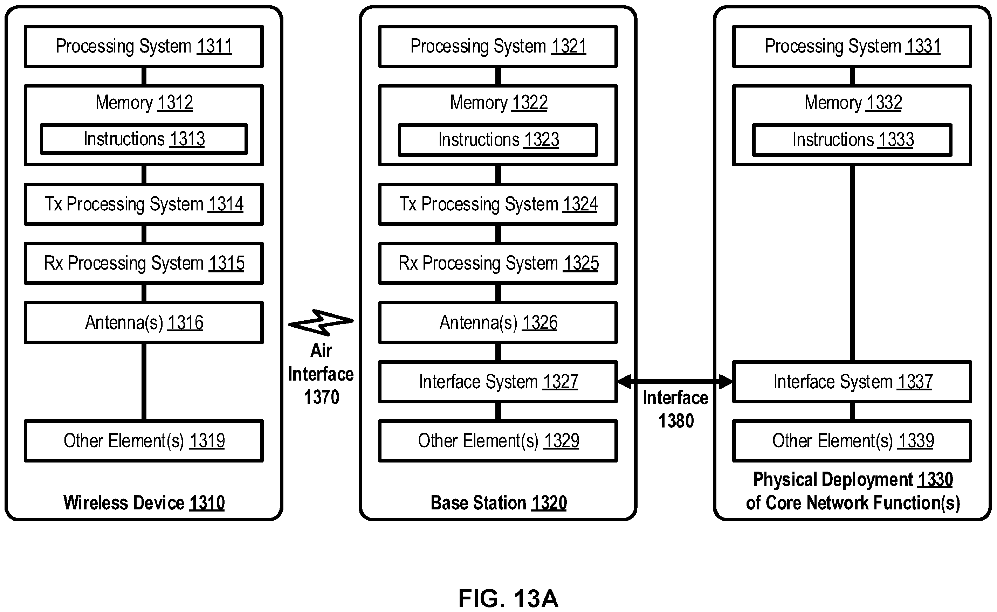

FIG. 13A shows example elements in a communications network. FIG. 13A shows a wireless device 1310, a base station 1320, and a physical deployment of one or more network functions 1330 (henceforth, "deployment 1330"). Any wireless device described herein may have similar components and/or may be implemented in a similar manner as the wireless device 1310. Any base station described herein (or any portion of the base station, depending on the architecture of the base station) may have similar components and/or may be implemented in a similar manner as the base station 1320. Any physical core network deployment described herein (or any portion of the deployment, depending on the architecture of the deployment) may have similar components and may be implemented in a similar manner as the deployment 1330.

The wireless device 1310 may communicate with base station 1320 over an air interface 1370. A communication direction from wireless device 1310 to base station 1320 over air interface 1370 may be known as uplink, and a communication direction from base station 1320 to wireless device 1310 over air interface 1370 may be known as downlink. Downlink transmissions may be separated from uplink transmissions using FDD, TDD, and/or some combination of duplexing techniques. FIG. 13A shows a single wireless device 1310 and a single base station 1320, but it may be understood that wireless device 1310 may communicate with any number/quantity of base stations and/or other access network components over air interface 1370, and it may be understood that that base station 1320 may communicate with any number/quantity of wireless devices over air interface 1370.

The wireless device 1310 may comprise a processing system 1311 and a memory 1312. The memory 1312 may comprise one or more computer-readable media (e.g., one or more non-transitory computer readable media). The memory 1312 may include/comprise/store instructions 1313. The processing system 1311 may process and/or execute the instructions 1313. Processing and/or execution of the instructions 1313 may cause the wireless device 1310 and/or the processing system 1311 to perform one or more functions or activities. The memory 1312 may include/comprise data (not shown). One of the functions or activities performed by the processing system 1311 may be to store data in the memory 1312 and/or retrieve previously-stored data from the memory 1312. For example, downlink data received from the base station 1320 may be stored in the memory 1312, and uplink data for transmission to the base station 1320 may be retrieved from the memory 1312. The wireless device 1310 may communicate with the base station 1320 using a transmission processing system 1314 and/or a reception processing system 1315. Alternatively, transmission processing system 1314 and reception processing system 1315 may be implemented as a single processing system, or both may be omitted and all processing in the wireless device 1310 may be performed by the processing system 1311. Although not shown in FIG. 13A, the transmission processing system 1314 and/or the reception processing system 1315 may be coupled to a dedicated memory that may be analogous to but separate from the memory 1312. The dedicated memory may comprise instructions that may be processed and/or executed to carry out one or more respective functionalities of the transmission processing system 1314 and/or the reception processing system 1315. The wireless device 1310 may comprise one or more antennas 1316 to access the air interface 1370.

The wireless device 1310 may comprise one or more other elements 1319. The one or more other elements 1319 may comprise software and/or hardware that may provide features and/or functionalities. For example, the one or more other elements 1319 may comprise one or more of a speaker, a microphone, a keypad, a display, a touchpad, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, a global positioning sensor (GPS) and/or the like). The wireless device 1310 may receive user input data from and/or provide user output data to the one or more one or more other elements 1319. The one or more other elements 1319 may comprise a power source. The wireless device 1310 may receive power from the power source and may be configured to distribute the power to the other components in wireless device 1310. The power source may comprise or connect to one or more sources of power (e.g., a battery, a solar cell, a fuel cell, a wall outlet, an electrical grid, and/or any combination thereof).

The wireless device 1310 may send/transmit uplink data to and/or receive downlink data from the base station 1320 via the air interface 1370. One or more of the processing system 1311, transmission processing system 1314, and/or reception system 1315 may implement open systems interconnection (OSI) functionality to perform transmission and/or reception. For example, the transmission processing system 1314 and/or the reception system 1315 may perform layer 1 OSI functionality, and the processing system 1311 may perform higher layer functionality. The wireless device 1310 may transmit and/or receive data over the air interface 1370 via/using one or more antennas 1316. For scenarios where the one or more antennas 1316 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise a processing system 1321 and a memory 1322. The memory 1322 may comprise one or more computer-readable media (e.g., one or more non-transitory computer readable media). The memory 1322 may comprise instructions 1323. The processing system 1321 may process and/or execute the instructions 1323. Processing and/or execution of the instructions 1323 may cause the base station 1320 and/or the processing system 1321 to perform one or more functions or activities. The memory 1322 may comprise data (not shown). One of the functions or activities performed by the processing system 1321 may be to store data in the memory 1322 and/or retrieve previously-stored data from the memory 1322. The base station 1320 may communicate with the wireless device 1310 using a transmission processing system 1324 and/or a reception processing system 1325. The transmission processing system 1324 and/or the reception processing system 1325 may be coupled to a dedicated memory (not shown) that may be analogous to but separate from memory 1322. The dedicated memory may comprise instructions that may be processed and/or executed to carry out one or more of their respective functionalities. The base station 1320 may comprise one or more antennas 1326 to access the air interface 1370.

The base station 1320 may send/transmit downlink data to and/or receive uplink data from wireless device 1310 via the air interface 1370. To perform the transmission and/or reception, one or more of the processing system 1321, the transmission processing system 1324, and/or the reception system 1325 may implement OSI functionality. For example, the transmission processing system 1324 and/or the reception system 1325 may perform layer 1 OSI functionality, and the processing system 1321 may perform higher layer functionality. The base station 1320 may transmit and/or receive data via the air interface 1370 using one or more antennas 1326. For scenarios where the one or more antennas 1326 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise an interface system 1327. The interface system 1327 may communicate with one or more base stations and/or one or more elements of the core network via an interface 1380. The interface 1380 may be wired and/or wireless. The interface system 1327 may comprise one or more components suitable for communicating via the interface 1380. As shown in FIG. 13A, the interface 1380 may connect the base station 1320 to a single deployment 1330 (e.g., as shown in FIG. 13A), but it may be understood that wireless device 1310 may communicate with any number/quantity of base stations and/or CN deployments via the interface 1380, and it may be understood that that deployment 1330 may communicate with any number/quantity of base stations and/or other CN deployments via the interface 1380. The base station 1320 may comprise one or more other elements 1329 analogous to one or more of the one or more other elements 1319.

The deployment 1330 may comprise any quantity/number of portions of any quantity /number of instances of one or more NFs. The deployment 1330 may comprise a processing system 1331 and a memory 1332. The memory 1332 may comprise one or more computer-readable media (e.g., one or more non-transitory computer readable media). The memory 1332 may comprise instructions 1333. The processing system 1331 may process and/or execute instructions 1333. Processing and/or execution of the instructions 1333 may cause the deployment 1330 and/or the processing system 1331 to perform one or more functions or activities. The memory 1332 may comprise data (not shown). One of the functions or activities performed by processing system 1331 may be to store data in the memory 1332 and/or retrieve previously-stored data from the memory 1332. The deployment 1330 may access the interface 1380 using an interface system 1337. The deployment 1330 may comprise one or more other elements 1339 analogous to one or more of the one or more other elements 1319.

One or more of the systems 1311, 1314, 1315, 1321, 1324, 1325, and/or 1331 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. One or more of the systems 1311, 1314, 1315, 1321, 1324, 1325, and/or 1331 may perform signal coding/processing, data processing, power control, input/output processing, and/or any other functionality that may enable wireless device 1310, base station 1320, and/or deployment 1330 to operate in a mobile communications system.

The wireless device 1310, the base station 1320, and/or the deployment 1330 may implement timers and/or counters. A timer/counter may start and/or restart at an initial value. The timer/counter may run based on the starting. Running of the timer/counter may be associated with an occurrence. The value of the timer/counter may change (e.g., increment or decrement). The occurrence may be an exogenous event (e.g., a reception of a signal, a measurement of a condition, etc.), an endogenous event (e.g., a transmission of a signal, a calculation, a comparison, a performance of an action or a decision to so perform, etc.), and/or any combination thereof. The occurrence may be the passage of a particular amount of time. A timer may be described and/or implemented as a counter that counts the passage of a particular unit of time. A timer/counter may run in a direction of a final value until it reaches the final value. The reaching of the final value may be referred to as expiration of the timer/counter. The final value may be referred to as a threshold. A timer/counter may be paused (e.g., a present value of the timer/counter may be held, maintained, and/or carried over), for example, even after an occurrence of one or more occurrences that would otherwise cause the value of the timer/counter to change. The timer/counter may be un-paused or continued (e.g., the value that was held, maintained, and/or carried over may begin changing again), for example, after an occurrence of the one or more occurrence occur. A timer/counter may be set and/or reset. As used herein, setting may comprise resetting. The value of the timer/counter may be set to the initial value, for example, if the timer/counter sets and/or resets. A timer/counter may be started and/or restarted. Starting may comprise restarting. The value of the timer/counter may be set to the initial value and the timer/counter may begin to run (e.g., increment or decrement), for example, if the timer/counter restarts.

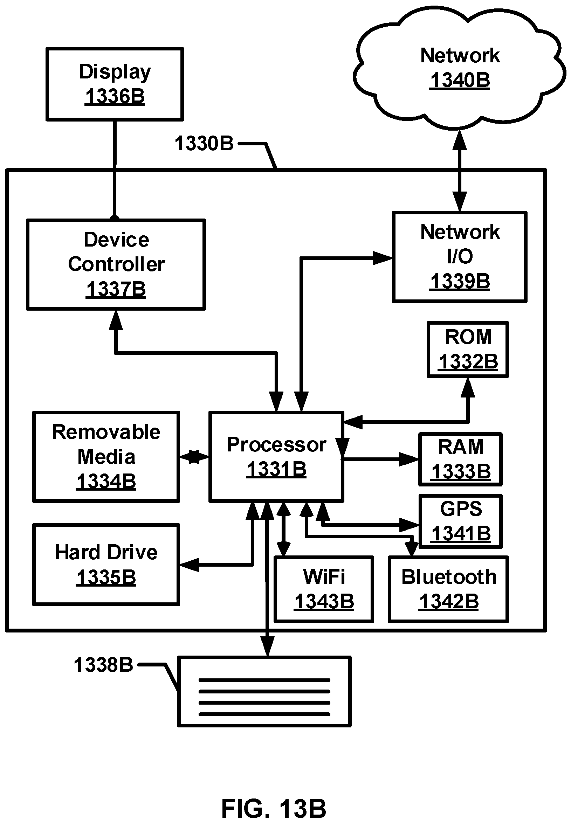

FIG. 13B shows example elements of a computing device that may be used to implement any of the various devices described herein, including, for example, a base station 152A, 152B, 302, 402, 403, 502 602, 602A, 602B, 602C, 702, 802, 1004, 1104, 1204, 1816, and/or 1818, a wireless device 101, 151, 301, 401, 501, 601A, 601B, 601C, 701, 801, 1002, 1102, 1202, 1310, 1502, 1512, 1602, 1702, 1802, 1902, 2010, 2102, 2202, 2302, 2402, 2502, 2802, 2902, 3002, 3102, 3202, 3302, 3402, 3502, and/or 3602,, or any other base station, wireless device, node, NF (e.g., AMF, SMF, UPF, PCF, etc.), UDM, OAM, UDM/OAM, network device, or computing device described herein. The computing device 1330B may include one or more processors 1331B, which may execute instructions stored in the random-access memory (RAM) 1333B, the removable media 1334B (such as a Universal Serial Bus (USB) drive, compact disk (CD) or digital versatile disk (DVD), or floppy disk drive), or any other desired storage medium. Instructions may also be stored in an attached (or internal) hard drive 1335B. The computing device 1330B may also include a security processor (not shown), which may execute instructions of one or more computer programs to monitor the processes executing on the processor 1331B and any process that requests access to any hardware and/or software components of the computing device 1330B (e.g., ROM 1332B, RAM 1333B, the removable media 1334B, the hard drive 1335B, the device controller 1337B, a network interface 1339B, a GPS 1341B, a Bluetooth interface 1342B, a WiFi interface 1343B, etc.). The computing device 1330B may include one or more output devices, such as the display 1336B (e.g., a screen, a display device, a monitor, a television, etc.), and may include one or more output device controllers 1337B, such as a video processor. There may also be one or more user input devices 1338B, such as a remote control, keyboard, mouse, touch screen, microphone, etc. The computing device 1330B may also include one or more network interfaces, such as a network interface 1339B, which may be a wired interface, a wireless interface, or a combination of the two. The network interface 1339B may provide an interface for the computing device 1330B to communicate with a network 1340B (e.g., a RAN, or any other network). The network interface 1339B may include a modem (e.g., a cable modem), and the external network 1340B may include communication links, an external network, an in-home network, a provider's wireless, coaxial, fiber, or hybrid fiber/coaxial distribution system (e.g., a DOCSIS network), or any other desired network. Additionally, the computing device 1330B may include a location-detecting device, such as a global positioning system (GPS) microprocessor 1341B, which may be configured to receive and process global positioning signals and determine, with possible assistance from an external server and antenna, a geographic position of the computing device 1330B.

The example in FIG. 13B may be a hardware configuration, although the components shown may be implemented as software as well. Modifications may be made to add, remove, combine, divide, etc. components of the computing device 1330B as desired. Additionally, the components may be implemented using basic computing devices and components, and the same components (e.g., processor 1331B, ROM storage 1332B, display 1336B, etc.) may be used to implement any of the other computing devices and components described herein. For example, the various components described herein may be implemented using computing devices having components such as a processor executing computer-executable instructions stored on a computer-readable medium, as shown in FIG. 13B. Some or all of the entities described herein may be software based, and may co-exist in a common physical platform (e.g., a requesting entity may be a separate software process and program from a dependent entity, both of which may be executed as software on a common computing device).

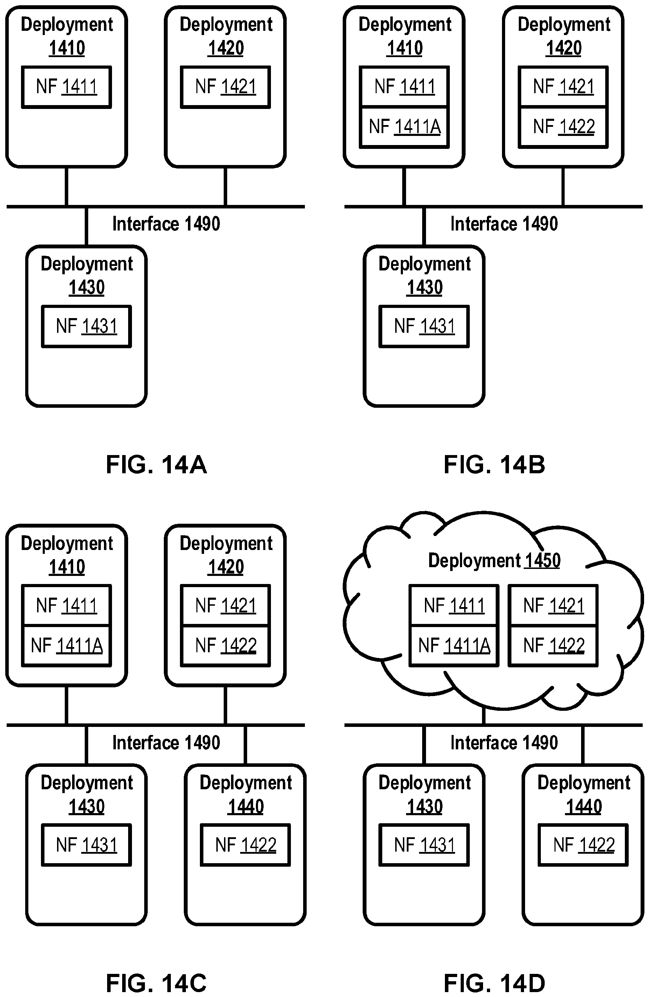

FIGS. 14A, 14B, 14C, and 14D show various example arrangements of physical core network deployments. Each of the arrangements may comprise one or more network functions and/or portions thereof. The core network deployments may comprise a deployment 1410, a deployment 1420, a deployment 1430, a deployment 1440, and/or a deployment 1450. Any of the deployments (e.g., each deployment) may be analogous to the deployment 1330 as shown in FIG. 13A. Any of the deployments (e.g., each deployment) may comprise a processing system for performing one or more functions and/or activities, memory for storing data and/or instructions, and/or an interface system for communicating with other network elements (e.g., other core network deployments). Any of the deployments (e.g., each deployment) may comprise one or more NFs. An NF may refer to a particular set of functionalities and/or one or more physical elements configured to perform those functionalities (e.g., a processing system and memory comprising instructions that, when executed by the processing system, cause the processing system to perform the functionalities). As described herein, a network function performing X, Y, and Z, may comprise the one or more physical elements configured to perform X, Y, and Z (e.g., irrespective of configuration and/or location of the deployment of the one or more physical elements), where X, Y, and Z, each may refer to one or more operations. An NF may comprise one or more of a network node, network element, and/or network device.

Different types of NF may be present in a deployment. Each type of NF may be associated with a different set of one or more functionalities. A plurality of different NFs may be flexibly deployed at different locations (e.g., in different physical core network deployments) or in a same location (e.g., co-located in a same deployment). A single NF may be flexibly deployed at different locations (e.g., implemented using different physical core network deployments) or in a same location. Physical core network deployments may also implement one or more base stations, application functions (AFs), data networks (DNs), and/or any portions thereof. NFs may be implemented in many ways, including as network elements on dedicated or shared hardware, as software instances running on dedicated or shared hardware, and/or as virtualized functions instantiated on a platform (e.g., a cloud-based platform).

FIG. 14A shows an example arrangement of core network deployments. Any of the core network deployments (e.g., each of the core network deployments) may comprise one network function. A deployment 1410 may comprise an NF 1411, a deployment 1420 may comprise an NF 1421, and a deployment 1430 may comprise an NF 1431. The deployments 1410, 1420, 1430 may communicate via an interface 1490. The deployments 1410, 1420, 1430 may have different physical locations with different signal propagation delays relative to other network elements. The diversity of physical locations of deployments 1410, 1420, 1430 may enable provision of services to a wide area with improved speed, coverage, security, and/or efficiency.

FIG. 14B shows an example arrangement where a single deployment may comprise more than one NF. Multiple NFs may be deployed in deployments 1410, 1420. Deployments 1410, 1420 may implement a software-defined network (SDN) and/or a network function virtualization (NFV).

Deployment 1410 may comprise an additional network function, NF 1411A. The NFs 1411, 1411A may comprise multiple instances of the same NF type, co-located at a same physical location within the same deployment 1410. The NFs 1411, 1411A may be implemented independently from one another (e.g., isolated and/or independently controlled). For example, the NFs 1411, 1411A may be associated with different network slices. A processing system and memory associated with the deployment 1410 may perform all of the functionalities associated with the NF 1411 in addition to all of the functionalities associated with the NF 1411A. NFs 1411, 1411A may be associated with different PLMNs, but deployment 1410, which implements NFs 1411, 1411A, may be owned and/or operated by a single entity.

Deployment 1420 may comprise a NF 1421 and an additional NF 1422. The NFs 1421, 1422 may be different NF types. Similar to NFs 1411, 1411A, the NFs 1421, 1422 may be co-located within the same deployment 1420, but may be separately implemented. For example, a first PLMN may own and/or operate deployment 1420 comprising NFs 1421, 1422. As another example, the first PLMN may implement the NF 1421 and a second PLMN may obtain, from the first PLMN (e.g., rent, lease, procure, etc.), at least a portion of the capabilities of deployment 1420 (e.g., processing power, data storage, etc.) in order to implement NF 1422. As yet another example, the deployment may be owned and/or operated by one or more third parties, and the first PLMN and/or second PLMN may procure respective portions of the capabilities of the deployment 1420. Networks may operate with greater speed, coverage, security, and/or efficiency, for example, if multiple NFs are provided at a single deployment.

FIG. 14C shows an example arrangement of core network deployments in which a single instance of an NF may be implemented using a plurality of different deployments. For example, a single instance of NF 1422 may be implemented at deployments 1420, 1440. The functionality provided by NF 1422 may be implemented as a bundle or sequence of subservices. Any subservice (e.g., each subservice) may be implemented independently, for example, at a different deployment. Any subservice (e.g., each subservice) may be implemented in a different physical location. By distributing implementation of subservices of a single NF across different physical locations, the mobile communications network may operate with greater speed, coverage, security, and/or efficiency.

FIG. 14D shows an example arrangement of core network deployments in which one or more network functions may be implemented using a data processing service. As shown in FIG. 14D, NFs 1411, 1411A, 1421, 1422 may be included in a deployment 1450 that may be implemented as a data processing service. The deployment 1450 may comprise a cloud network and/or data center. The deployment 1450 may be owned and/or operated by a PLMN or by a non-PLMN third party. The NFs 1411, 1411A, 1421, 1422 that are implemented using the deployment 1450 may belong to the same PLMN or to different PLMNs. The PLMN(s) may obtain (e.g., rent, lease, procure, etc.) at least a portion of the capabilities of the deployment 1450 (e.g., processing power, data storage, etc.). By providing one or more NFs using a data processing service, the mobile communications network may operate with greater speed, coverage, security, and/or efficiency.

As shown in the FIGS. 14A-14D, different network elements (e.g., NFs) may be located in different physical deployments, or co-located in a single physical deployment. Sending and receiving of messages among different network elements, as described herein, is not limited to inter-deployment transmission or intra-deployment transmission, unless explicitly indicated.

A deployment may be a black box that may be preconfigured with one or more NFs and preconfigured to communicate, in a prescribed manner, with other black box deployments (e.g., via the interface 1490). Additionally or alternatively, a deployment may be configured to operate in accordance with open-source instructions (e.g., software) designed to implement NFs and communicate with other deployments in a transparent manner. The deployment may operate in accordance with open RAN (O-RAN) standards.

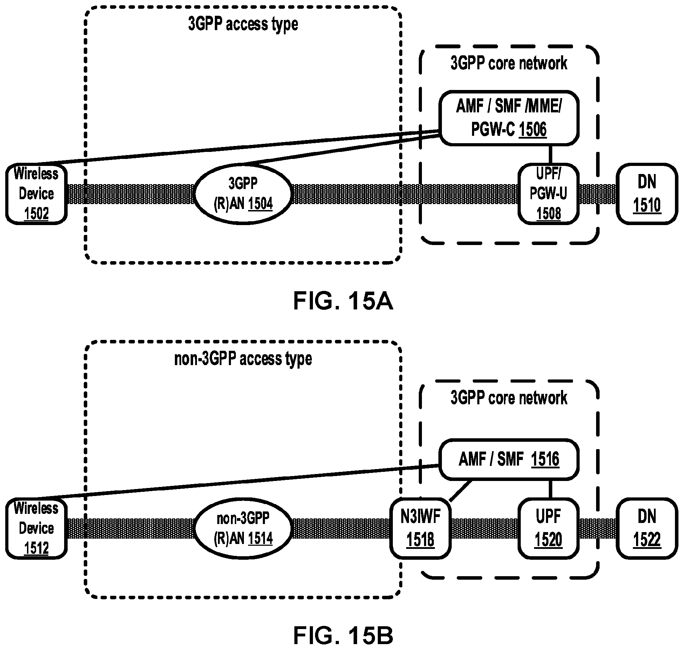

FIG. 15A and FIG. 15B show a wireless device (e.g., UE) may access a 3rd Generation Partnership Project (3GPP) system (e.g., network) via (e.g., using) one or more access types. For example, the one or more access types may comprise at least one of a 3GPP access type, a non-3GPP (N3GPP) access type, and/or a combination thereof.

FIG. 15A shows a wireless device 1502 (e.g., UE) may access a network via a 3GPP access type (e.g., 3GPP access). For example, the access to the network via the 3GPP access type may be an access to the network via one or more 3GPP RANs 1504. The one or more 3GPP RANs may comprise at least one of a global system for mobile communication (GSM), enhanced data-rates for global evolution (EDGE) radio access network (GERAN), a universal terrestrial radio access network (UTRAN), an evolved UTRAN (E-UTRAN), a next generation radio access network (NG-RAN), and/or a combination thereof. An operator of the network may trust a wireless device (e.g., UE)'s access to the network via the 3GPP access type, because the one or more 3GPP RANs are managed and/or deployed by the operator.

FIG. 15B shows a wireless device 1512 (e.g., UE) may access the network via the N3GPP access (e.g., N3GPP access type). For example, the access to the network via the N3GPP access type may be an access to the network via one or more N3GPP RANs 1514 (or N3GPP AN). For example, the one or more N3GPP RANs may comprise at least one of a trusted WiFi, an untrusted WiFi, a wireline broadband, a WiMAX, and/or a combination thereof. The operator of the network may not trust the access to the network via the N3GPP access type because the one or more N3GPP RANs may not be managed and/or deployed by the operator. The WiFi equipment (e.g., router) may not be installed by the operator. To prevent unauthorized access of the wireless device (e.g., UE) via the one or more N3GPP RANs and/or to securely protect data/signaling, a non-3GPP interworking function (N3IWF 1518) may be employed for the N3GPP access type. For example, the N3IWF 1518 may be employed for interworking between the one or more non-3GPP RANs and a 5G core network.

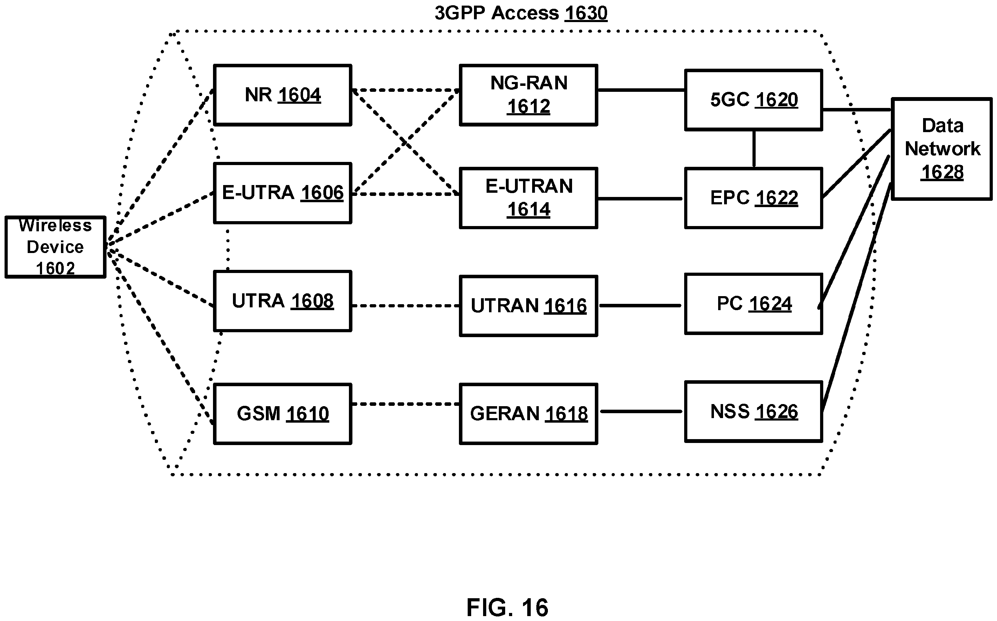

FIG. 16 shows a wireless device 1602 (e.g., UE) may exchange one or more data with a data network (DN) 1628, via the 3GPP access (type) 1630. The 3GPP access (type) may use one or more 3GPP RATs. The one or more 3GPP RATs may comprise at least one of NR 1604, E-UTRA 1606, UTRA 1608, GSM 1610, the like and/or a combination thereof. The 3GPP access may use one or more 3GPP RANs. The one or more 3GPP RANs may comprise at least one of the NG-RAN 1612, the E-UTRAN 1614, the UTRAN 1616, the GERAN 1618, the like and/or a combination thereof. The 3GPP RANs may use the one or more 3GPP RATs. The one or more 3GPP RANs may interface with a one or more core networks. The one or more core networks may comprise at least one of a 5G core (5GC) 1620, an evolved packet core (EPC) 1622, a packet core (PC) 1624, a network switching system (NSS) 1626, and/or a combination thereof.

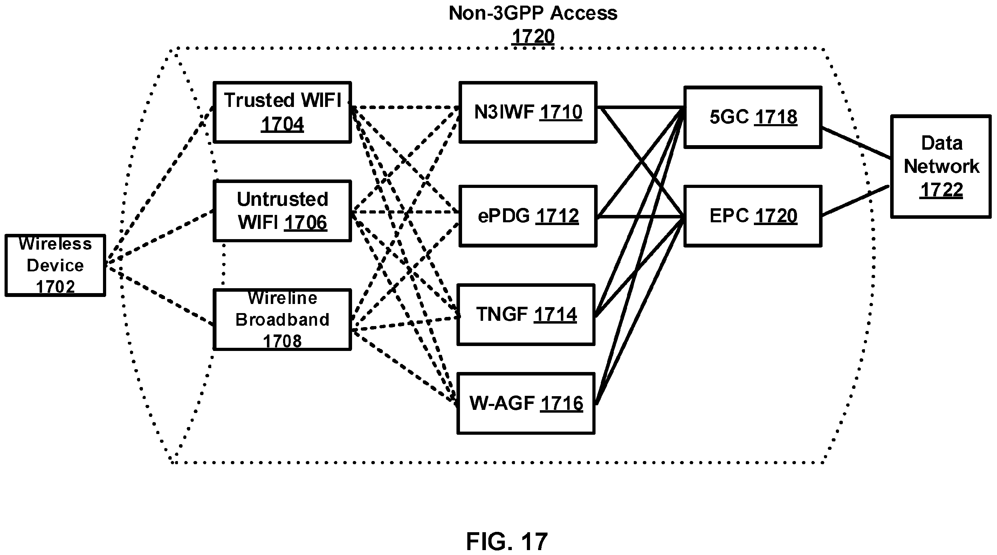

FIG. 17 shows the wireless device 1702 (e.g., UE) may exchange one or more data with the data network 1722, via the N3GPP access (type) 1720. The N3GPP access may use one or more N3GPP RATs. The one or more N3GPP RATs may comprise at least one of the trusted WiFi 1704, the untrusted WiFi 1706, the wireline broadband 1708, the like and/or a combination thereof. The N3GPP access may use one or more N3GPP access network (nodes). The one or more N3GPP access network nodes may comprise at least one of the N3IWF 1710, an evolved packet data gateway (ePDG) 1712, a trusted non-3GPP gateway function (TNGF 1714), a wireline access gateway function (W-AGF 1716), the like and/or a combination thereof. The one or more N3GPP access nodes may interface with the one or more core networks (e.g., EPC 1720 and/or 5GC 1718).

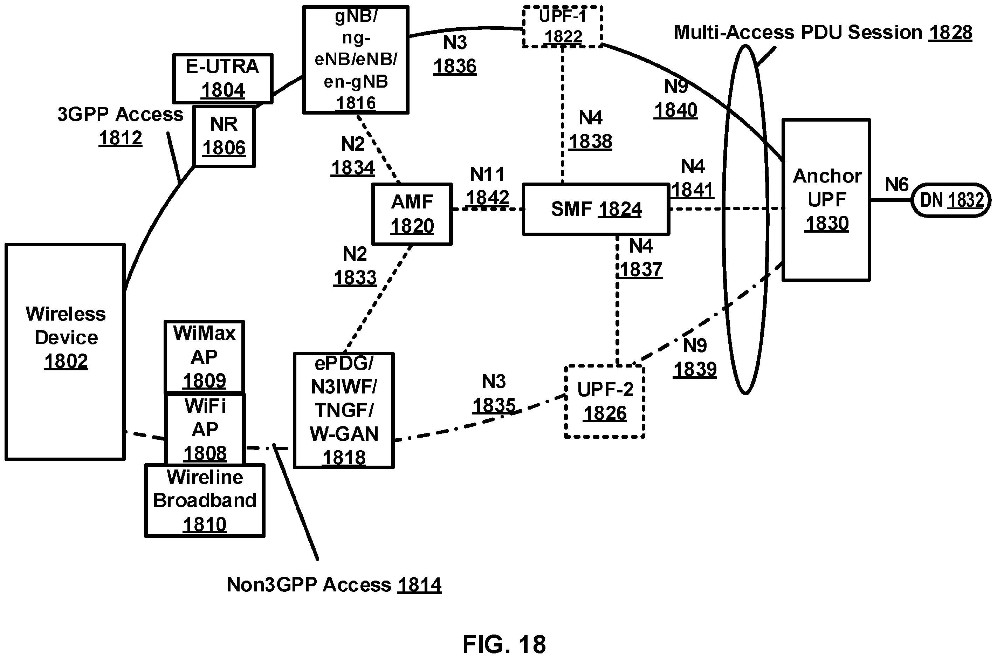

FIG. 18 shows the wireless device 1802 (e.g., UE) may establish a multi access PDU (MA-PDU) session 1804 with the network. The MA-PDU session may be supported if the wireless device 1802 (e.g., UE) and the network support an access traffic steering switching splitting (ATSSS) feature (the feature of ATSSS). The ATSSS feature may enable a MA PDU connectivity service, which may exchange one or more PDUs between the wireless device 1802 (e.g., UE) and the data network 1832 by a first tunnel (e.g., a N3(1836)/N9(1840) tunnels between a UPF (e.g., an anchor UPF 1830, a packet switching anchor) and the 3GPP RAN) of one 3GPP access 1812 and a second tunnel (e.g., a N3 (1835)/N9(1839) tunnels between the UPF and the N3 GPP RAN) of one non-3GPP access 1814. The MA PDU connectivity service may be realized by establishing the Multi Access PDU (MA PDU, MA-PDU) Session 1828. The MA PDU session 1828 may be a PDU Session that may have user-plane resources on the 3GPP access and the N3GPP access. For example, the resources on the 3GPP access may comprise resources provided by the 3GPP RATs (e.g., E-UTRA 1804, NR 1806), the 3GPP RAN nodes (base stations 1816 such as gNB, ng-eNB, eNB, en-gNB, the like, and/or a combination thereof), a first UPF (UPF-1 1822, if configured between the anchor UPF 1830 and the 3GPP RAN), the anchor UPF 1830, and/or the like. The resources on the N3GPP access may comprise resources provided by the N3GPP RATs (e.g., WiFi 1808, WiMAX 1809, wireline broadband 1810, and/or the like), the N3GPP RAN nodes 1818 (e.g., ePDG, N3IWF, TNGF, W-GAN, the like, and/or a combination thereof), a second UPF (UPF-2 1826, if configured between the anchor UPF the N3GPP RAN), the anchor UPF 1830 and/or the like. For the MA PDU session, the data network or applications of the wireless device 1802 (e.g., UE) may use the same identity (e.g., IP address). For example, source IP address (and/or destination IP address) of the packets (e.g., PDUs) of the MA PDU session 1828 sent over the 3GPP access may be same as the source IP address (and/or destination IP address) of the packets of the MA PDU sent over the N3GPP access.

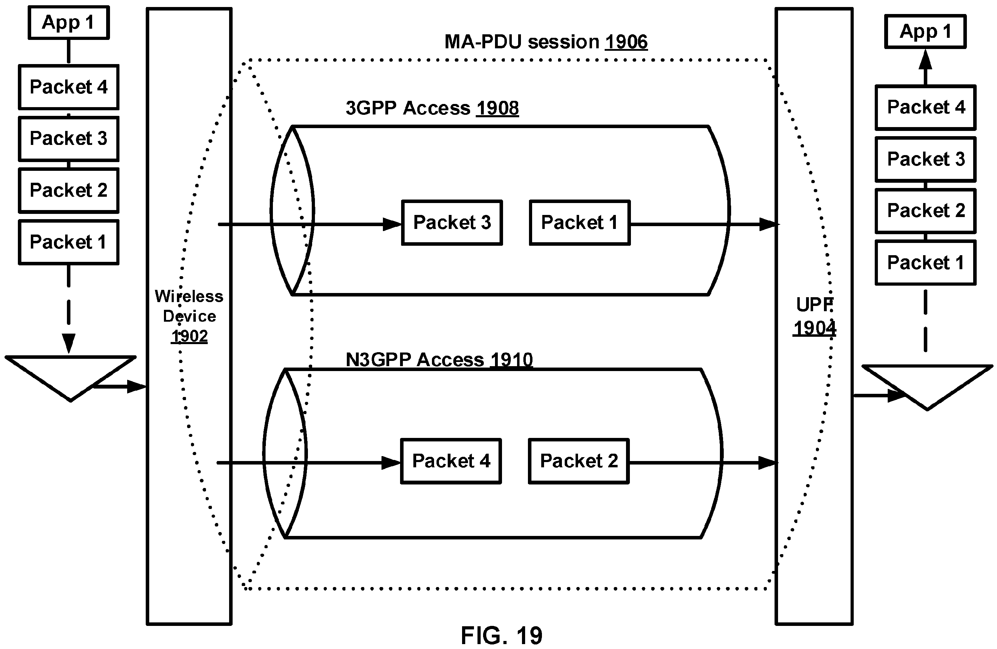

As described herein, using two resources (e.g., one from 3GPP access 1908, the other from N3GPP access 1910) for the MA PDU session 1906 may provide enhanced reliability, efficient use of network resources, and/or adaptation to changing environment. FIG. 19 shows the wireless device 1902 (e.g., UE) and the UPF 1904 (e.g., anchor UPF) may establish the MA PDU session 1906. The MA PDU session 1906 may comprise the 3GPP access 1908 and the N3GPP access 1910. The 3GPP access 1908 may use the resources as shown in FIG. 18 (or FIG. 16) and/or the N3GPP access 1910 may use the resources as shown in FIG. 18 (or FIG. 17). Reverting back to FIG. 19, the 3GPP access 1908 and the N3GPP access 1910 may provide different characteristics of data transfer. The 3GPP access 1908 may provide a wider coverage than the N3GPP access 1910. The N3GPP access 1910 may provide higher throughput than the 3GPP access 1908. By utilizing these different characteristics of the two accesses, the operator of the network may determine how to transport packets over the two accesses of the MA PDU session 1906. The operator may determine to distribute loads equally on these accesses if both accesses provide similar performance. For example, a half (e.g., packet 1 and packet 3) of the PDUs may be transferred over the 3GPP access 1908 while the remaining half of the PDUs (e.g., packet 2 and packet 4) may be transferred over the N3GPP access 1910. The operator may determine to send three times more PDUs (e.g., packet 6, packet 7, packet 8) over the N3GPP access 1910 than the PDUs (e.g., packet 5) sent over the 3GPP access 1908 if transfer delay (e.g., 30 ms) over the 3GPP access 1908 is three times larger than the transfer delay (e.g., 10 ms) over the N3GPP access 1910. In at least some technologies, for the MA PDU session 1906, a core network node (e.g., AMF, SMF, UPF) may be able to distinguish one access type (e.g., 3GPP access type) from the other access type (e.g., N3GPP access type) because different network nodes (e.g., base station/gNB, N3IWF) are used for each access.

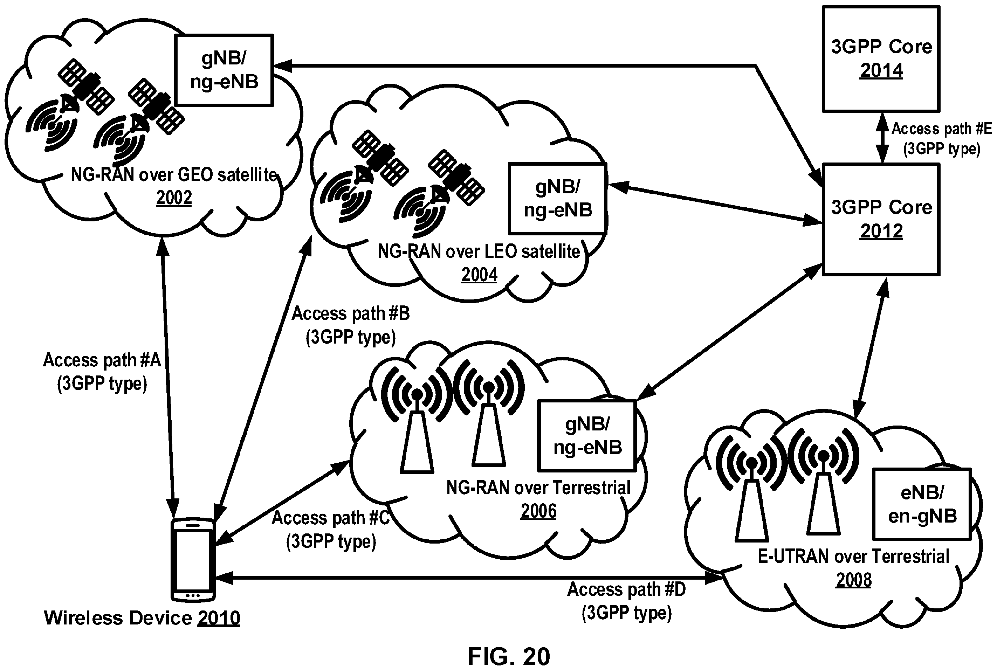

As described herein, 5G system (5GS) may advance and 3GPP access may also advance. FIG. 20 shows one or more 3GPP RANs may be diversified and/or may be deployed in differentiated areas. In at least some technologies, an access node and/or a radio access network may be deployed as a terrestrial node (on the ground) or with similar frequencies (e.g., 2Ghz). The access node may be deployed on the ground, in the building and/or the like, and due to limitation of supported frequencies, may use similar frequency bands. There may not be much gain in differentiating a (e.g., first type) 3GPP RAN from other (e.g., second type) 3GPP RANs. As 5G system equipment becomes smaller and signal of wireless devices (e.g., UEs) with limited power become capable of reaching satellites, deploying the 3GPP access nodes (RANs) onto the satellites may become feasible. For example, a first NG-RAN of the one or more 3GPP RANs may be deployed over a geostationary equatorial orbit (GEO) 2002. A second NG-RAN of the one or more 3GPP RANs may be deployed over a low earth orbit (LEO) 2004. A third NG-RAN of the one or more 3GPP RANs may be deployed as a terrestrial (e.g., on the ground, in the building) access network 2006. A fourth E-UTRAN of the one or more 3GPP RANs may be deployed as a terrestrial access network 2008. These different 3GPP RANs may provide different characteristics. For example, the first NG-RAN may provide a coverage in a remote area where terrestrial 3GPP RANs cannot be deployed. The second NG-RAN may provide a wider coverage than the terrestrial NG-RAN, with a reduced throughput. The one or more 3GPP RAN may be connected to one or more 3GPP core networks 2012. The one or more 3GPP core networks 2012 may belong to one or more networks. The first NG-RAN and/or the second NG-RAN may be connected to a first core network. The third NG-RAN may be connected to a second core network. The first core network may belong to a first network. The third NG-RAN may be connected to a second core network. The first core network may belong to a first network and/or a first operator. The second core network may belong to a second network and/or a second operator. In these diversified scenarios, it may be beneficial to use multiple 3GPP RANs for the wireless device 2010 (e.g., UE) and/or for the MA PDU session, instead of using one 3GPP access and one N3GPP access. However, this may bring a problem as explained below.

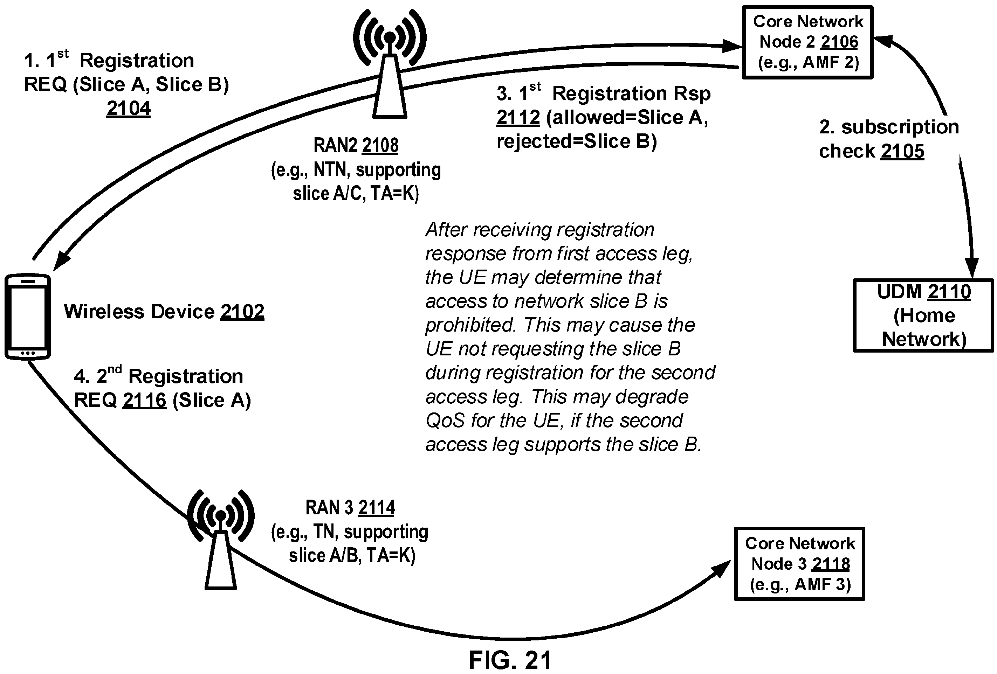

FIG. 21 shows a wireless device 2102 (e.g., UE) may try to register to one or more core network nodes (or core networks, networks) The wireless device 2102 (e.g., UE) may send a first message (e.g., a first registration request message 2104) to a core network node 2 2106 (e.g., a AMF 2, an MME 2, and/or the like) via a RAN 2 2108 (e.g., an NTN RAN) of a 3GPP access. The RAN 2 2108 may support a slice A and a slice C, and/or may be in a tracking area K (TA K). The first message may comprise at least one of an identifier of the wireless device 2102 (e.g., UE), a first list of requested network slices. For example, the first list of requested network slices may indicate a slice A, a slice B, and/or the like. A first path via the RAN 2 2108 may be a first access path of the 3GPP access, or a first 3GPP access.

A core network node 2 2106 may receive the first message and/or may get subscription data 2105 of the wireless device 2102 (e.g., UE) from a UDM 2110. The core network node 2 2106 may send to the wireless device 2102 (e.g., UE), a third message (e.g., a first registration accept message 2112), for example, after or in response to receiving the first message. The first registration accept may comprise a first list of allowed network slices, based on that the wireless device 2102 (e.g., UE) is in TA K, and/or based on that the RAN 2 2108 supports the slice A and does not support the slice B. The first list of allowed network slices may indicate that the slice A is allowed and/or that the slice B is not allowed (e.g. rejected).

A wireless device 2102 (e.g., UE) may receive the third message. Because the third message indicates that the slice B is rejected, the wireless device 2102 (e.g., UE) may consider that the slice B is rejected. The wireless device 2102 (e.g., UE) may consider that the slice B is rejected (not allowed) in TA K because the third message is received in TA K.

A wireless device 2102 (e.g., UE) may determine to perform additional registration for an additional access path of the 3GPP access because the wireless device 2102 (e.g., UE) supports a feature of multiple access / multiple steering (e.g., dual steering). The wireless device 2102 (e.g., UE) may search one or more available networks and/or one or more available 3GPP access paths. The wireless device 2102 (e.g., UE) may find a third RAN (RAN 3 2114). The RAN 3 may be a terrestrial network, a terrestrial RAN of the 3GPP access type. The RAN 3 2114 may support the slice A and the slice B, and may be in the TA K. A second path via the RAN 3 2114 may be a second access path of the 3GPP access, or a second 3GPP access.

A wireless device 2102 (e.g., UE) may select the RAN 3 2114 for the second access path for the 3GPP access type. The wireless device 2102 (e.g., UE) may send a fourth message (e.g., a second registration request 2116) to a third core network node (e.g., core network node 3 2118, AMF 3) via the RAN 3 2114. The core network node 3 2118 may be the core network 2 2106. The wireless device 2102 (e.g., UE) may not request the slice B with the fourth message because the slice B is rejected, because the slice B is rejected in TA K, and/or because the RAN 3 is in TA K. For example, the fourth message may not indicate the slice B as requested, and/or a second list of requested network slices of the fourth message may not indicate the slice B. The second list of requested network slices of the fourth message may indicate the slice A because the slice A is allowed.

Core network node 3 2118 (e.g., AMF 3) may receive the fourth message and may send a fifth message to the wireless device (e.g., UE). The fifth message may not comprise information of the slice B and/or a second list of allowed network slices of the fifth message may not indicate the slice B because the wireless device (e.g., UE) does not request the slice B. This may lead to QoS degradation for the wireless device (e.g., UE) because the wireless device (e.g., UE) does not request the slice B which may be supported at the location of the wireless device (e.g., UE) via the second access path. The wireless device (e.g., UE), though the slice B is supported by the RAN3, may not request for slice B via the second access path.

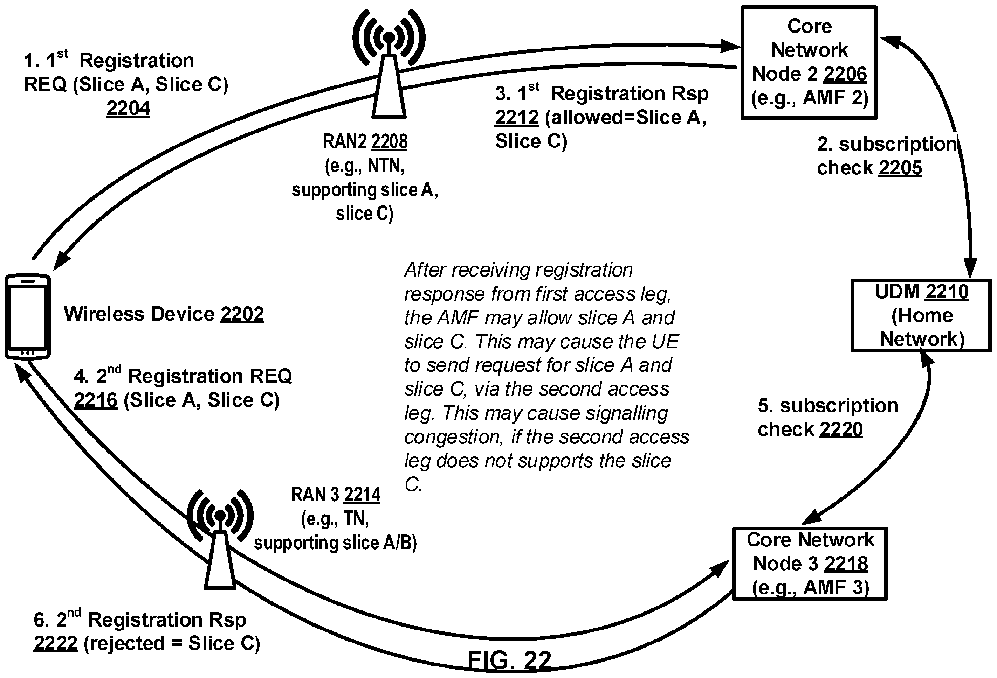

FIG. 22 shows a wireless device 2202 (e.g., UE) may try to register to one or more core network nodes (or core networks, networks). The wireless device 2202 (e.g., UE) may send a first message 2204 (e.g., a first registration request message) to a core network node 2 2206 (e.g., a AMF 2, an MME 2, and/or the like) via a RAN 2 2208 (e.g., an NTN RAN) of a 3GPP access. The RAN 2 2208 may support a slice A and a slice C, and/or may in a tracking area K (TA K). The first message 2204 may comprise at least one of an identifier of the wireless device 2202 (e.g., UE), a first list of requested network slices. For example, the first list of requested network slices may indicate the slice A and/or the slice C. A first path via the RAN 2 2208 may be a first access path of the 3GPP access, or a first 3GPP access.

A core network node 2 2206 may receive the first message and/or may get subscription data 2205 of the wireless device (e.g., UE) from a UDM 2210. The core network node 2 2206, based on (e.g., in response to) receiving the first message, may send to the wireless device 2202 (e.g., UE), a third message 2212 (e.g., a first registration accept message). The first registration accept, based on that the wireless device (e.g., UE) is in TA K, and/or based on that the RAN 2 supports the slice A and the slice C, may indicate a first list of allowed network slices. The first list of allowed network slices may indicate that the slice A and/or the slice C are allowed.

A wireless device 2202 (e.g., UE) may determine to perform additional (e.g., secondary, subsequent, concurrent) registration for an additional access path of the 3GPP access because the wireless device 2202 (e.g., UE) supports a feature of multiple steering. The wireless device 2202 (e.g., UE) may search one or more available networks and/or one or more available 3GPP access paths. The wireless device 2202 (e.g., UE) may find a third RAN 2214 (e.g., RAN 3). The RAN 3 may be a terrestrial network, a terrestrial RAN of the 3GPP access type. The RAN 3 may support the slice A and a slice B, and may be in the TA K. The additional access path may be a second path via the RAN 3. The second path may be a second access path of the 3GPP access, or a second 3GPP access.

A wireless device 2202 (e.g., UE) may select the RAN 3 2214 for the second access path for the 3GPP access type. The wireless device 2202 (e.g., UE) may send a fourth message 2216 (e.g., a second registration request) to a third core network node 2218 (e.g., core network node 3, AMF 3) via the RAN 3 2214. The core network 3 2218 may be the core network 2. A second list of requested network slices of the fourth message may indicate the slice A and/or the slice C because the slice A and/or the slice C are allowed (for registration, for use) for the first access path,

A third core network node 2218 may receive the fourth message 2216 and may send a sixth message to the wireless device 2202 (e.g., UE). The third core network node may fetch information 2220 (e.g., subscription data) from the UDM to determine one or more allowed network slices for the second access path. The third core network node may determine to reject the slice C. The third core network node, based on that the RAN 3 does not support the slice C, based on that the wireless device (e.g., UE) is requesting the slice C, based on that the slice C is registered (allowed) via the first access path, and/or based on that the slice C is not allowed for the feature of multiple steering, and/or the like, may determine to reject registration (allowance) of the slice C via the second access path. The sixth message 2222, based on the determination, may comprise a second list of allowed network slices, and/or a second list of rejected network slices. The second list of rejected network slices may indicate that the slice C is rejected.

A wireless device 2202 (e.g., UE) may receive the sixth message. The wireless device 2202 (e.g., UE) may consider that the slice C is rejected for the 3GPP access type because the sixth message indicates that the slice C is rejected and/or because the sixth message is received over the 3GPP access type. This may cause the wireless device 2202 (e.g., UE) not to use the resources of the network slice C for the 3GPP access type, even if the resources for the network slice C is available over the first access path.

As described herein, a policy information for multiple access / multiple steering (e.g., a policy information for dual steering, a dualsteer policy information, a policy information for multiple registrations, etc.) may indicate whether a network slice is allowed for registration (use) over multiple access paths of an access type, and/or one or more conditions. A wireless device (e.g., UE) may use the policy information, in determining whether to request the network slice for additional access paths of the access type, after registering for an initial (or first, one, remaining, primary, existing, and/or the like) access path of the access type. This may prevent the wireless device (e.g., UE) from requesting the network slice over a secondary (or subsequent, additional, subsequent, and/or the like) access path of the access type. The wireless device (e.g., UE) may send an indication whether the wireless device (e.g., UE) requests the policy information. A network node, based on the indication, may determine whether to send the policy information. This may assist the network to reduce unnecessary delivery of policy information to a wireless device/UE (e.g., not supporting a feature of multiple steering, or not requesting the policy information). One or more core network nodes may register with indication on whether the feature of multiple steering is supported. The registration may assist one core network node to select another core network node supporting the feature. A NAS message may indicate whether a request for a certain network slice is associated with the feature of multiple steering, and/or whether a rejection for the certain network slice applies for one or more access paths. The NAS message may assist the wireless device (e.g., UE) to determine for which access path(s) the network slice is rejected and/or allowed. The policy information may indicate one or more conditions for using the feature of multiple steering. The policy information may assist for the wireless device (e.g., UE) to determine whether to request a PDU session over the one or more access paths of the same access type or not. The network may provide a policy (configuration) information regarding how to distribute data over multiple 3GPP access, when to send which data over which 3GPP access paths. The policy (configuration) information may help for the 3GPP system to increase efficiency.

Throughout this disclosure, the term "5G access network" may refer to, an access network comprising at least one of a NG-RAN and/or non-3GPP AN, and connecting to a 5G core network. The term "5G core network" may refer to, a core network connecting to a 5G access network. This may be 5G core (5GC).

Throughout this disclosure, the term "3GPP RAN" may refer to a radio access network using 3GPP RAT. For example, this may comprise at least one base station, such as a gNB, an eNB, a ng-eNB, an en-gNB, the like, and/or a combination thereof. For example, this may be at least one of an E-UTRAN, NG-RAN, the like, and/or a combination thereof. The term "3GPP RAT" may refer to a radio access technology based on 3rd generation partnership (3GPP) project. For example, this may comprise at least one of a NR, a E-UTRA, UTRA, GSM, the like, and/or a combination thereof.

Throughout this disclosure, the term "N3GPP RAN" may refer to an access network using non-3GPP (N3GPP) RAT. This may be N3GPP access network (AN). For example, this may comprise at least one of N3IWF, ePDG, TNGF, W-GAN, the like, and/or a combination thereof.

Throughout this disclosure, the term "network node" may refer to at least one of a core network node, an access node, a wireless device (e.g., UE), the like, and/or a combination thereof. A network may comprise one or more network nodes.

Throughout this disclosure, the term "3GPP access node" may refer to an access node using a 3GPP RAT. For example, this may comprise at least one base station, such as a gNB, an eNB, a ng-eNB, an en-gNB, the like, and/or a combination thereof.

Throughout this disclosure, the term "N3GPP access node" may refer to an access node using a N3GPP RAT. For example, this may comprise at least one of N3IWF, ePDG, TNGF, W-GAN, the like, and/or a combination thereof. The term "N3GPP RAT" may refer to a radio access technology not based on 3rd generation partnership project. This may be an access technology not developed by 3GPP. For example, this may comprise a WiFi, trusted WiFi, non-trusted WiFi, fixed access, wireline broadband, the like, and/or a combination thereof.

Throughout this disclosure, the term "access type" may refer to indicating a type of access used for communicating with a network. This may comprise a 3GPP access type (or 3GPP access) and/or a N3GPP access type (or N3GPP access). This may indicate that a wireless device (e.g., UE) is communicating with the network by using one or more 3GPP RATs, and/or via one or more 3GPP RANs if the access type is the 3GPP access type. This may indicate that a wireless device (e.g., UE) is communicating with the network by using one or more N3GPP RATs, and/or via one or more N3GPP RANs if the access type is the N3GPP access type. Access may comprise at least one of sending a data, receiving a data, sending a signaling message, receiving a signaling message, performing registration, and/or the like.

Throughout this disclosure, the term "3GPP access type" may refer to an access using one or more 3GPP RATs, and/or via one or more 3GPP RANs. The term "N3GPP access type" may refer to, an access using one or more N3GPP RATs, and/or via one or more N3GPP RANs.

Throughout this disclosure, the term "MA PDU Session" may refer to a PDU Session that provides a PDU connectivity service, which can use/establish one access type at a time, or simultaneously one 3GPP access and one N3GPP access, simultaneously more than one paths of 3GPP access type or simultaneously more than one paths of N3GPP access type.

Throughout this disclosure, the term "NG-RAN" may refer to a base station, which may comprise at least one of a base station/gNB/ng-eNB, a relay node, a base station central unit (e.g., gNB-CU), a base station distributed unit (e.g., gNB-DU), and/or the like. This may be a radio access network that connects to 5GC, supporting at least one of NR, E-UTRA, and/or a combination thereof.

Throughout this disclosure, the term "E-UTRAN" may refer to a base station, which may comprise at least one base station such as an eNB, an en-gNB, and/or the like. This may be a radio access network that connects to evolved packet core (EPC), supporting at least one of NR, E-UTRA, and/or a combination thereof.

Throughout this disclosure, the term "RAT type" may refer to identifying the transmission technology used in the access network for 3GPP access and/or for non-3GPP access. For example, RAT type for 3GPP access may comprise at least one of NR, NB-IOT, E-UTRA, and/or the like. The RAT type for non-3GPP access may comprise at least one of untrusted non-3GPP, trusted non-3GPP, trusted IEEE 802.11 non-3GPP access, Wireline, Wireline-Cable, Wireline-BBF, WiFi, etc.

Throughout this disclosure, the term "core network node" may refer to a core network device, which may comprise at least one of a AMF, a SMF, a NSSF, a UPF, a NRF a UDM, a PCF, a SoR-AF, an AF, an DDNMF, an MB-SMF, an MB-UPF, a MME, a SGW, a PGW, a SMF+PGW-C, a SMF+PGW-U, a UDM+HSS and/or the like. The term "network system" may refer to, a communication system, and/or a generation of the communication system. One or more network systems may comprise an EPS, a 5GS. The first network system may be the EPS. The EPS may comprise of one or more wireless devices (e.g., UEs), one or more base stations (e.g., eNBs/en-gNBs), one or more EPCs. The one or more EPCs may comprise a MME, a SGW, a PGW, and/or the like. The second network system may be the 5GS. The 5GS may comprise of one or more wireless devices (e.g., UEs), one or more base stations (e.g., gNB/ng-eNBs), one or more 5G core networks. The one or more 5G core networks may comprise a AMF, a SMF, a PCF, and/or the like.

Throughout this disclosure, the term "5G System" may refer to, a 3GPP system consisting of at least one of 5G access network (or NG-RAN), 5G core network and/or a wireless device (e.g., UE). The term "EPS" may refer to, a 3GPP system consisting of at least one of EPC, E-UTRAN and/or a wireless device (e.g., UE).

Throughout this disclosure, the term "access path" may refer to, a path between a wireless device (e.g., UE) and a network for exchange of data and/or signaling. The access path may be an access leg, a path, an access route (route), an access track (track), an access channel (channel), an access corridor (corridor), an access link (link) and/or the like. The access path may indicate (be associated with) at least one of a path from a wireless device (e.g., UE) to a RAN, a path from a wireless device (e.g., UE) to a core network, a path from a RAN to a core network, the like, and/or a combination thereof. The access path may be defined per a pair of a core network and/or an access network. A path for a data between an access node and a core network may not be an access path if the access node and the core network may not be able to exchange a control signaling. The path between the secondary node of the NG-RAN to a core network (e.g., a UPF) may not be an access path if a secondary node of a NG-RAN cannot exchange signaling messages with a AMF. One or more access paths may be defined for an access type. The one or more access paths may be established for the access type. An access path may be associated with one or more core networks (e.g., roaming networks, visiting network, home network, anchor networks) and/or an access network. One or more 3GPP access paths may be one or more 3GPP access. One or more 3GPP access (e.g., access paths) for 3GPP access type may be configured.

There may be one or more access paths for each access type. For example, the one or more access paths may be used to transport signaling message for the access type. There may be one or more (established, active) access paths (of signaling, of control message delivery) between the wireless device (e.g., UE) and the core network (e.g., AMF, SMF, PCF). There may be an associated control plane connection for an access path. A AMF, for a wireless device (e.g., UE), may be able to exchange a control message with a first base station (e.g., gNB) and/or a UPF may exchange data with the first base station (e.g., gNB) and/or the second base station (e.g., gNB). The wireless device (e.g., UE) may be considered as having one path. The link via the first base station (e.g., gNB) may be an access path, because the first base station (e.g., gNB) may be able to exchange control plane signaling with the AMF (and/or an SMF). The link via the second base station (e.g., gNB) may not be considered as a path because the AMF and the second base station (e.g., gNB) may not be able to exchange control plane signaling.

Access path may comprise at least a control plane. The access path may or may not have a user plane. The access path may not have the user plane before establishing a bearer transporting user data (e.g., voice data, IP packets). After establishing the bearer, the access path may have the user plane.

FIG. 20 shows one or more access paths may comprise:
- a path (e.g., access path A, 3GPP access A, an access A of a 3GPP access type) from the wireless device 2010 (e.g., UE) via the NG-RAN over GEO satellite 2002 and to a 3GPP core 2012;
- a path (e.g., access path B, 3GPP access B, an access B of a 3GPP access type) from the wireless device 2010 (e.g., UE) via the NG-RAN over LEO satellite 2004 and to a 3GPP core 2012;
- a path (e.g., access path C, 3GPP access C, an access C of a 3GPP access type) from the wireless device 2010 (e.g., UE) via the NG-RAN over Terrestrial 2006 (base station/gNB) and to a 3GPP core 2012;
- a path (e.g., access path D, 3GPP access D, an access D of a 3GPP access type) from the wireless device 2010 (e.g., UE) via the E-UTRAN over Terrestrial 2008 (eNB) and to a 3GPP core 2012; and/or
- a path (e.g., access path E, 3GPP access E, an access E of a 3GPP access type) from the wireless device (e.g., UE) via the NG-RAN via a first 3GPP core 2012 (e.g., a first AMF) to a second 3GPP core 2014 (e.g., a second AMF).

A wireless device (e.g., UE) may have one or more 3GPP access paths. The one or more 3GPP access paths may be defined /established/ associated for 3GPP access type. Each 3GPP access path of the one or more 3GPP access path may support delivery of a control message (e.g., registration request message, PDU session establishment request message, and/or the like) and/or a control message (e.g., Initial wireless device/UE message, N2 message, and/or the like) for a 3GPP access node. The one or more 3GPP access path may comprise at least one of:
- one or more first-type 3GPP access paths: A first-type 3GPP access path may be a route associated a wireless device (e.g., UE), a NG-RAN, a core network; and/or
- one or more second-type 3GPP access paths: A second-type 3GPP access path may be a route associated with a wireless device (e.g., UE), a E-UTRAN, and/or a core network.

A wireless device (e.g., UE) may have one or more N3GPP access paths. The one or more N3GPP access paths may be defined/established/associated for N3GPP access type. Each N3GPP access path of the one or more N3GPP access path may support delivery of a control message (e.g., registration request message, PDU session establishment request message, and/or the like) and/or a control message (e.g., Initial wireless device/UE message, N2 message, and/or the like) for a N3GPP access node. For example, the one or more N3GPP access path may comprise at least one of:
- one or more first-type N3GPP access paths: A first-type N3GPP access path may be a route associated a wireless device (e.g., UE), a N3IWF, a core network;
- one or more second-type N3GPP access paths: A second-type N3GPP access path may be a route associated a wireless device (e.g., UE), an ePDG, a core network;
- one or more third-type N3GPP access paths: A third-type N3GPP access path may be a route associated with a wireless device (e.g., UE), an TNGF (trusted non-3GPP gateway function), and/or a core network; and/or
- one or more fourth-type N3GPP access paths: A fourth-type N3GPP access path may be a route associated a wireless device (e.g., UE), a W-AGF (wireline access gateway function), a core network.

Throughout this disclosure, the term "home network" may refer to, a network which has a subscription of a wireless device (e.g., UE). The wireless device (e.g., UE) may subscribe to a service of the home network. The wireless device (e.g., UE) may have a service agreement with the home network. The wireless device (e.g., UE), within the coverage of the home network, may access the home network via using one or more RANs of the home network and/or one or more core network nodes of the home network. The wireless device (e.g., UE), outside of coverage of the home network, may use one or more RANs of the visited network(s) and/or one or more core network nodes of the visited (roaming) network(s). The wireless device (e.g., UE) may use one or more RANs of the visited network(s), one or more RANs of the home network, one or more core network nodes of the home network, and/or one or more core network nodes of the visited (roaming) network(s). The visited network(s), based on the subscription of the wireless device (e.g., UE) and/or based on service agreement between the home network and/or the visited network(s), may determine whether to allow the wireless device (e.g., UE) of the home network to use the resources of the one or more RANs of the visited network(s) and/or the resources of the one or more core network nodes of the visited network(s). The visited (visiting) network(s), Based on the resources used for the wireless device (e.g., UE), may send charging records to the home network. The subscription of the wireless device (e.g., UE) to the home network may allow the wireless device (e.g., UE) to use resources of the visited network(s) if the wireless device (e.g., UE) does not have subscription to the visited network(s).

Throughout this disclosure, the term "support of dualsteer" may refer to, support of a feature of dualsteer. The feature of dualsteer may comprise at least one of performing more than one registrations over an access type, performing additional registrations for the access type while registered for the access type, adding additional access path for the access type, using (simultaneously, concurrently) multiple access paths for the access type, being registered (simultaneously, concurrently) for multiple access paths for the access type, and/or the like. Supporting the feature of dualsteer by a node may be that the node is able to handle, process, interpret, sending, receiving, acting based on, and/or the like, an information associated with dualsteer. The information associated with dualsteer may be a subscription data, a cause value, a network slice information associated with the dualsteer, a policy information associated with the dualsteer, a configuration information associated with the dualsteer, and/or the like. Dualsteer may be called as dual steering, multiple steering, multiple access paths registration, multiple access paths managements, multiple 3GPP access, multiple access connections, and/or the like.

Throughout this disclosure, the term "dualsteer policy" may refer to a policy information associated with a feature of dualsteer. The policy information may indicate one or more parameters for the feature of dualsteer, one or more conditions for using the one or more parameters. The dualsteer policy may indicate whether the wireless device (e.g., UE) is allowed to use a network slice over multiple access paths of an access type. The dualsteer policy may indicate which service flow is preferred (allowed, authorized, required, and/or the like) to use a PDU session via the multiple access paths of the access type, and/or one or more conditions for the use. The dualsteer policy may comprise Access Type Preference, URSP, a PCC rule, and/or the like. The dualsteer policy may indicate whether multiple 3GPP access are allowed for a network slice (or a PDU session, or a service data flow, or a certain traffic). The dualsteer policy may be one or more policy sections associated information for the dualsteer policy. The one or more policy sections may be identified by one or more policy section identifiers.

Throughout this disclosure, the term "mobility management node" may refer to, a function and/or a node performing mobility management for a wireless device (e.g., UE). Mobility management may be at least one of management of registration status, management of context, management of authorization, management of registration area, management of paging, and/or the like. The mobility management node may comprise at least one of a MME, AMF, and/or the like.

A wireless device (e.g., UE) may use one or more subscriptions. For example, the wireless device (e.g., UE) may use a first subscription for a first access path and/or the wireless device (e.g., UE) may use a second subscription for a second access path. This may prevent the first access path from removing registration of a network slice, if the wireless device (e.g., UE) performs registration to the second access path. The data exchange in the first access path may not be harmonized with the data exchanges in the second access path. A first IP address supported by the first subscription may be different from a second IP address supported by the second subscription. This may not properly support MA-PDU session if the QoS allowed for the first subscription is different from the QoS allowed for the second subscription.

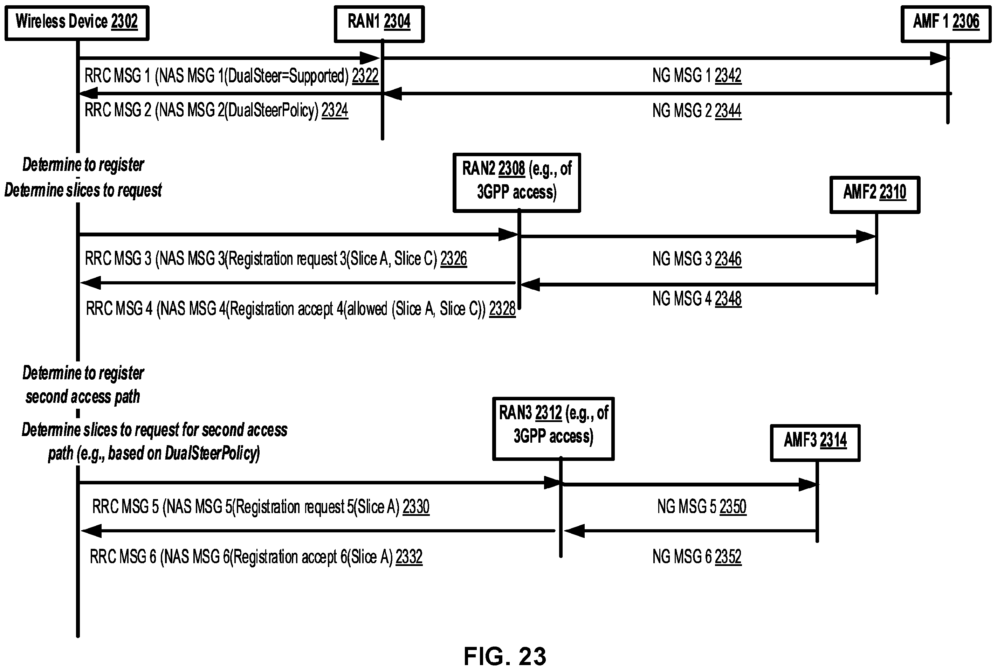

FIG. 23 shows an example of a wireless device using a dualsteer policy. A wireless device 2302 (e.g., UE) may receive a multi access information such as a dualsteer policy (or dualsteer policy information) 2324 from a network (e.g., home network, a visiting network). The wireless device 2302 (e.g., UE) may determine whether to perform one or more registrations over multiple access paths (of an access type) or not, and/or which one or more network slices to request for each access path, using the dualsteer policy. This may help the wireless device 2302 (e.g., UE) to reduce unnecessary request for an additional registration and/or for the network slice. For brevity, based on the other part of the present disclosure, redundant details will be omitted.

A wireless device (e.g., UE) may send a RRC message 1 (RRC MSG 1 2322) to a first RAN 2304 (e.g., a RAN1, a first base station/gNB, and/or the like). The RRC message 1 2322 may be at least one of a first RRC setup complete message, a first RRC UL transport message, and/or the like. The RRC message 1 2322 may comprise at least one of a NAS message 1 (NAS MSG 1). The NAS MSG 1 may be at least one of a first registration request message, a first service request message, a first UL NAS transport message, and/or the like. The NAS MSG 1 may comprise at least one of an identifier of the wireless device 2302 (e.g., UE), one or more capabilities of the wireless device 2302 (e.g., UE), and/or the like. The one or more capabilities of the wireless device 2302 (e.g., UE) may comprise a dualsteer capability indicator. For example, the dualsteer capability indicator may indicate whether the wireless device 2302 (e.g., UE) supports a feature of dualsteer. The dualsteer capability indicator may assist the network to determine whether to send the dualsteer policy to the wireless device 2302 (e.g., UE) or not. The network may not send the dualsteer policy to a (second) wireless device (e.g., UE) not supporting the feature of dualsteer. For example, the dualsteer capability indicator may indicate that the wireless device 2302 (e.g., UE) supports the feature of dualsteer. The NAS MSG 1 may indicate that the wireless device 2302 (e.g., UE) request the dualsteer policy.

A RAN 1 2304 may receive the RRC MSG 1 2322. The RAN 1 2304, based on (e.g., in response to) receiving the RRC MSG 1 2322, may send a first NG MSG (NG MSG 1 2342) to a AMF 1 2306. The NG MSG 1 2342 may comprise the NAS MSG 1.

AN AMF 1 2306 may receive from the RAN 1 2304, the NG MSG 1 2342. The AMF 1 2306 may be of a home network of the wireless device 2302 (e.g., UE). For example, the home network may manage a subscription information for the wireless device 2302 (e.g., UE). The AMF 1 2306, based on (e.g., in response to) receiving the NAS MSG 1 (or the dualsteer capability indicator of the NAS MSG 1) of the NG MSG 1 2342, may determine that the wireless device (e.g., UE) supports the feature of the dualsteer.

An AMF 1 2306 may send a NAS MSG 2 2324 to the wireless device (e.g., UE). The AMF 1 may determine to send to the wireless device 2302 (e.g., UE), the dualsteer policy 2324 because the wireless device 2302 (e.g., UE) supports the feature of the dualsteer and/or because the wireless device 2302 (e.g., UE) requests the dualsteer policy. The NAS MSG 2 2324 may comprise the dualsteer policy. The NAS MSG 2 2324 may be at least one of a first registration accept message, a first wireless device (e.g., UE) configuration update message, and/or the like. For example, the dualsteer policy may indicate:
- one or more network slices configured for the wireless device/UE 2302 (e.g., list of configured network slices). The one or more network slices may comprise slice A, slice B, slice C, and/or the like.
- for each network slice of the one or more network slices configured for the wireless device 2302 (e.g., UE), whether the wireless device (e.g., UE) is allowed to use (or register) the each network slice for dualsteer.

A dualsteer policy may indicate at least one of: that the slice A is allowed for dualsteer, slice C is not allowed for dualsteer. The slice A allowed for dualsteer may be that the wireless device 2302 (e.g., UE) is allowed to perform registrations (request) of the slice A over multiple access paths (or multiple 3GPP access paths). The multiple 3GPP access paths may comprise a second access path and/or a third access path. The wireless device 2302 (e.g., UE) may send a second registration request indicating the slice A via the second access path and/or the wireless device 2302 (e.g., UE) may send a third registration request indicating the slice A via the third access path because the wireless device 2302 (e.g., UE) is allowed for dualsteer for the slice A. The slice C not allowed for dualsteer may be that the wireless device (e.g., UE) is not allowed to perform registrations (request) of the slice C over multiple access paths. For example, the wireless device 2302 (e.g., UE) may not request registration of the slice C via the third access path if the wireless device 2302 (e.g., UE) registers the slice C via the second access path.

An AMF 1 2306 may send a NG MSG 2 2344 comprising the NAS MSG 2, to the RAN 1 2304. The RAN 2304 1 may send an RRC MSG 2 2324 (e.g., a second RRC message) to the wireless device 2302 (e.g., UE). The second RRC MSG 2 2324 may comprise the NAS MSG 2. The second RRC MSG 2 2324 may be a first DL RRC transport message.

A wireless device 2302 (e.g., UE) may store in its local memory, the dualsteer policy information. The wireless device 2302 (e.g., UE) may release a RRC connection with the RAN 1, may release a N1 connection with the AMF 1, and/or may deregister from the AMF 1.

A wireless device 2302 (e.g., UE) may determine to perform a first (initial, primary) registration. For example, if the wireless device 2302 (e.g., UE) is not registered with any access path of an access type (e.g., 3GPP access type), if the wireless device (e.g., UE) performs a registration procedure from a deregistered state, and/or the wireless device (e.g., UE) may perform the first registration.

A wireless device 2302 (e.g., UE), for the first registration, may determine one or more network slices to register. A registration of a network slice may be getting allowance (e.g., being allowed, authorized) to use the network slice. Getting allowance for the network slice may be that the wireless device 2302 (e.g., UE) is allowed to request a PDU session for the network slice. The wireless device 2302 (e.g., UE) may have one or more running applications. A QoS requirements of the one or more running applications may require use of the slice A and/or the slice C. The wireless device (e.g., UE) may determine to request the slice A and the slice C, via the first registration because the slice A and/or the slice C are required.

A wireless device 2302 (e.g., UE) may send to a RAN 2 2308 (a second NG-RAN, second base station/gNB, second 3GPP RAN), a third RRC message 2326 (e.g., RRC MSG 3, RRC message 3) via the second access path to request the slice A and the slice C. The second access path may be of the 3GPP access type, and/or may use the RAN 2 2308. The RRC MSG 3 2326 may be at least one of a third RRC setup complete message, a third RRC UL transport message, and/or the like. The RRC message 3 2326 may comprise at least one of a NAS message 3 (NAS MSG 3). The NAS MSG 3 2326 may be at least one of a third registration request message, a third service request message, a third UL NAS transport message, and/or the like. The NAS MSG 3 2326 may comprise at least one of the identifier of the wireless device 2302 (e.g., UE), the one or more capabilities of the wireless device 2302 (e.g., UE), a second list of requested network slices, and/or the like. The one or more capabilities of the wireless device 2302 (e.g., UE) may comprise the dualsteer capability indicator. The dualsteer capability indicator may indicate whether the wireless device 2302 (e.g., UE) supports the feature of dualsteer. The dualsteer capability indicator may indicate that the wireless device 2302 (e.g., UE) supports the feature of dualsteer. The second list of requested network slices may indicate at least one of the slice A and/or the slice C.

A RAN 2 2308 may receive the RRC MSG 3 2326. The RAN 2, based on (e.g., in response to) receiving the RRC MSG 3, may send a third NG MSG 2346 (NG MSG 3, NG message 3) to a AMF 2 2310. For example, the NG MSG 3 2346 may comprise the NAS MSG 3. The AMF 2 2310 may be the AMF 1 2306.

An AMF 2 2310 may receive from the RAN 2 2308, the NG MSG 3 2346. For example, the AMF 2 2310 may be of a first visiting network (VPLMN 1) and/or of the home network (HPLMN) of the wireless device 2302 (e.g., UE). The AMF 2, based on (e.g., in response to) receiving the NAS MSG 3 of the NG MSG 3 2346, may determine that the wireless device 2302 (e.g., UE) requests the first registration, that the wireless device 2302 (e.g., UE) is registering the second access path of the 3GPP access type, and/or that the wireless device 2302 (e.g., UE) requests a service (registration, allowance, use) of the slice A and/or the slice C.

An AMF 2 2310 may send to the RAN 2 2308, a NG MSG 4 2348. The NG MSG 4 2348 may comprise a NAS MSG 4 (NAS message 4) 2328. The NAS MSG 4 2328 may comprise at least one of a second list of allowed network slices, a second list of rejected network slices. The second list of allowed network slices may indicate one or more network slices that are allowed for the wireless device 2302 (e.g., UE) to use over the second access path. The second list of rejected network slices may indicate one or more network slices that are rejected (not allowed) for the wireless device 2302 (e.g., UE) to use over the second access path. The second list of the allowed network slices may comprise the slice A and/or the slice C. The AMF 2 may determine to allow the slice A and the slice C for the wireless device 2302 (e.g., UE) because the slice A and the slice C are allowed for the wireless device 2302 (e.g., UE) over the 3GPP access type, because the slice A and the slice C are allowed for the wireless device 2302 (e.g., UE) over the second access path, and/or because the slice A and the slice C are not yet registered (allowed) for the wireless device 2302 (e.g., UE) for other access paths,

A RAN 2 2308 may receive the NG MSG 4 2348. The RAN 2 2308 may send an RRC MSG 4 2328 (e.g., a fourth RRC message, RRC message 4) to the wireless device 2302 (e.g., UE). The RRC MSG 4 2328 may comprise the NAS MSG 4. The RRC MSG 4 may be a second DL RRC transport message.

A wireless device 2302 (e.g., UE) may receive the RRC MSG 4 and/or the NAS MSG 4. The wireless device (e.g., UE) may consider that the slice A and the slice C are allowed (for use, for registration) for the second access path, and/or that the slice A and the slice C are allowed for the 3GPP access type because the NAS MSG 4 is received over the second access path (of the 3GPP access type), and/or because the NAS MSG 4 indicates that the slice A and the slice C are allowed.

A wireless device 2302 (e.g., UE) may determine whether to perform a secondary (additional, multiple, dualsteer, second, subsequent) registration. The wireless device 2302 (e.g., UE) may determine to perform a registration for the slice A via the third access path because the wireless device 2302 (e.g., UE) supports the feature of the dualsteer, because a third access path is available, because the second access path is registered for the wireless device 2302 (e.g., UE), because the dualsteer policy allows the wireless device 2302 (e.g., UE) to perform dual (multiple, additional) registration via multiple access paths (of an access type), and/or because the dualsteer policy indicates that the slice A is allowed for dualsteer. The wireless device 2302 (e.g., UE) may determine to perform a registration procedure without requesting the slice C, via the third access path because the wireless device 2302 (e.g., UE) supports the feature of the dualsteer, because the third access path is available, because the second access path is registered for the wireless device 2302 (e.g., UE), because the dualsteer policy allows the wireless device 2302 (e.g., UE) to perform dual (multiple, additional) registration via multiple access paths (of an access type), and/or because the dualsteer policy indicates that the slice C is not allowed for dualsteer. The third access path and/or the second access path may be of the same access type.

A wireless device 2302 (e.g., UE), for the secondary registration, may determine one or more network slices to register. The wireless device (e.g., UE) may consider e.g., a QoS requirements of the one or more running applications, the dualsteer policy, one or more allowed (registered) slices via the second access path, and/or the like to determine the one or more network slices to register. The one or more running applications may request the slice A and/or the slice C. The dualsteer policy may indicate that the slice A is allowed for the dualsteer, and/or that the slice C is not allowed for the dualsteer. The wireless device 2302 (e.g., UE) may determine that the slice A and/or the slice C are allowed via the second access path. The wireless device 2302 (e.g., UE) may determine to request the slice A via the third access path because the slice A is allowed for dualsteer, because the slice A is allowed via the second access path, and/or because the wireless device 2302 (e.g., UE) registers additional access path (e.g., the third access path). The wireless device 2302 (e.g., UE) may determine not to request the slice C via the third access path because the slice C is not allowed for dualsteer, because the slice C is allowed via the second access path, and/or because the wireless device (e.g., UE) 2302 registers additional access path (e.g., the third access path).

A wireless device 2302 (e.g., UE), based on the determination, may send to a RAN 3 2304 (a third NG-RAN, a third base station/gNB), a fifth RRC message 2330 (e.g., RRC MSG 5, RRC message 5) via the third access path. The third access path may be of the 3GPP access type, and/or may use the RAN 3 2304. The RRC MSG 5 2330 may be at least one of a fifth RRC Setup complete message, a fifth RRC UL transport message, and/or the like. The RRC message 5 may comprise at least one of a NAS message 5 2330 (NAS MSG 5). The NAS MSG 5 2330 may be at least one of a fifth registration request message, a fifth service request message, a fifth UL NAS transport message, and/or the like. The NAS MSG 5 2330 may comprise at least one of the identifier of the wireless device 2302 (e.g., UE), the one or more capabilities of the wireless device 2302 (e.g., UE), a third list of requested network slices, and/or the like. The one or more capabilities of the wireless device 2302 (e.g., UE) may comprise a dualsteer capability indicator. The dualsteer capability indicator may indicate whether the wireless device 2302 (e.g., UE) supports a feature of dualsteer. The dualsteer capability indicator may indicate that the wireless device 2302 (e.g., UE) supports the feature of dualsteer. The third list of requested network slices may indicate one or more network slices that the wireless device 2302 (e.g., UE) requests registration (use) via the third access path. The third list of requested network slices may indicate at least the slice A and/or may not indicate the slice C.

A RAN 3 2312 may receive the RRC MSG 5 2330. The RAN 3 2312, based on (e.g., in response to) receiving the RRC MSG 5 2330, may send a fifth NG MSG 2350 (NG MSG 5, NG message 5) to a AMF 3 2314. The NG MSG 5 2350 may comprise the NAS MSG 5. The AMF 3 2314 may be the AMF 2 2310 and/or the AMF 1 2306.

An AMF 3 2314 may receive from the RAN 3 2312, and via the third access path, the NG MSG 5 2350. The AMF 3 2314 may be of a second visiting network (VPLMN 2), the first visiting network and/or of the home network of the wireless device 2302 (e.g., UE). The AMF 3 2314, based on (e.g., in response to) receiving the NAS MSG 5 of the NG MSG 5 2350, may determine that the wireless device 2302 (e.g., UE) requests the secondary registration, that the wireless device 2302 (e.g., UE) is registering the third access path of the 3GPP access type, and/or that the wireless device 2302 (e.g., UE) requests a service (registration, allowance, use) of the slice A via the third access path.

An AMF 3 2314 may send to the RAN 3 2312, a NG MSG 6 2352 (e.g., NG message 6). The NG MSG 6 2352 may comprise a NAS MSG 6 2332 (NAS message 6). The NAS MSG 6 2332 may comprise at least one of a third list of allowed network slices, a third list of rejected network slices, an identifier of the third access path. The third list of allowed network slices may indicate one or more network slices that are allowed for the wireless device 2302 (e.g., UE) to use over the third access path and/or may indicate one or more network slices that are allowed for the wireless device 2302 (e.g., UE) to use over the access type of the third access path. The third list of rejected network slices may indicate one or more network slices that are rejected (not allowed) for the wireless device 2302 (e.g., UE) to use over the third access path and/or may indicate one or more network slices that are rejected (not allowed) for the wireless device 2302 (e.g., UE) to use over the access type of the third access path. The third list of the allowed network slices may comprise the slice A and/or the slice C. The AMF 3 2306 may determine to allow the slice A and/or the slice C, for the wireless device/UE (e.g., the third list of allowed network slices comprises the slice A and/or the slice C), because the slice A and the slice C are allowed for the wireless device 2306 (e.g., UE) over the 3GPP access type, because the slice A and the slice C are allowed for the wireless device 2306 (e.g., UE) over the second access path, and/or because the third list of requested network slice is received via third access path. The AMF 3 2306 may determine to allow the slice A for the third access path, and/or may determine to not allow the slice C for the third access path (e.g., the third list of allowed network slices comprises the slice A and/or not comprise the slice C) because the slice A and the slice C are allowed for the wireless device (e.g., UE) over the 3GPP access type, because the slice A and the slice C are allowed for the wireless device (e.g., UE) over the second access path, because the third list of requested network slice is received via third access path, and/or because the slice C is not allowed for the third access path.

A RAN 3 2314 may receive the NG MSG 6 2352. The RAN 3 may send an RRC MSG 6 2332 (e.g., a sixth RRC message, RRC message 6) to the wireless device 2302 (e.g., UE). The RRC MSG 6 2332 may comprise the NAS MSG 6. The RRC MSG 6 2332 may be a third DL RRC transport message.

A wireless device 2302 (e.g., UE) may receive the RRC MSG 6 2332 and/or the NAS MSG 6. The wireless device 2302 (e.g., UE) may consider that the slice A is allowed (for use, for registration) for the third access path, that the slice A is allowed for the 3GPP access type because the NAS MSG 6 is received over the third access path (of the 3GPP access type), and/or because the NAS MSG 6 indicates that the slice A is allowed,

A wireless device (e.g., UE) may send one or more PDU session establishment requests for the slice A via the second access path and/or the third access path because the slice A is registered (allowed) via the second access path and/or the third access path. The wireless device (e.g., UE) may send a first PDU session establishment request for the slice C via the second access path and/or may not send a second PDU session establishment request for the slice C via the third access path because the slice C is registered (allowed) via the second access path and/or is rejected (not registered, not allowed) by the third access path.

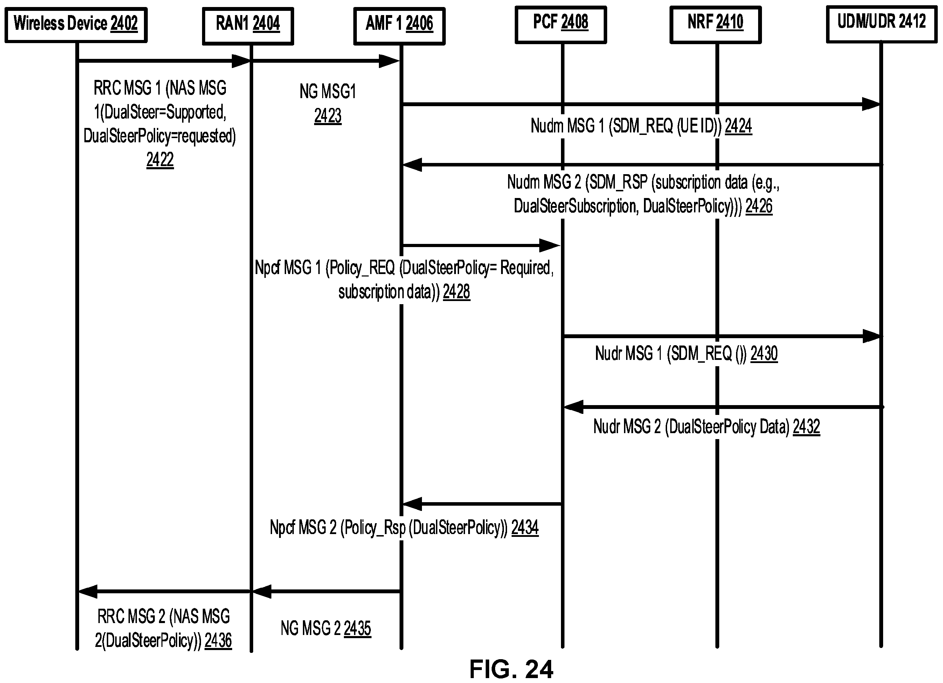

FIG. 24 shows an example of a first core network node delivering a dualsteer policy relevant to a wireless device. As shown in the example of FIG. 23, a first core network node (e.g., a AMF, an UDM, a PCF, and/or the like) may deliver a dualsteer policy to a wireless device (e.g., UE). Reverting back to FIG. 24, the first core network entity may receive from a second core network entity, the dualsteer policy. This may help the first core network node to deliver the dualsteer policy relevant to the wireless device (e.g., UE). For brevity, based on the other part of the present disclosure, redundant details will be omitted.

A wireless device 2402 (e.g., UE) may send the RRC MSG 1 2422 to the first RAN 2404. The RRC message 1 2422 may comprise the NAS MSG 1. The NAS MSG 1 may comprise a dualsteer policy request indication. The dualsteer policy request indication may indicate whether the wireless device (e.g., UE) request the dualsteer policy. The wireless device (e.g., UE) may send the dualsteer policy request indication if the wireless device (e.g., UE) supports the feature of dualsteer, and/or if the wireless device (e.g., UE) does not have the dualsteer policy stored in its memory. The wireless device (e.g., UE) may not indicate the dualsteer policy request indication via the NAS MSG 1 if the wireless device (e.g., UE) does not support the feature of dualsteer, and/or if the wireless device (e.g., UE) does not need the dualsteer policy. The dualsteer policy request indication may be a wireless device (e.g., UE) policy container. The dualsteer policy request indication may comprise one or more policy section identifiers that are stored in the wireless device 2402 (e.g., UE). The one or more policies may have one or more associated policy section identifiers (e.g., a first section identifier, a second section identifier) if the wireless device 2402 (e.g., UE) has stored one or more policies (or, one or more policy sections) (e.g., a first policy, a second policy). The AMF 2406 (or the PCF), based on the one or more policy section identifiers received from the wireless device 2402 (e.g., UE), may be able to determine which one or more policy sections the wireless device 2402 (e.g., UE) has. The first policy may be associated with the dualsteer policy. The AMF 2406 (or the PCF 2408) may determine that the wireless device (e.g., UE) does not have the dualsteer policy if the request message from the wireless device (e.g., UE) does not comprise the first section identifier (of the first policy). The wireless device 2402 (e.g., UE) may be requesting the dualsteer policy, the AMF 2404 (or PCF 2408) may determine that the wireless device (e.g., UE) is requesting the policy for dualsteer, and/or the AMF 2406 (or the PCF 2408) may determine to send to the wireless device 2402 (e.g., UE), the dualsteer policy, if the request message from the wireless device 2402 (e.g., UE) does not comprise the first section identifier, and/or the request message indicates that the wireless device 2402 (e.g., UE) supports the feature of dualsteer,

An AMF 1 2406 may receive from the RAN 1 2404, the NG MSG 1 2423 comprising the NAS MSG 1. The AMF 2406 may determine to construct the dualsteer policy information and/or to fetch the dualsteer policy information because the dualsteer policy request indication indicates that the wireless device (e.g., UE) requests the dualsteer policy and/or because the wireless device (e.g., UE) indicates the support of the feature of the dualsteer,

An AMF 1 2406 may send a Network Unified Data Management (Nudm) MSG 1 2424 (e.g., Nudm message 1) to a UDM 2412. For example, the Nudm MSG 1 2424 may be Nudm_SDM_Get request message and/or the like. The Nudm MSG 1 2424 may comprise an identifier of the wireless device (e.g., UE) and/or a request requesting information (e.g., a subscription data, a policy data) associated with the dualsteer. The identifier of the wireless device 2402 (e.g., UE) may be a SUCI, a SUPI, a PEI, an IMSI, and/or the like.

A UDM 2412 may receive the Nudm MSG 1 2424. The UDM 2412, based on (e.g., in response to) receiving the Nudm MSG 1 2424, may send a Nudm MSG 2 2426 (e.g., Nudm message 2). The Nudm MSG 2 2426 may be Nudm_SDM _Get response message and/or the like. The Nudm MSG 2 2426 may comprise at least one of a subscription data of the wireless device (e.g., UE). The subscription data of the wireless device (e.g., UE) may comprise at least of a dualsteer subscription data, the dualsteer policy data. The dualsteer subscription data may be the dualsteer policy data. The dualsteer subscription data may indicate whether the wireless device (e.g., UE) is allowed to use the feature of dualsteer, one or more configuration data associated with the dualsteer. The one or more configuration data associated with the dualsteer may indicate one or more first network slices allowed for dualsteer, one or more second network slices not allowed for dualsteer, one or more conditions with which the one or more network slices are allowed for dualsteer, and/or the like. The subscription data of the wireless device 2402 (e.g., UE) may comprise one or more policy section identifiers (associated with the dualsteer) for the wireless device 2402 (e.g., UE).

An AMF 1 2406 may receive the Nudm MSG 2 2426. The AMF 1 2406 may send a Network Policy Control Function (Npcf) MSG 1 2428 (e.g., Npcf message 1) to a PCF 2408. The Npcf MSG 1 2428 may be a Npcf_AMPolicyControl_Create request message, Npcf_UEPolicyControl_Create request message, Namd_Communication_N1MessageNotify request message and/or the like. The Npcf MSG 1 2428 may comprise at least one of the identifier of the wireless device 2402 (e.g., UE), the Dualsteer subscription data, an (capability) indication that the wireless device (e.g., UE) supports the feature of dualsteer, the dualsteer policy request indication, one or more PSIs (policy section indicator), wireless device (e.g., UE) policy container and/or the like. The wireless device (e.g., UE) policy container may comprise the dualsteer policy request indication and/or one or more policy section identifiers. The NAS MSG 1 may comprise the wireless device (e.g., UE) policy container. The one or more PSIs may indicate whether the wireless device 2402 (e.g., UE) has the dualsteer policy information or not, and/or may indicate that the wireless device 2402 (e.g., UE) requests the dualsteer policy.

A PCF 2408 may receive the Npcf MSG 1. The PCF 2408, based on (e.g., in response to) receiving the Npcf MSG 1, may send a Network Unified Data Repository (Nudr) MSG 1 2430 (e.g., Nudr message 1) to a UDR 2412, to fetch a policy subscription data. The UDR 2412 may send a Nudr MSG 2 2432 to the PCF 2408. The Nudm MSG 2 2432 may comprise the policy subscription data. The policy subscription data may comprise the dualsteer policy subscription data. The PCF, based on the Npcf MSG 1 2428 and/or the Nudr MSG 2 2432, may determine a policy for the wireless device 2402 (e.g., UE). The policy for the wireless device 2402 (e.g., UE) may comprise the dualsteer policy information. The PCF 2408 may send to the AMF 1 2406, an Npcf MSG 2 2434 (e.g., a Npcf message 2). The PCF 2408 may determine whether to deliver the dualsteer policy information to the wireless device 2402 (e.g., UE) or not, based on whether the wireless device 2402 (e.g., UE) supports the feature of dual steer and/or based on whether the dualsteer policy is requested. The PCF 2408 may determine not to send the dual policy information to the wireless device (e.g., UE) via the AMF, if the wireless device (e.g., UE) does not indicate that the wireless device (e.g., UE) supports the feature of dualsteer, if the wireless device (e.g., UE) does not request the dualsteer policy information, and/or if the Npcf MSG 1 does not indicate that the wireless device (e.g., UE) supports the feature of dualsteer. The PCF 2408 may determine to send the dual policy information to the wireless device 2402 (e.g., UE) via the AMF 2406, if the wireless device 2402 (e.g., UE) indicates that the wireless device 2402 (e.g., UE) supports the feature of dualsteer, if the wireless device 2402 (e.g., UE) requests the dualsteer policy information, if the one or more policy section identifiers (PSIs) sent by the wireless device 2402 (e.g., UE) are not associated with the dualsteer, and/or if the Npcf MSG 1 2428 indicates that the wireless device 2402 (e.g., UE) supports the feature of dualsteer. The Npcf MSG 2 2434 may comprise the dualsteer policy information and/or a policy container. The policy container may comprise the dualsteer policy information. The Npcf MSG 2 2434 may be at least one of the Npcf_AMPolicyControl_Create response message, Npcf_UEPolicyControl_Create response message, Namd_Communication_N1N2MessageTransfer request message and/or the like.

AN AMF 1 2406 may receive the Npcf MSG 2 2434. The AMF 1 2406 may send the NAS MSG 2 2436 to the wireless device 2402 (e.g., UE). The NAS MSG 2 2436 may comprise the dualsteer policy and/or the policy container. The AMF 1 2406, based on (e.g., in response to) the Npcf MSG 2 2434 and/or Nudm MSG 2 2426, may get the dualsteer policy and/or the policy container (e.g., the wireless device/UE policy container) comprising the dualsteer policy.

An AMF 1 2406 may send the NG MSG 2 2435 comprising the NAS MSG 2, to the RAN 1 2406. The RAN 1 2406 may send the RRC MSG 2 2436 to the wireless device 2402 (e.g., UE). The second RRC MSG 2 2436 may comprise the NAS MSG 2. The NAS MSG 2 may comprise the dualsteer policy.

A wireless device 2402 (e.g., UE) may store in its local memory, the dualsteer policy information. The dualsteer policy information may be the policy container.

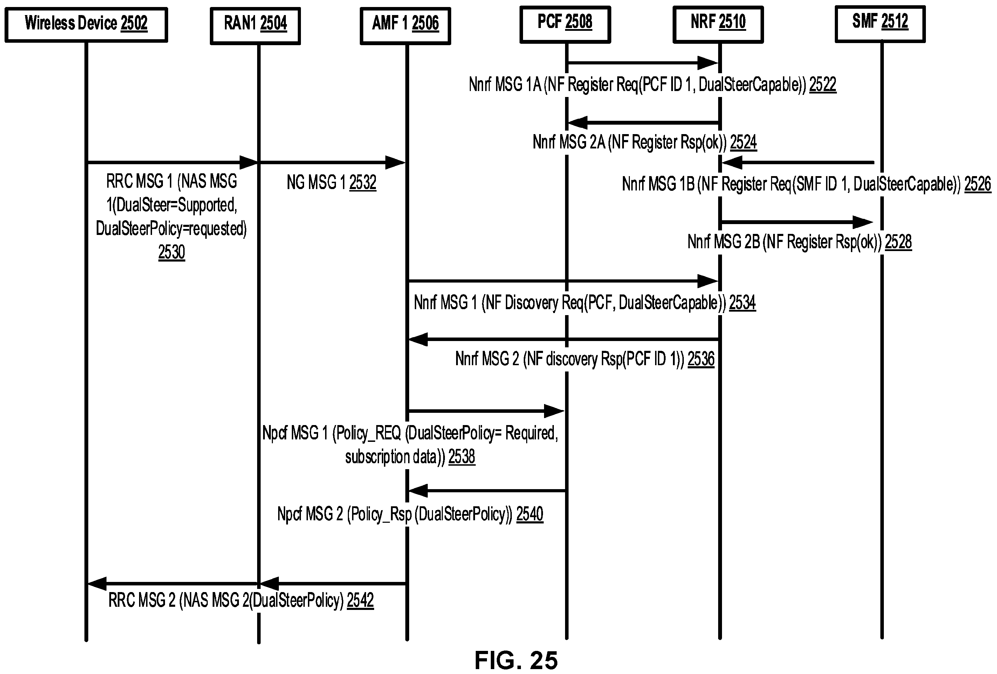

FIG. 25 shows an example of assisting a first core network node to fetch a dualsteer policy information from one or more second core network nodes. One or more second core network nodes (e.g., a PCF 2508, a SMF 2512, and/or the like) may register to an NRF 2510. This may assist a first core network node (e.g., a AMF 2506) to fetch a dualsteer policy information from the second core network nodes. For brevity, based on the other part of the present disclosure, redundant details will be omitted.

A PCF 2508 (e.g., PCF 1) may send a Nnrf MSG 1A message 2522 (e.g., Nnrf service request, NF registration request) to the NRF 2510, for registration of the PCF 2508. The PCF 2508 may register the PCF 2508 to the NRF 2510, to provide one or more PCF services to one or more network nodes. The Nnrf MSG 1A 2522 message may be a first Nnrf_NFManagement_NFRegister request message. The Nnrf MSG 1A 2522 message may comprise at least one of a first type of network node, a first instance ID, a first IP address, one or more first supported services, and so on. The first type of network node may indicate that a type of the network node is PCF 2508. The first instance ID may indicate an identity of the PCF 2508 (e.g., PCF ID 1). The one or more first supported services may indicate one or more first services provided by the PCF 2508 and/or one or more first capabilities of the PCF 2508. The one or more first capabilities may indicate that the PCF 2508 supports the feature of dualsteer. The one or more first supported services, based on that the PCF supports the feature of dualsteer, may indicate that the PCF 2508 supports the feature of dualsteer. The NRF 2510 may receive the Nnrf MSG 1A 2522 message, and/or may store the information delivered by the Nnrf MSG 1A 2522 message. The NRF 2510, based on (e.g., in response to) the received Nnrf MSG 1A 2522 message, may send to the PCF 2508, a Nnrf MSG 2A 2524 message (e.g., Nnrf_NFManagement_NFRegister response message) indicating successful registration of the PCF 2508. The PCF 2508 may receive the Nnrf MSG 2A 2524.

A SMF 2512 (e.g., SMF 1) may send a Nnrf MSG 1B message 2526 (e.g., Nnrf service request, NF registration request) to the NRF 2510, for registration of the SMF 2512. The SMF 2512 may register the SMF 2512 to the NRF 2510, to provide one or more second SMF 2512 services to one or more network nodes. The Nnrf MSG 1B message 2526 may be a second Nnrf_NFManagement_NFRegister request message. The Nnrf MSG 1B message 2526 may comprise at least one of a second type of network node, a second instance ID, a second IP address, one or more second supported services, and so on. The second type of network node may indicate that a type of the network node is SMF 2512. The second instance ID may indicate an identity of the SMF 2512 (e.g., SMF ID 1). The second one or more supported services may indicate one or more second services provided by the SMF 2512 and/or one or more second capabilities of the SMF 2512. The one or more second capabilities may indicate that the SMF 2512 supports the feature of dualsteer. The one or more second supported services, based on that the SMF supports the feature of dualsteer, may indicate that the SMF 2512 supports the feature of dualsteer. The NRF 2510 may receive the Nnrf MSG 1B message 2526, and/or may store the information delivered by the Nnrf MSG 1B message 2526. The NRF 2510, based on (e.g., in response to) the received Nnrf MSG 1B message 2526, may send to the SMF, a Nnrf MSG 2B message 2528 (e.g., Nnrf_NFManagement_NFRegister response message) indicating successful registration of the SMF 2512. The SMF 2512 may receive the Nnrf MSG 2B 2528.

A wireless device 2502 (e.g., UE) may send the RRC MSG 1 2530 to the first RAN 2504. The RRC message 1 2530 may comprise the NAS MSG 1. The NAS MSG 1 may comprise a dualsteer policy request indication and/or may indicate that the wireless device 2502 (e.g., UE) supports the feature of dualsteer.

An AMF 1 2506 may receive from the RAN 1 2504, the NG MSG 1 2532 comprising the NAS MSG 1. The AMF 2506 may determine to construct the dualsteer policy information and/or to fetch the dualsteer policy information.

An AMF 1 2506 may send a Nnrf MSG 1 message 2534 (e.g., Nnrf_NFDiscovery Request message), to the NRF 2510. The AMF 1 2506 may send the Nnrf MSG 1 2534 because the wireless device 2502 (e.g., UE) requests the dualsteer policy and/or because the wireless device 2502 (e.g., UE) supports the feature of the dualsteer. The Nnrf MSG 1 2534 may indicate that an information of a PCF 2508 supporting the dualsteer is requested. The Nnrf MSG 1 2534 may indicate that a type of the target network node is PCF 2508 and/or that the target network node supports the feature of the dualsteer.

A NRF 2510 may receive the Nnrf MSG 1 message 2534. The NRF, based on (e.g., in response to) receiving the Nnrf MSG 1 message 2534, may send a Nnrf MSG 2 message 2536 to the AMF 2506. The Nnrf MSG 2 message 2536 may be Nnrf_NFDiscovery Response message. The Nnrf MSG 2 2536 message may comprise information of one or more PCFs (e.g., the PCF, the PCF 1) supporting the feature of the dualsteer because the Nnrf MSG 1 2534 requests information of the PCF 2508 supporting the feature of dualsteer. The NRF 2510 may use stored information, to determine which PCFs support the feature of dualsteer. The information of the one or more PCFs may indicate the IP address of the PCF (e.g., PCF 1), an identifier of the PCF, the one or more first capabilities of the PCF, the one or more first supported services, and/or the like.

The AMF 2506 may receive the Nnrf MSG 2 2536. The AMF 2506 may send the Npcf MSG 1 message 2538, to the PCF. The AMF may receive the Npcf MSG 2 message 2540, from the PCF 2508 because the Nnrf MSG 2 message 2540 comprises the information of the PCF (e.g., the PCF supporting the feature of dualsteer) and/or because the wireless device 2502 (e.g., UE) is requesting the dualsteer policy,

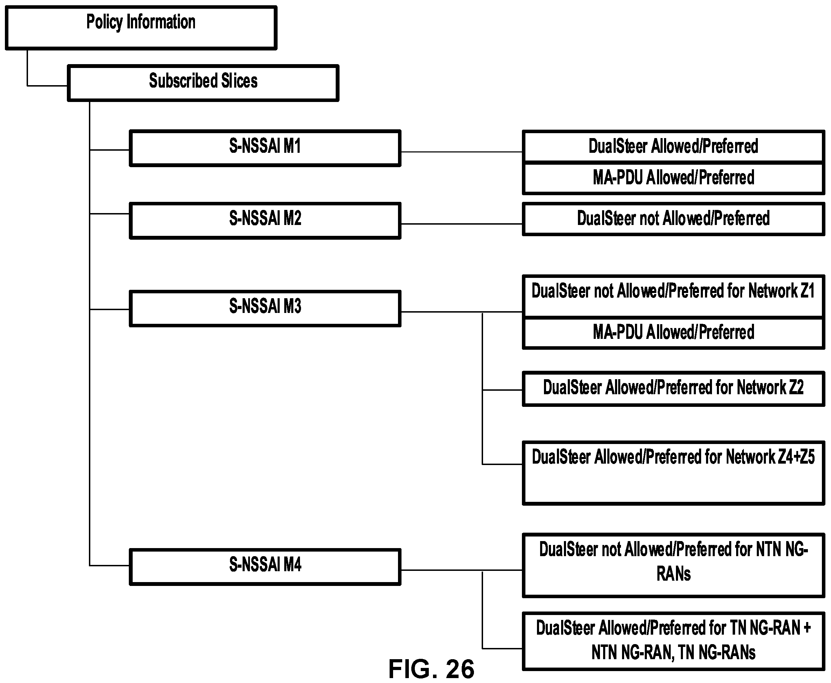

FIG. 26 shows an example of assisting a wireless device to determine when to request and/or register a network slice over one or more access paths. A policy information (e.g., dualsteer policy, a policy comprising the dualsteer policy, and/or the like) may comprise information of one or more network slices and/or one or more configuration for dualsteer. This may assist a wireless device (e.g., UE) to determine when to request, register a network slice over one or more access paths. For brevity, based on the other part of the present disclosure, redundant details will be omitted.

A policy information may comprise information of one or more network slices subscribed by the wireless device (e.g., UE). The policy information may be the dualsteer policy information and/or may comprise the dualsteer policy information.

A policy information may be a URSP and/or the like. The policy information may indicate the one or more network slices. The policy information may indicate one or more identifiers (e.g., NSSAI, S-NSSAI) of the one or more network slices. The one or more identifiers may be S-NSSAI M1, S-NSSAI M2, S-NSSAI M3, S-NSSAI M4, and/or the like.

A policy information, for each network slice of the policy information, may indicate one or more indications. For example, the one or more indications may indicate at least one of:
- Dualsteer preference (configuration): This may indicate whether the each network slice is allowed (preferred) for registration of dualsteer. The each network slice is allowed for registration over more than one access paths of an access type if the each network slice is allowed for registration of dualsteer. The each network slice is not allowed for registration over more than one access paths of the access type and/or the each network slice is allowed for registration up to one access path of the access type if the each network slice is not allowed for registration of dualsteer,
- MA PDU session preference (configuration): This may indicate whether the each network slice is allowed (preferred) for MA-PDU session, whether a PDU session for each network slice is allowed to use more than one 3GPP access paths and a non-3GPP (N3GPP) access path, and/or whether the each network slice is allowed for registration using a 3GPP access type and a non-3GPP (N3GPP) access type. The each network slice may be allowed for registration over the 3GPP access type, if the each network slice is allowed for registration of MA-PDU session, if the wireless device (e.g., UE) is registered over the N3GPP access type, and/or if the each network slice is allowed for registration more than one access types. The each network slice is not allowed for registration over the N3GPP access type, if the each network slice is not allowed for registration of MA-PDU session, if the wireless device (e.g., UE) is registered over the 3GPP access type, and/or if the each network slice is allowed for registration up to one access type.

A dualsteer preference, for the S-NSSAI M1, may indicate that the S-NSSAI M1 is allowed for dualsteer and/or the MA-PDU session preference may indicate that MA-PDU session is allowed for the S-NSSAI M1. A wireless device (e.g., UE), based on the dualsteer preference, may perform registration over the 3GPP access type and/or the N3GPP access type, for the S-NSSAI M1. The wireless device (e.g., UE) may perform additional (simultaneous, concurrent, dual, and/or the like) registration over the N3GPP access type if the wireless device (e.g., UE) is registered over the 3GPP access type. The wireless device (e.g., UE) may be registered for the N3GPP access type and for the 3GPP access type, for the S-NSSAI M1. The wireless device (e.g., UE), based on the dualsteer preference, may perform registration for a second 3GPP access path (e.g., the second access path) and/or a third 3GPP access path (e.g., the third access path), for the S-NSSAI M1. The wireless device (e.g., UE), based on the dualsteer preference, may perform registration for the third 3GPP access path while the wireless device (e.g., UE) is registered (keep being registered) for the second 3GPP access path, for the S-NSSAI M1. The wireless device (e.g., UE), based on the dualsteer preference, may be (simultaneously, concurrently) registered over more than 3GPP access paths (e.g., the second access path and/or the third access path) and/or over N3GPP access type, for the S-NSSAI M1.

A dualsteer preference, for the S-NSSAI M2, may indicate that the S-NSSAI M2 is not allowed for dualsteer. The wireless device (e.g., UE), based on the dualsteer preference, may not perform additional registration for the third 3GPP access path if the wireless device (e.g., UE) is registered for the second access path, for the S-NSSAI M2. The wireless device (e.g., UE), based on the dualsteer preference, may switch from registration for the second 3GPP access path to the registration to the third access path, for the S-NSSAI M2. The wireless device (e.g., UE), based on the dualsteer preference, may not be (simultaneously, concurrently) registered over the second access path and the third access path, for the S-NSSAI M2.

A dualsteer preference, for the S-NSSAI M3, may comprise one or first more conditions. The one or more first conditions may indicate one or more first-type networks allowed for dualsteer and/or one or more second-type networks not allowed for dualsteer. The dualsteer preference may indicate that the S-NSSAI M3 is allowed for dualsteer for the one or more first-type networks (e.g., network Z2, network Z4, network Z5). The dualsteer preference may indicate that the S-NSSAI M3 is not allowed for dualsteer for the one or more second-type networks (e.g., network Z1). The MA-PDU session preference may indicate that MA-PDU session is allowed for the S-NSSAI M3 for the network Z1. A wireless device (e.g., UE), based on the dualsteer preference, may perform registration over the 3GPP access type and/or the N3GPP access type, for the S-NSSAI M3, if the wireless device (e.g., UE) accesses the network Z1. The wireless device (e.g., UE) may perform additional (simultaneous, concurrent, dual, and/or the like) registration over the third access path of the access type (e.g., 3GPP access type) if the wireless device (e.g., UE) is registered over the second access path of the 3GPP access type, for the S-NSSAI M3, if the wireless device (e.g., UE) access the one or more first-type networks (e.g., if the wireless device (e.g., UE) access the network Z2, and/or if the wireless device (e.g., UE) access the network Z4 and Z5). The wireless device (e.g., UE) may behave similar to the case of S-NSSAI M1 if the wireless device (e.g., UE) accesses the one or more first-type networks for the S-NSSAI M3. The wireless device (e.g., UE) may behave similar to the case of S-NSSAI M2 if the wireless device (e.g., UE) accesses the one or more second-type networks (e.g., the network Z1) for the S-NSSAI M3.

A dualsteer preference, for the S-NSSAI M4, may comprise one or more second conditions. The one or more second conditions may indicate one or more first-type radio accesses (and/or combination thereof) allowed for dualsteer and/or one or more second-type radio accesses (and/or combination thereof) not allowed for dualsteer. The dualsteer preference may indicate that the S-NSSAI M4 is allowed for dualsteer for the one or more first-type radio accesses (e.g., using a first RAN-type (e.g., TN (terrestrial) NG-RAN(s))), a combination of the first RAN type and a second RAN-type (e.g., NTN (non-terrestrial) NG-RAN(s))). The dualsteer preference may indicate that the S-NSSAI M4 is not allowed for dualsteer for the one or more second-type radio accesses (e.g., the second RAN-type (e.g., NTN NG-RAN(s)). A wireless device (e.g., UE), based on the dualsteer preference, may perform registration over the second access path of the 3GPP access type and/or third access path of the 3GPP access type, for the S-NSSAI M4, if the second access path is over NTN NG-RAN and/or if the third access path is over TN NG-RAN. The wireless device (e.g., UE) may not perform additional (simultaneous, concurrent, dual, and/or the like) registration over a second NTN NG-RAN if the wireless device (e.g., UE) is already registered over a first NTN NG-RAN, for the S-NSSAI M4. The wireless device (e.g., UE) may behave similar to the case of S-NSSAI M1 if the wireless device (e.g., UE) accesses the one or more first-type radio accesses for the S-NSSAI M4. The wireless device (e.g., UE) may behave similar to the case of S-NSSAI M2 if the wireless device (e.g., UE) accesses the one or more second-type radio access for the S-NSSAI M4.

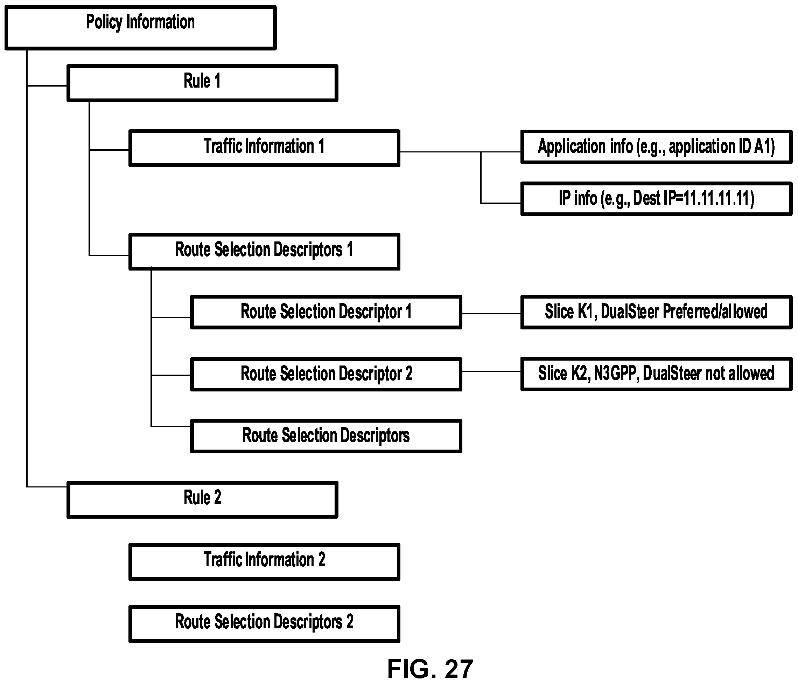

FIG. 27 shows an example of dualsteer policy information. A policy information (e.g., dualsteer policy, a policy comprising the dualsteer policy, and/or the like) may comprise information indicating which service data flow may use resources over more than one access paths of an access type. The policy information may indicate which service data flow may use the feature of the dualsteer. This may assist a wireless device (e.g., UE) to determine when to request a PDU session over one or more access paths of the access type. For brevity, based on the other part of the present disclosure, redundant details will be omitted.

A policy information may comprise information of one or more service data flows. The policy information may be the dualsteer policy information and/or may comprise the dualsteer policy information.

A policy information may comprise one or more rules (e.g., rule 1, rule 2). The rule may indicate how the wireless device (e.g., UE) sends a data. The rule may comprise traffic information and/or a route selection description. The traffic information may comprise information on how to detect a traffic (or the traffic of a service data flow, the service data flow) matching the rule. The traffic information may indicate an application associated with the service data flow, an identifier for the application, a description of the service data flow, and/or the like. The description of the service data flow may indicate at least one of a source IP address, a target IP address, and/or the like. The route selection description may indicate one or more parameters used for the delivery of the traffic if the traffic matches the traffic information. The route selection description may indicate one or more network slices, and/or the dualsteer preference.

A rule 1 may comprise a first traffic information (traffic information 1) and/or one or more first route selection descriptors (e.g., route selection descriptions, route selection descriptor 1/ 2/ 3). The first traffic information may indicate a first application information and/or a first IP information, indicating for which the matching traffic the rule 1 applies. The first application information may indicate a first application identifier (e.g., application ID A1) for which the rule 1 applies. The first IP information may indicate a first IP address (e.g., first source IP address, first destination IP address, e.g., 11.11.11.11) for which the rule 1 applies. The route selection description 1 may indicate a network slice K1 over which the wireless device (e.g., UE) needs to use to send/ receive a matching traffic indicated by the first traffic information. The route selection description 1 may indicate a first dualsteer preference (e.g., dualsteer preferred/allowed) which the wireless device (e.g., UE) applies to send/receive the matching traffic indicated by the first traffic information. The wireless device (e.g., UE) may register simultaneously over more than one 3GPP access paths, the wireless device (e.g., UE) may register a network slice K1 simultaneously over more than one 3GPP access paths, the wireless device (e.g., UE) may establish a PDU session using simultaneously resources over more than one 3GPP access paths (e.g., via the network slice K1), and/or the wireless device (e.g., UE) may use the PDU session established using more than 3GPP access paths, for the first data traffic if the route selection description 1 indicates that dualsteer is preferred, and/or if the wireless device (e.g., UE) detects a first data traffic (e.g., destination IP=11.11.11.11) matching the traffic information 1. The route selection description 2 may indicate a second dualsteer preference (e.g., dualsteer not preferred/allowed) which the wireless device (e.g., UE) applies to send/receive the matching traffic indicated by the first traffic information. The wireless device (e.g., UE) may not register simultaneously over more than one 3GPP access paths, the wireless device (e.g., UE) may not register a network slice K2 simultaneously over more than one 3GPP access paths, the wireless device (e.g., UE) may not establish a PDU session (e.g., via the network slice K2) using simultaneously resources over more than one 3GPP access paths, and/or the wireless device (e.g., UE) may not use the PDU session established using more than 3GPP access paths (e.g., via the network slice K2), for the first data traffic, if the route selection description 2 indicates that dualsteer is not preferred/allowed, and/or if the wireless device (e.g., UE) detects a first data traffic (e.g., destination IP=11.11.11.11) matching the traffic information 1.

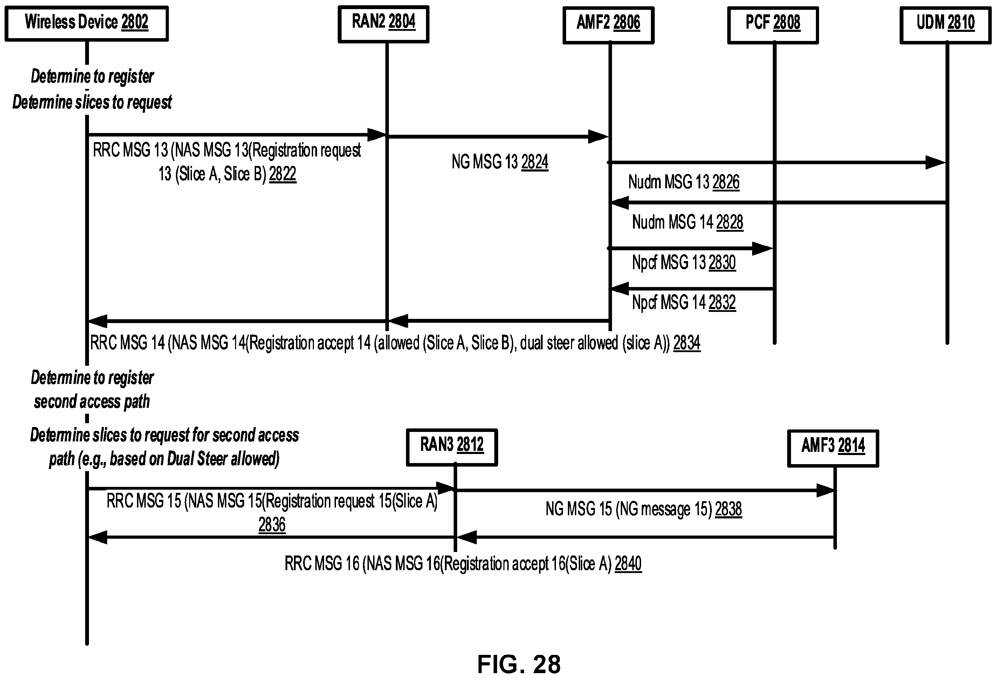

FIG. 28 shows an example of a wireless device using configuration information. A wireless device 2802 (e.g., UE) may perform a first (initial, primary) registration to a second network (e.g., a first visiting network, VPLMN 1). The second network may send a configuration information indicating one or more network slices allowed for dualsteer. This may assist a wireless device 2802 (e.g., UE) to determine which slice to request in an additional (multiple, secondary, subsequent) registration request. For brevity, based on the other part of the present disclosure, redundant details will be omitted.

A wireless device 2802 (e.g., UE) may send a RRC message 13 2822 (RRC MSG 13) to a second RAN 2804 (e.g., a RAN 2, a second base station/gNB, and/or the like). The RRC message 13 2822 may be at least one of a thirteenth RRC setup complete message, a thirteenth RRC UL transport message, and/or the like. The RRC message 13 2822 may comprise at least one of a NAS message 13 (NAS MSG 13). The NAS MSG 13 may be at least one of a thirteenth registration request message, a thirteenth service request message, a thirteenth UL NAS transport message, and/or the like. The NAS MSG 13 may comprise at least one of an identifier of the wireless device 2802 (e.g., UE), one or more capabilities of the wireless device 2802 (e.g., UE), an indication of dualsteer registration, a request for dualsteer registration, a support of the dualsteer, and/or the like.

The RAN 2 2804 may receive the RRC MSG 13 2822. The RAN 2, based on (e.g., in response to) receiving the RRC MSG 13 2822, may send a thirteenth NG MSG 2824 (NG MSG 13) to a AMF 2 2806. The NG MSG 13 2824 may comprise the NAS MSG 13.

A AMF 2 2806 may receive, from the RAN 2 2804, the NG MSG 13 2824. For example, the AMF 2 2806 may be of a home network of the wireless device 2802 (e.g., UE), and/or may be the VPLMN 1. The AMF 2 2806, based on (e.g., in response to) receiving the NAS MSG 13 (or the dualsteer capability indicator, the indication of dualsteer registration, the request for dualsteer registration, of the NAS MSG 13) of the NG MSG 13 2824, may determine that the wireless device 2802 (e.g., UE) supports the feature of the dualsteer, that the wireless device 2802 (e.g., UE) request a dualsteer registration, and/or that the wireless device 2802 (e.g., UE) requests information associated with dualsteer. The information associated with dualsteer may indicate which network slice is allowed for dualsteer.

The AMF 2 2806 may send a Nudm MSG 13 2826 (e.g., Nudm message 13) to a UDM 2810. The Nudm MSG 13 2826 may be similar to the Nudm MSG 1.

An UDM may receive the Nudm MSG 13 2826. The UDM, based on (e.g., in response to) receiving the Nudm MSG 13 2826, may send a Nudm MSG 14 2828 (e.g., Nudm message 14), to the AMF 2 2806. The Nudm MSG 14 2828 may be similar to the Nudm MSG 2. The AMF 2 2806 may receive the Nudm MSG 14 2828. The AMF 2 2806 may send a Npcf MSG 13 2830 (e.g., Npcf message 13) to a PCF 2808. The Npcf MSG 13 2830 may be similar to the Npcf MSG 1. The AMF 2 2806, based on (e.g., in response to) sending the Npcf MSG 13 2830, may receive a Npcf MSG 14 2832. The Npcf MSG 14 2832 may be similar to the Npcf MSG 2.

A AMF 2 2806 may send a NAS MSG 14 2834 to the wireless device (e.g., UE). The AMF 2 2806 may determine to send, to the wireless device 2802 (e.g., UE), the information associated with dualsteer because the wireless device 2802 (e.g., UE) supports the feature of the dualsteer, and/or because the wireless device 2802 (e.g., UE) indicates the dualsteer registration. The information associated with dualsteer may indicate one or more dualsteer network slices. The one or more dualsteer network slices may indicate one or more network slices allowed for dualsteer. The wireless device 2802 (e.g., UE) may register the one or more dualsteer network slices over more than access paths of an access type. The wireless device 2802 (e.g., UE), for the one or more dualsteer allowed network slices, may register via the second access path and/or the third access path. The wireless device 2802 (e.g., UE), for a network slice not indicated by the one or more dualsteer allowed network slices, may register either via the second access path or via the third access path. The NAS MSG 14 2834 may comprise a fourteenth list of allowed network slices and/or a fourteenth list of dualsteer allowed network slices. The fourteenth list of allowed network slices may indicate that the slice A and the slice B are allowed for the wireless device 2802 (e.g., UE). The NAS MSG 14 2834 may indicate the fourteenth list of allowed network slices. The fourteenth list of allowed network slice may indicate which network slices are allowed for the wireless device 2802 (e.g., UE) via at least one access path. The fourteenth list of dualsteer allowed network slices may indicate which network slice (or among the allowed network slices) are allowed for dualsteer (e.g., allowed for multiple simultaneously registration over more than one access paths of an access type). The fourteenth list of dualsteer allowed network slices may indicate that the slice A is allowed for dualsteer.

The AMF 2 2806 may send a NG MSG 14 comprising the NAS MSG 14, to the RAN 2 2804. The RAN 2 may send a RRC MSG 14 (e.g., a fourteenth RRC message) to the wireless device 2802 (e.g., UE). The RRC MSG 14 may comprise the NAS MSG 14. The RRC MSG 14 may be a 14th DL RRC transport message.

A wireless device 2802 (e.g., UE) may receive the NAS MSG 14 2834. The wireless device (e.g., UE) may determine to perform additional registration for the slice A because the fourteenth list of allowed slices indicate that the slice A is allowed and/or because the fourteenth list of dualsteer allowed slices indicate that the slice A is allowed for dualsteer. The wireless device 2802 (e.g., UE) may determine not to perform additional registration for the slice C because the fourteenth list of allowed slices indicate that the slice C is allowed and/or because the fourteenth list of dualsteer allowed slices does not indicate that the slice C is allowed for dualsteer,

A wireless device 2802 (e.g., UE) may select the third access path. The wireless device (e.g., UE), based on the determination, may send, to the RAN 3 2812 (the third NG-RAN, a third base station/gNB), a fifteenth RRC message (e.g., RRC MSG 15 2836, RRC message 15) via the third access path. The third access path may be of the 3GPP access type, and/or may use the RAN 3. The RRC MSG 15 2836 may be similar to the RRC MSG 5. The RRC message 15 2836 may comprise at least one of a NAS message 15 (NAS MSG 15). The NAS MSG 15 2836 may be similar to the NAS MSG 5. The NAS MSG 15 2836 may comprise a fifteenth list of requested network slices, an indication of dualsteer registration (e.g., indicating additional registration of an access path over the access type) and/or the like. The fifteenth list of requested network slices may indicate one or more network slices that the wireless device 2802 (e.g., UE) requests registration (use) via the third access path. The fifteenth list of requested network slices may indicate at least the slice A and/or may not indicate the slice C. The thirteen list of dualsteer allowed network slices may comprise the slice A and/or may not comprise the slice C because the thirteenth list of dualsteer allowed network slices comprises the slice A, and/or because the wireless device (e.g., UE) is performing a registration of additional access path (e.g., third access path) and maintaining registration of another access path (e.g., second access path) of the access type (e.g., 3GPP access type),.

The RAN 3 2812 may receive the RRC MSG 15 2836. The RAN 3 2812, based on (e.g., in response to) receiving the RRC MSG 15, may send a fifteenth NG MSG 2838 (NG MSG 15, NG message 15) to a AMF 3 2814. The NG MSG 15 2838 may comprise the NAS MSG 15. The AMF 3 2812, based on (e.g., in response to) receiving the NAS MSG 15, may send the NAS MSG 16 2840 to the wireless device (e.g., UE). The NAS MSG 16 may be similar to the NAS MSG 6.

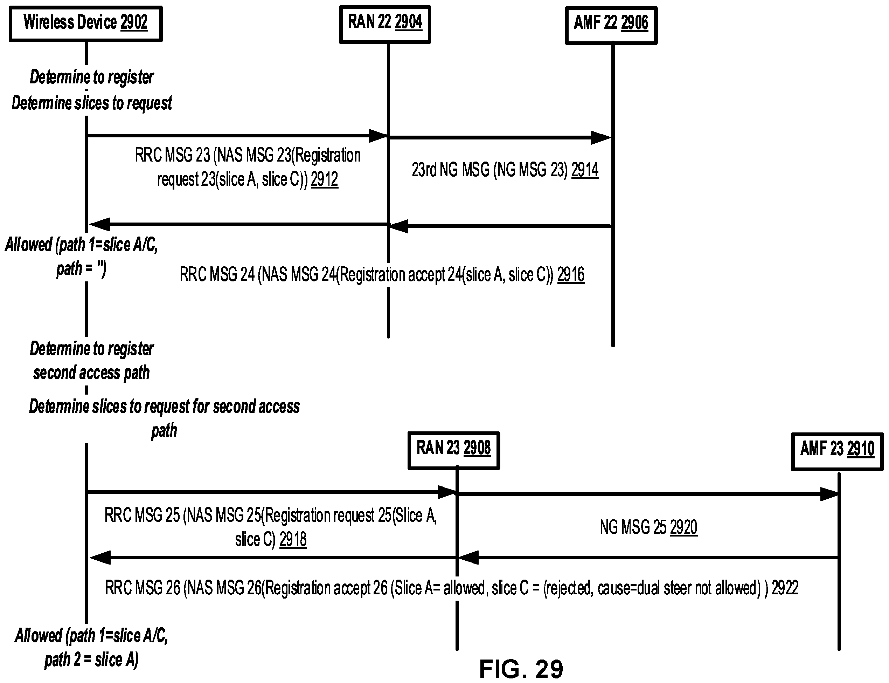

FIG. 29 shows an example of a wireless device registering to one or more network slices over one or more access paths. A wireless device 2902 (e.g., UE) may perform a secondary (additional, dualsteer) registration to a third network (e.g., a second visiting network, VPLMN 2). The third network may send a registration response indicating one or more network slices not allowed for dualsteer. This may assist a wireless device 2902 (e.g., UE) to determine which one or more access paths a network slice is allowed (registered). For brevity, based on the other part of the present disclosure, redundant details will be omitted.

A wireless device 2902 (e.g., UE) may send a RRC message 23 2912 (RRC MSG 23) to a 22nd RAN 2904 (e.g., a RAN 22, a 3GPP RAN 22, a 22nd base station/gNB, and/or the like). The RRC message 23 2912 may be at least one of a 23rd RRC setup complete message, a 23rd RRC UL transport message, and/or the like. The RRC MSG 23 2912 may comprise at least one of a NAS message 23 (NAS MSG 23). The NAS MSG 23 may be at least one of a 23rd registration request message, a 23rd service request message, a 23rd UL NAS transport message, and/or the like. The NAS MSG 23 may comprise at least one of an identifier of the wireless device 2902 (e.g., UE), one or more capabilities of the wireless device 2902 (e.g., UE), an indication of dualsteer registration, a request for dualsteer registration, and/or the like. The NAS MSG 23 may be similar to the NAS MSG 13, and/or the NAS MSG 3.

A RAN 22 2904 may receive the RRC MSG 23 2912. The RAN 22 2904, based on (e.g., in response to) receiving the RRC MSG 23 2912, may send a 23rd NG MSG 2914 (NG MSG 23) to a AMF 22 2906. The NG MSG 23 2914 may comprise the NAS MSG 23. The AMF 22 2906 may be similar to the AMF 2.

A AMF 22 may receive from the RAN 22 2904, the NG MSG 23 2914. The AMF 22 may be of a home network of the wireless device 2902 (e.g., UE), and/or may be the VPLMN 1. The AMF 22 2906, based on (e.g., in response to) receiving the NAS MSG 23 (or the dualsteer capability indicator, the indication of dualsteer registration, the request for dualsteer registration, of the NAS MSG 23) of the NG MSG 23 2914, may determine that the wireless device 2902 (e.g., UE) supports the feature of the dualsteer, that the wireless device 2902 (e.g., UE) request a dualsteer registration, and/or that the wireless device 2902 (e.g., UE) requests information associated with dualsteer. The information associated with dualsteer may indicate which network slice is allowed for dualsteer.

A AMF 22 may send a NAS MSG 24 2916 to the wireless device 2902 (e.g., UE). The NAS MSG 24 2916 may comprise a 24th list of allowed network slices. The 24th list of allowed network slice may indicate the slice A and/or the slice B because AMF 22 2906 allows the wireless device 2902 (e.g., UE) to use the slice A and/or the slice B for the second access path. The AMF 22 2906 may send, a NG MSG 24 comprising the NAS MSG 24, to the RAN 22 2904. The RAN 22 2904 may send an RRC MSG 24 (e.g., a 24th RRC message) to the wireless device 2902 (e.g., UE). The RRC MSG 24 may comprise the NAS MSG 24. The RRC MSG 24 may be a 24th DL RRC transport message.

A wireless device 2902 (e.g., UE) may receive the NAS MSG 24. The wireless device (e.g., UE) may considerer that the wireless device (e.g., UE) is allowed to use the slice A and/or the slice C over the second access path because the 24th list of allowed slices indicate that the slice A and/or slice C are allowed, and/or because the NAS MSG 24 is received over the second access path and/or the NAS MSG 23 is sent over the second access path.

A wireless device 2902 (e.g., UE) may determine to add additional access path (e.g., the third access path) of the access type in addition to the second access path. The wireless device 2902 (e.g., UE) may select the third access path. The wireless device 2902 (e.g., UE) may send, to the RAN 23 2908 (the 23rd NG-RAN, a 23rd base station/gNB), a 25th RRC message 2918 (e.g., RRC MSG 25, RRC message 25) via the third access path. The third access path may be of the 3GPP access type, and/or may use the RAN 23 2908. The RRC MSG 25 2918 may be similar to the RRC MSG 5 and/or to the RRC MSG 15. The RRC message 25 2918 may comprise at least one of a NAS message 25 (NAS MSG 25). The NAS MSG 25 may be similar to the NAS MSG 5 and/or to the NAS MSG 15. The NAS MSG 25 may comprise a 25th list of requested network slices, a 25th list of allowed network slice via the second access path, an indication of dualsteer registration (e.g., indicating additional registration of an access path over the access type) and/or the like. The 25th list of requested network slices may indicate one or more network slices that the wireless device 2902 (e.g., UE) requests registration (use) via the third access path. The 25th list of requested network slices may indicate at least the slice A and/or the slice C. The 25th list of allowed network slices via the second access path may indicate the one or more 24th list of allowed network slices via the second access path. The 25th list of allowed network slices may be the 24th list of allowed network slices. The 25th list of allowed network slice may assist the AMF 23 2910 to understand what network slices the AMF 22 2906 allows for the wireless device 2902 (e.g., UE) to use if the AMF 22 2906 may be different from a AMF 23 2910.

The RAN 23 2908 may receive the RRC MSG 25 2918. The RAN 23, based on (e.g., in response to) receiving the RRC MSG 25 2918, may send a 25th NG MSG 2920 (NG MSG 25, NG message 25) to a AMF 23 2910. The NG MSG 25 may comprise the NAS MSG 25.

The AMF 23 2910 may receive the NAS MSG 25 of the NG MSG 25 2920. The AMF 23 2910, based on the NAS MSG 25, may determine which network slices are allowed for the wireless device 2902 (e.g., UE) (via other 3GPP access path). The AMF 23 2910 may determine whether to allow or reject the slice A, and/or the AMF 23 2910 may determine whether to allow or reject the slice C because the 25th list of requested network slices comprise the slice A and/or the slice C. The AMF 23 2910 may determine to allow the slice A and/or to allow the slice A for dualsteer, and/or to allow the slice A for the third access path because the slice A is allowed for dualsteer (e.g., based on information received from the UDM, e.g., similar to the Nudm MSG 2). The AMF 23 2910 may determine not to allow the slice C and/or not to allow the slice C for dualsteer, and/or not to allow the slice C for the third access path because the slice C is not allowed for dualsteer (e.g., based on information received from the UDM, e.g., similar to the Nudm MSG 2), because the wireless device 2902 (e.g., UE) is registered for the slice C via the second access path (e.g., based on the 25th list of allowed network slices), because the wireless device 2902 (e.g., UE) is requesting additional access path (for the access type). For example, not to allow the slice C may be to reject the slice C.

A AMF 23, based on the determination, may determine to send a NAS MSG 26 2922 to the wireless device 2902 (e.g., UE). The NAS MSG 26 2922 may be similar to the NAS MSG 16. The NAS MSG 26 2922 may comprise at least one of a 26th list of allowed network slices, a 26th list of dualsteer allowed network slices, a 26th list of rejected network slices, a 26th list of dualsteer rejected slices, and/or the like. The 26th list of allowed network slice may indicate the slice A because AMF 23 allows the wireless device 2902 (e.g., UE) to use slice A for the third access path. The 26th list of allowed network slice may indicate the slice C because AMF 23 2910 allows the wireless device 2902 (e.g., UE) to use slice C for the second access path. The 26th list of dualsteer allowed network slice may indicate the slice A because AMF 23 2910 allows the wireless device (e.g., UE) to use slice A for dualsteer, because the AMF 23 2910 allows the wireless device 2902 (e.g., UE) to use slice A via the second access path and/or the third access path. The 26th list of dualsteer allowed network slice may not indicate the slice C because AMF 23 2910 does not allow the wireless device 2902 (e.g., UE) to use slice C for dualsteer and/or because the AMF 23 2910 does not allow the wireless device (e.g., UE) to use slice C via the third access path. The 26th list of rejected network slices may indicate the slice C because AMF 23 2910 does not allow the wireless device 2902 (e.g., UE) to use slice C for dualsteer and/or because the AMF 23 2910 does not allow the wireless device 2902 (e.g., UE) to use slice C via the third access path. The 26th list of dualsteer rejected network slices may not indicate the slice C because AMF 23 2910 does not allow the wireless device 2902 (e.g., UE) to use slice C for dualsteer, because the AMF 23 2910 allows the wireless device 2902 (e.g., UE) to use the slice C via the first access path, and/or because the AMF 23 2910 does not allow the wireless device 2902 (e.g., UE) to use slice C via the third access path. The 26th list of rejected network slices and/or the 26th list of dualsteer rejected network slices, alternatively and additionally, may indicate one or more rejection causes. The rejection cause value for the slice C may indicate that the slice C is rejected for dualsteer, that the slice C is rejected for the third access path, that the slice C is rejected for additional registration, and/or the like because the slice C is rejected for dualsteer, because the slice C is allowed for the second access path, and/or because the slice C is rejected for additional access path. The AMF 23 2910 may determine to allow the slice C via the third access path and disallow the slice C via the second access path because the slice C is not allowed for dualsteer, because the third access path is more suitable for the wireless device (e.g., UE) than the second access path. The NAS MSG 26 2922 may indicate that the slice C is rejected for the second access path and/or the slice C is allowed for the third access path. The AMF 23 2910 may send the NAS MSG 26 2922 to the wireless device 2902 (e.g., UE) via the RAN 23 2908.

A wireless device 2902 (e.g., UE) may receive the NAS MSG 26 2922. The wireless device (e.g., UE) may consider that the wireless device (e.g., UE) is allowed to use the slice C via the second access path and/or the wireless device (e.g., UE) may consider that the wireless device (e.g., UE) is not allowed to use the slice C via the third access path because the rejection cause value indicates that the slice C is rejected for dualsteer, because the slice C is registered via the second access path. The wireless device 2902 (e.g., UE) may consider that the wireless device 2902 (e.g., UE) is allowed to use the slice A via the second access path and/or the wireless device 2902 (e.g., UE) may consider that the wireless device 2902 (e.g., UE) is allowed to use the slice A via the third access path because the slice A is not rejected.

Examples described herein may resolve one or more of these and/or other problems. The wireless device 2902 (e.g., UE) in FIG. 29 may determine which network slice is not allowed for dualsteer, which network slice is allowed via which access path, which network slice is not allowed via which access path.

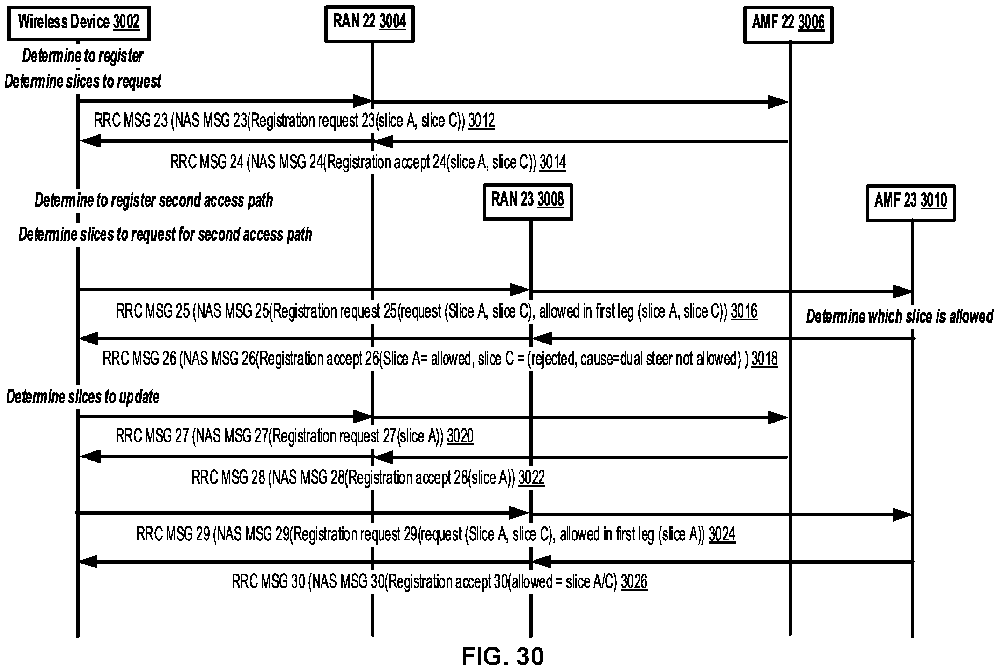

FIG. 30 shows an example of a wireless device (e.g., UE) changing an access path a network slice. A wireless device 3002 (e.g., UE), based on receiving a rejection for a network slice from a third network (e.g., a second visiting network, VPLMN 2), may determine which access path to use for the network slice. The determination of the access path may help the wireless device 3002 (e.g., UE) to change an access path for the network slice. For brevity, based on the other part of the present disclosure, redundant details will be omitted.

A wireless device 3002 (e.g., UE) may send the NAS MSG 23 3012 to the AMF 22 3006 and/or may receive the NAS MSG 24 3014 from the AMF 22 3006. The wireless device 3002 (e.g., UE) may send the NAS MSG 25 3016 to the AMF 23 3010 and/or may receive the NAS MSG 26 3018 from the AMF 23 3010.

A wireless device 3002 (e.g., UE), based on the NAS MSG 26 3018, may determine that the slice C is not allowed for dualsteer, and/or that the slice C is allowed for registration up to one access path of the access type. The wireless device 3002 (e.g., UE) may determine which access path to use for the slice C. The wireless device (e.g., UE) may determine to register the slice C via the third network and/or to deregister the slice C from the second network if QoS provided via the third network is better than QoS provided via the second network, if the third network is preferred to the second network (e.g., due to operator preference, charging, etc.). The wireless device 3002 (e.g., UE) may send a NAS MSG 27 3020 to the AMF 22 3006. The NAS MSG 27 3020 may indicate that the wireless device 3002 (e.g., UE) wants to register the slice A (via the AMF 22, via the second access path), and/or that the wireless device 3002 (e.g., UE) wants to deregister the slice C. The NAS MSG 27 3020, alternatively and additionally, may comprise a 27th list of requested network slices. The 27th list of requested network slices may comprise the network slice A and/or may not comprise the network slice C. The AMF 22 3006, based on (e.g., in response to) the NAS MSG 27 3020, may send a NAS MSG 28 3022. The NAS MSG 28 3022 may comprise a 28th list of allowed network slices. The 28th list of allowed network slices may comprise the slice A and/or may not comprise the slice C.

A wireless device 3002 (e.g., UE) may send a NAS MSG 29 3024 to the AMF 23 3010 via the third access path and/or via the RAN 23 3008. The NAS MSG 29 3024 may comprise a 29th list of requested network slices and/or a 29th list of allowed network slices. The 29th list of allowed network slices may indicate one or more network slices allowed via the second access path (e.g., via other access path of the access type than the third access path). The 29th list of requested network slices may indicate the slice A and/or the slice C. The 29th list of allowed network slices may indicate the slice A and/or that the slice A is allowed via the second access path.

A AMF 23 3010 may send a NAS MSG 30 3026 to the wireless device 3002 (e.g., UE) via the third access path. The AMF, based on that the wireless device 3002 (e.g., UE) requests the slice A and/or the slice C, and/or based on that the wireless device 3002 (e.g., UE) is allowed for the slice A via the second access path, and/or based on that the slice C is not registered for the wireless device 3002 (e.g., UE) via the second access path, and/or that the slice C is not allowed for the dualsteer, may determine to allow the wireless device 3002 (e.g., UE) to use the slice A and the slice C via the third access path. A 30th list of allowed network slice of the NAS MSG 30 3026 may indicate the slice A and/or the slice C. The NAS MSG 30 3026 may indicate that the slice A and the slice C are allowed for the third access path and/or the slice A is allowed for the second access path.

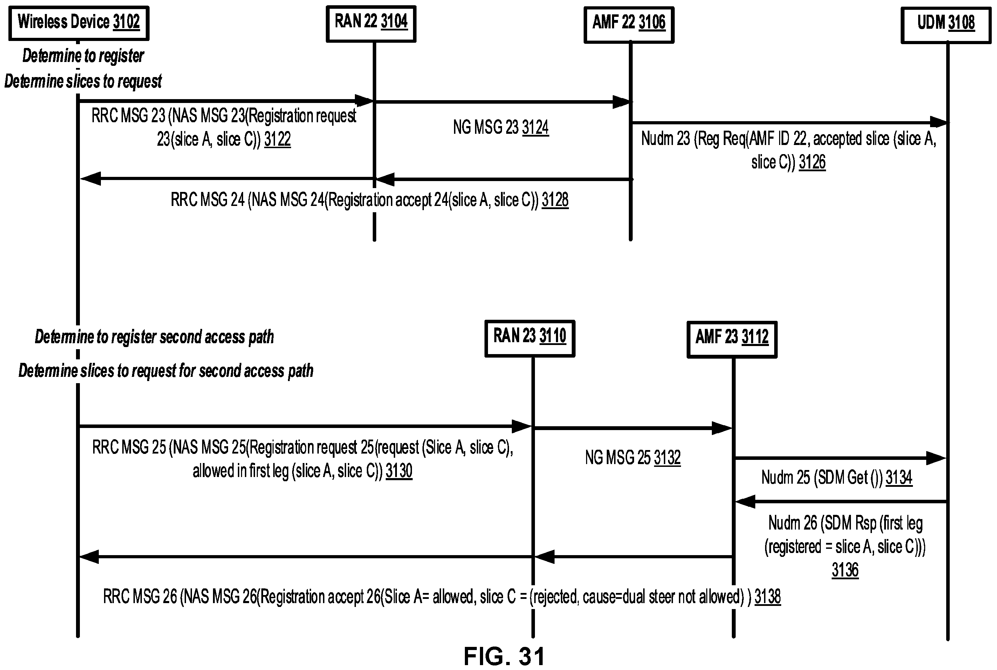

FIG. 31 shows an example of updating a unified data management (UDM) with one or more network slices allowed for a wireless device (e.g., UE). A wireless device 3102 (e.g., UE) may perform a secondary (additional, dualsteer) registration to a second network (e.g., a first visiting network, VPLMN 1). The second network may update a UDM 3108 with one or more network slices allowed for the wireless device 3102 (e.g., UE). This may assist a third network to determine which one or more network slice to allow for the wireless device 3102 (e.g., UE). For brevity, based on the other part of the present disclosure, redundant details will be omitted.

A wireless device 3102 (e.g., UE) may send the RRC message 23 3122 (RRC MSG 23) to the 22nd RAN 3104. A AMF 22 3106 may receive from the RAN 22 3104, the NG MSG 23 3124. The AMF 22 3106, based on (e.g., in response to) receiving the NAS MSG 23 3122 via the NG MSG 23 3124, may send a Nudm MSG 23 3126 to a UDM 3108. The Nudm MSG 23 3126 may be a Nudm_UECM_Registration request message. The Nudm MSG 23 3126 may indicate that the AMF 22 3106 handles the wireless device 3102 (e.g., UE), and is responsible for the mobility management of the wireless device 3102 (e.g., UE). The Nudm MSG 23 3126 may comprise an identifier (e.g., AMF ID 22). For example, Nudm MSG 23 3126 may indicate that the wireless device 3102 (e.g., UE) is registered via the second access path, that the AMF 22 3106 manages the second access path, and/or the like. The Nudm MSG 23 3126 may indicate that the wireless device 3102 (e.g., UE) is registered for the second access path, the wireless device 3102 (e.g., UE) is registered via the AMF 22 3106, and/or that the wireless device 3102 (e.g., UE) is registered for slice A and/or the slice C. The UDM 3108 may store the information delivered by the Nudm MSG 23 3126 in its local memory or in UDR. The AMF 22 3106 may send the NAS MSG 24 3128 to the wireless device 3102 (e.g., UE).

A wireless device 3102 (e.g., UE) may receive the NAS MSG 24 3128. The wireless device 3102 (e.g., UE) may determine to add additional access path (e.g., the third access path) of the access type in addition to the second access path. The wireless device 3102 (e.g., UE) may select the third access path. The wireless device 3102 (e.g., UE) may send to the AMF 23 3112, the NAS MSG 25 3130, via the RAN 23 3110. The NAS MSG 25 3130 may comprise the 25th list of requested network slices. The 25th list of allowed network slices may indicate the slice A and the slice C.

An AMF 23 3112 may receive the NAS MSG 25 of the NG MSG 25 3132. The AMF 23, based on (e.g., in response to) receiving the NAS MSG 25 3122, may send a Nudm MSG 25 3134 to the UDM. The Nudm MSG 25 3134 may be a 25th Nudm_SDM_Get request message. The Nudm MSG 25 3134 may indicate the identity of the wireless device 3102 (e.g., UE). The Nudm MSG 25 3134 may indicate that the AMF 23 3112 handles the third access path (of the access type, 3GPP access type), that the wireless device 3102 (e.g., UE) requests dualsteer registration, and/or the like. The UDM 3108 may send the Nudm MSG 26 3136. The Nudm MSG 26 3136 may comprise one or more information of the wireless device 3102 (e.g., UE). The Nudm MSG 26 3136 may indicate whether the wireless device 3136 (e.g., UE) is registered in other network nodes, via other access paths of the access type, and or the like. Nudm MSG 26 3136 may indicate that the wireless device 3102 (e.g., UE) is registered via the AMF 22 3106 for the second access path of the 3GPP access type. Nudm MSG 26 3136 may indicate that the wireless device 3102 (e.g., UE) is registered via the AMF 22 3106, and/or that the wireless device 3102 (e.g., UE) is allowed for slice A and the slice C via the AMF 22 3106 (and/or via the second access path of the access type (e.g., 3GPP access type)).

A AMF 23, based on the NAS MSG 25 3130, may determine which network slices are to be allowed for the wireless device 3102 (e.g., UE). The AMF 23 may determine whether to allow or reject the slice A, and/or the AMF 23 may determine whether to allow or reject the slice C because the 25th list of requested network slices comprise the slice A and/or the slice C. The AMF 23 3112 may determine to allow the slice A and/or to allow the slice A for dualsteer, and/or to allow the slice A for the third access path because the slice A is allowed for dualsteer (e.g., based on information received from the UDM, e.g., similar to the Nudm MSG 2). The AMF 23 3112 may determine not to allow the slice C and/or not to allow the slice C for dualsteer, and/or not to allow the slice C for the third access path because the slice C is not allowed for dualsteer (e.g., based on information received from the UDM 3108, e.g., similar to the Nudm MSG 2, Nudm MSG 4, Nudm MSG 6), because the wireless device 3102 (e.g., UE) is registered for the slice C via the second access path (e.g., based on the 25th list of allowed network slices), and/or based on the Nudm MSG 25 3134 (e.g., the Nudm MSG 25 indicates that the wireless device (e.g., UE) is registered for the slice C via the AMF 22 3106 and/or via the second access path)), because the wireless device 3102 (e.g., UE) is requesting additional access path (for the access type),. For example, not to allow the slice C may be to reject the slice C.

An AMF 23, based on the determination, may determine to send a NAS MSG 26 3138 to the wireless device 3102 (e.g., UE). The NAS MSG 26 3138 may be similar to the NAS MSG 16. For example, the NAS MSG 26 3138 may comprise at least one of a 26th list of allowed network slices, a 26th list of dualsteer allowed network slices, a 26th list of rejected network slices, a 26th list of dualsteer rejected slices, and/or the like. The 26th list of allowed network slice may indicate the slice A because AMF 23 allows the wireless device (e.g., UE) to use slice A for the third access path. The 26th list of allowed network slice may indicate the slice C because AMF 23 3112 allows the wireless device 3102 (e.g., UE) to use slice C for the second access path. The 26th list of dualsteer allowed network slice may indicate the slice A because AMF 23 3112 allows the wireless device 3102 (e.g., UE) to use slice A for dualsteer, because the AMF 23 3112 allows the wireless device 3102 (e.g., UE) to use slice A via the second access path and/or the third access path. The 26th list of dualsteer allowed network slice may not indicate the slice C and/or the 26th list of allowed network slice may not indicate the slice C because AMF 23 3112 does not allow the wireless device 3102 (e.g., UE) to use slice C for dualsteer and/or because the AMF 23 3112 does not allow the wireless device 3102 (e.g., UE) to use slice C via the third access path. The 26th list of rejected network slices may indicate the slice C because AMF 23 3112 does not allow the wireless device 3102 (e.g., UE) to use slice C for dualsteer and/or because the AMF 23 3112 does not allow the wireless device 3102 (e.g., UE) to use slice C via the third access path. The 26th list of dualsteer rejected network slices may indicate the slice C because AMF 23 3112 does not allow the wireless device 3102 (e.g., UE) to use slice C for dualsteer, because the AMF 23 3112 allows the wireless device 3102 (e.g., UE) to use the slice C via the second access path, and/or because the AMF 23 3112 does not allow the wireless device 3102 (e.g., UE) to use slice C via the third access path. The 26th list of rejected network slices and/or the 26th list of dualsteer rejected network slices, alternatively and additionally, may indicate one or more rejection causes. The rejection cause value for the slice C may indicate that the slice C is rejected for dualsteer, that the slice C is rejected for the third access path, that the slice C is rejected for additional registration, and/or the like because the slice C is rejected for dualsteer, because the slice C is allowed for the second access path, and/or because the slice C is rejected for additional access path. The AMF 23 3112 may determine to allow the slice C via the third access path and disallow the slice C via the second access path because the slice C is not allowed for dualsteer, because the third access path is more suitable for the wireless device 3102 (e.g., UE) than the second access path. The NAS MSG 26 3138 may indicate that the slice C is rejected for the second access path and/or the slice C is allowed for the third access path.

A AMF 23 3112 may send the NAS MSG 26 3138 to the wireless device 3102 (e.g., UE) via the RAN 23 3110. The wireless device 3102 (e.g., UE) may receive the NAS MSG 26 3138. The wireless device 3102 (e.g., UE) may consider that the wireless device (e.g., UE) is allowed to use the slice C via the second access path and/or the wireless device 3102 (e.g., UE) may consider that the wireless device 3102 (e.g., UE) is not allowed to use the slice C via the third access path because the rejection cause value indicates that the slice C is rejected for dualsteer, and/or because the slice C is registered via the second access path. The wireless device 3102 (e.g., UE) may consider that the wireless device 3102 (e.g., UE) is allowed to use the slice A via the second access path and/or the wireless device 3102 (e.g., UE) may consider that the wireless device 3102 (e.g., UE) is allowed to use the slice A via the third access path because the slice A is not rejected.

Examples described herein may resolve one or more of these and/or other problems. For example, the wireless device 3102 (e.g., UE) in FIG. 31 may determine which network slice is not allowed for dualsteer, which network slice is allowed via which access path, which network slice is not allowed via which access path.

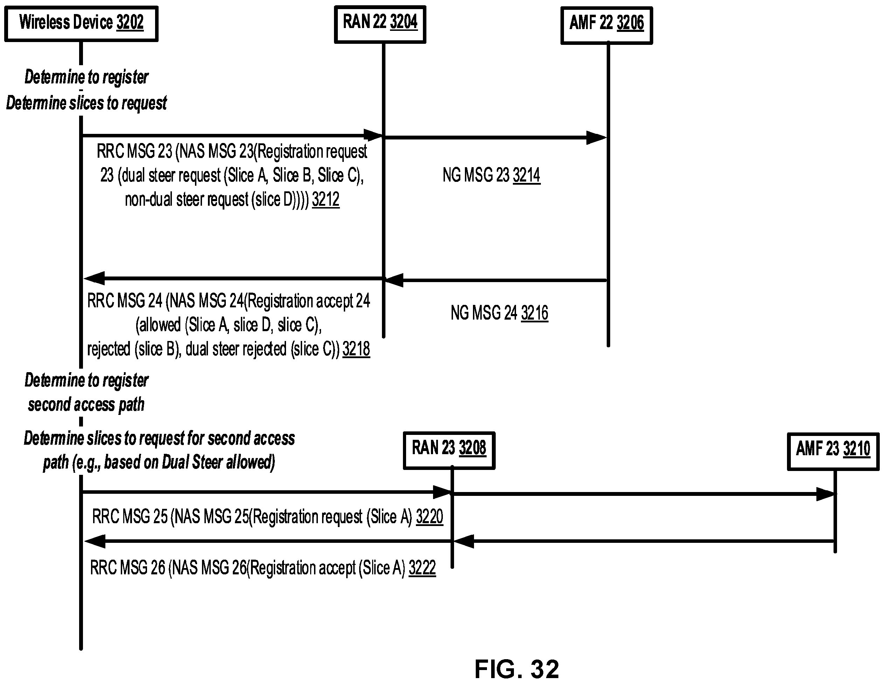

FIG. 32 shows an example of determining one or more network slice allowed for dualsteer. A wireless device 3202 (e.g., UE) may indicate which slice is for dualsteer registration. The indication may help for a AMF 3206/3210 to determine which one is allowed for dualsteer or not. For brevity, based on the other part of the present disclosure, redundant details will be omitted.

A wireless device 3202 (e.g., UE) may send the RRC message 23 3212 (RRC MSG 23) to the 22nd RAN 3204. The RRC MSG 23 3212 may comprise at least one of the NAS message 23 (NAS MSG 23). The NAS MSG 23 may comprise a 23rd list of requested network slices. The NAS MSG 23 may indicate, for each network slice of the 23rd list of requested network slices, whether the wireless device 3202 (e.g., UE) is requesting a single access path of an access type (e.g., 3GPP access type) and/or whether the wireless device 3202 (e.g., UE) is requesting a dualsteer registration (e.g., requesting allowance for more than one access paths of the access type). The wireless device 3202 (e.g., UE), for each network slice of the 23rd list of requested network slice, may indicate dualsteer request for the each network slice if the wireless device 3202 (e.g., UE) wants to register (be allowed for) via more than one access paths (e.g., the second access path, the third access path) of the access type. The wireless device 3202 (e.g., UE) may request dualsteer registration for the slice A, slice B, slice C. The wireless device 3202 (e.g., UE) may not request dualsteer registration for the slice D. The wireless device 3202 (e.g., UE), for the slice D, may want to register via up to one access path of the access type.

A RAN 22 3204 may receive the RRC MSG 23 3212. The RAN 22, based on (e.g., in response to) receiving the RRC MSG 23, may send the 23rd NG MSG 3214 (NG MSG 23) to the AMF 22 3206.

A AMF 22 3206 may receive, from the RAN 22 3204, the NG MSG 23 3214. The AMF 22 3206 may determine whether to allow or rejection of the dualsteer registration for the slice A, slice B, and slice C because the wireless device 3202 (e.g., UE) is requesting dualsteer registration for the slice A, slice B, slice C. The AMF 22 3206, based on the determination, may send the NAS MSG 24 to the wireless device 3202 (e.g., UE). The NAS MSG 24 may comprise the 24th list of allowed network slices, the 24th list of rejected network slices, the 24th list of dualsteer rejected network slices, and/or the 24th list of dualsteer allowed network slices. The 24th list of allowed network slice may indicate the slice D, the 24th list of dualsteer allowed network slice may not indicate the slice D, the 24th list of rejected network slice may not indicate the slice D, and/or the 24th list of dualsteer rejected network slice may not indicate the slice D because the wireless device 3202 (e.g., UE) does not request the slice D for dualsteer registration, and/or because the AMF 22 3206 allows the wireless device 3202 (e.g., UE) to use the slice D. The 24th list of allowed network slice may indicate the slice A, the 24th list of dualsteer allowed network slice may indicate the slice A, the 24th list of rejected network slice may not indicate the slice A, and/or the 24th list of dualsteer rejected network slice may not indicate the slice A because the wireless device 3202 (e.g., UE) request the slice A for dualsteer registration, and/or because the AMF 22 3206 allows the wireless device 3202 (e.g., UE) to use the slice A for dualsteer. The 24th list of allowed network slice may not indicate the slice B, the 24th list of dualsteer allowed network slice may not indicate the slice B, the 24th list of rejected network slice may indicate the slice B, and/or the 24th list of dualsteer rejected network slice may indicate the slice B because the wireless device 3202 (e.g., UE) request the slice B for dualsteer registration, and/or because the AMF 22 3206 does not allow the wireless device 3202 (e.g., UE) to use the slice B. The 24th list of allowed network slice may indicate the slice C, the 24th list of rejected network slice may not indicate the slice C, and/or the 24th list of dualsteer rejected network slice may indicate the slice C because the wireless device 3202 (e.g., UE) request the slice C for dualsteer registration, because the AMF 22 3206 does allow the wireless device 3202 (e.g., UE) to use the slice C, and/or because the AMF 22 3206 does not allow the wireless device 3202 (e.g., UE) to use the slice C for dualsteer.

A AMF 22 3206, based on the determination of allowed/rejected network slices, may send the NG MSG 24 3216 comprising the NAS MSG 24, to the wireless device 3202 (e.g., UE) via the RAN 22 3204. The RAN 22 3204 may send the RRC MSG 24 3218 comprising the NAS MSG 24. The NAS MSG 24 may indicate that the wireless device 3202 (e.g., UE) is allowed for the slice A, slice C, and/or the slice D. The NAS MSG 24 may indicate that the wireless device 3202 (e.g., UE) is rejected for the slice B. The NAS MSG 24 may indicate that the wireless device 3202 (e.g., UE) is rejected for the slice B for dualsteer. The NAS MSG 24 may indicate that the wireless device 3202 (e.g., UE) is allowed for dualsteer for the slice A.

A wireless device 3202 (e.g., UE) may receive the NAS MSG 24. The wireless device (e.g., UE) may determine not to request the slice C for dualsteer (and/or for additional registration via the third access path) because the NAS MSG 24 indicates that the slice C is rejected for dualsteer. The 25th list of requested network slices of the NAS MSG 25 may indicate the slice A and/or may not indicate the slice C if the wireless device 3202 (e.g., UE) sends the NAS MSG 25 3220 via the third access path while maintaining the registration via the second access path,

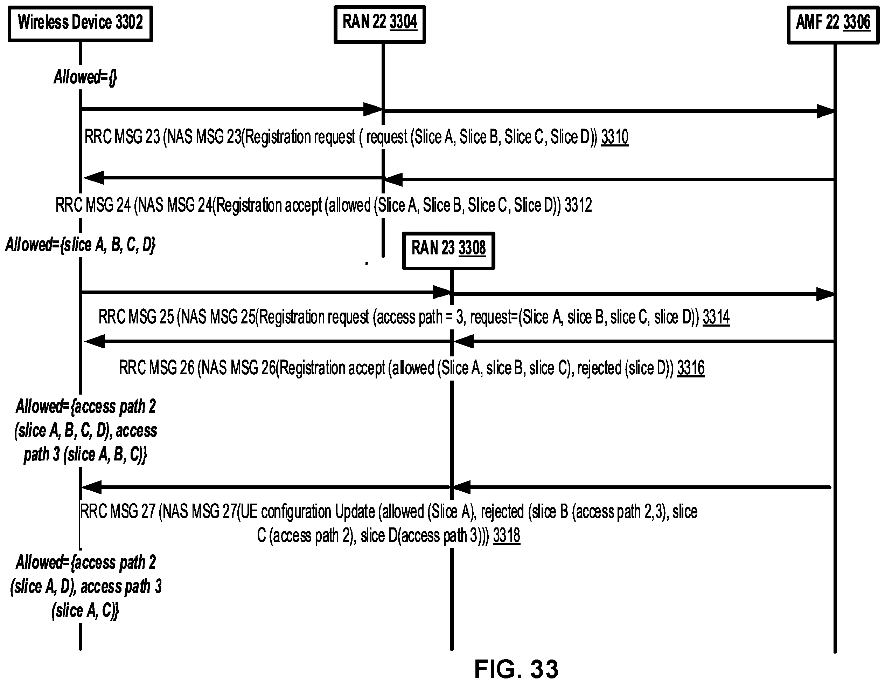

FIG. 33 shows an example of a wireless device (e.g., UE) managing one or more registration for one or more access paths for an access type. A wireless device 3302 (e.g., UE) may manage one or more registration for one or more access paths for an access type. A network may send a message to the wireless device 3302 (e.g., UE) to update registration status. The message may help for a AMF 3306 to adjust registration status of the wireless device 3302 (e.g., UE), based on configuration change. For brevity, based on the other part of the present disclosure, redundant details will be omitted.

A wireless device 3302 (e.g., UE) may send the NAS MSG 23 3310 to the AMF 22 3306. The NAS MSG 23 3310 may indicate that the wireless device 3302 (e.g., UE) requests registration of the slice A, slice B, slice C, and/or the slice D. The AMF 22 3306, based on (e.g., in response to) the NAS MSG 23 3210, may send the NAS MSG 24 3312. The NAS MSG 24 3312 may indicate that the slice A, slice B, slice C and/or the slice D are allowed. The wireless device 3302 (e.g., UE) may consider that the wireless device (e.g., UE) is allowed to use the slice A, slice B, slice C and/or the slice D for the access type (e.g., 3GPP access type)

A wireless device 3302 (e.g., UE) may send the NAS MSG 25 3314 to the AMF 22 3306. The AMF 22 3306 may be the AMF 23 and/or may be collocated with the AMF 23. The NAS MSG 25 3314 may indicate that the NAS MSG 25 3314 is associated with registration via the third access path and/or may request registration of the slice A, slice B, slice C, and/or the slice D.

A AMF 22 3306 may receive the NAS MSG 25 3314. The AMF 22, Based on (e.g., in response to) the NAS MSG 25 3314, may send the NAS MSG 26 3316. The NAS MSG 26 3316 may indicate that the slice A, the slice B, and/or the slice C are allowed. The NAS MSG 26 3316 may indicate that the slice D is rejected. The wireless device 3302 (e.g., UE) may receive the NAS MSG 26 3316 via the third access path. The wireless device 3302 (e.g., UE) may consider that the slice A, slice B, slice C are allowed for the second access path, and/or that the slice D is not allowed for the third access path because the NAS MSG 26 3316 is received via the third access path, and/or because NAS MSG 26 3316 indicates rejection of the slice D,

A AMF 22 3306 may determine to update the wireless device 3302 (e.g., UE). The AMF 22, due to resource change and/or subscription change, may determine to send a NAS MSG 27 3318 to the wireless device 3302 (e.g., UE). The NAS MSG 27 3318 may be a 27th wireless device/UE configuration update message. The NAS MSG 27 3318 may indicate that the slice A is allowed, that the slice B is rejected for the second access path and/or the third access path, that the slice C is rejected for the second access path, and/or that the slice D is rejected for the third access path. The NAS MSG 27 3318 may indicate to the wireless device 3302 (e.g., UE), for each network slice, one or more access paths for which the network slice is rejected and/or one or more access paths for which the network slice is allowed. This may assist the wireless device 3302 (e.g., UE) to update registration of a network slice per each access path of the access type. The wireless device 3302 (e.g., UE), based on the NAS MSG 27 3318, may consider that slice A and slice D are allowed for the second access path and/or that the slice A and the slice C are allowed for the third access path.

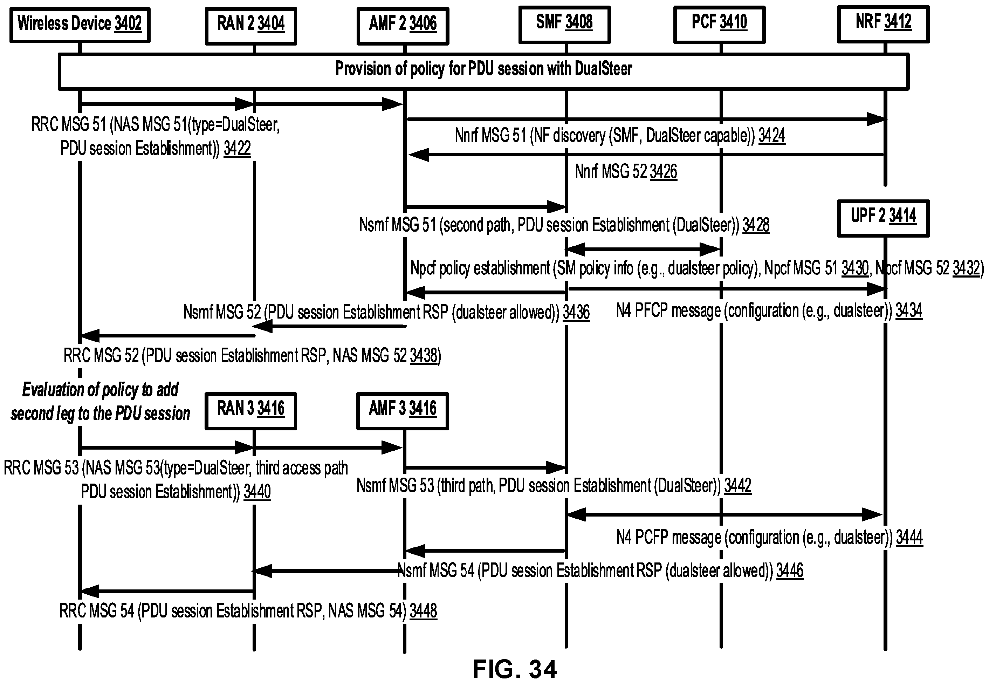

FIG. 34 shows an example of a wireless device using a dualsteer policy to establish a PDU session. A wireless device 3402 (e.g., UE) may use a dualsteer policy to determine whether to establish a PDU session using one or more access paths of an access type. The dualsteer policy may help reduce a request for the PDU session if multiple access paths for the access type is not allowed. For brevity, based on the other part of the present disclosure, redundant details will be omitted.

A wireless device 3402 (e.g., UE) may receive policy information for the PDU session in relation to the dualsteer. The example of FIG 23 may be used to deliver the dualsteer policy to the wireless device 3402 (e.g., UE). The dualsteer policy may be similar to the policy information described in FIG. 27 and/or FIG. 26. Reverting back to FIG. 34, the wireless device 3402 (e.g., UE) may receive one or more data from one or more applications. The wireless device (e.g., UE) may evaluate the one or more data based on the policy information. The wireless device 3402 (e.g., UE), for the data of the one or more data, may determine whether one or more rules of the policy information match the data. The wireless device 3402 (e.g., UE), for each rule of the policy information, may determine whether the traffic information of the each rule matches the characteristics of the data. The wireless device 3402 (e.g., UE) may use route selection descriptors of the matching rule, to determine parameters for the PDU session if there is a matching rule. The wireless device 3402 (e.g., UE) may use one of the one or more established PDU sessions to deliver the data if one or more established PDU sessions match the parameters. The wireless device 3402 (e.g., UE) may send a NAS MSG 51 3422, to a AMF (e.g., AMF 2 3406), to establish a new PDU session if there is no established PDU session matching the parameters. The NAS MSG 51 3422 may comprise an indication that the NAS MSG 51 3422 is for dualsteer (or for PDU session of dualsteer) and/or a PDU session establishment (or modification) request message.

A AMF (AMF 2 3406) may receive the NAS MSG 51 3422, via a RAN 2 3404 (e.g., via the second access path). The AMF may query the NRF 3412 to get information of the SMF supporting the feature of dualsteer because the NAS MSG 51 3422 indicates that the NAS MSG 51 3422 is for dualsteer. The AMF may send Nnrf MSG 51 3424 (e.g., NF discovery request). The Nnrf MSG 51 may 3424 indicate a type of SMF, a capability indicating support of the feature of dualsteer. The AMF, based on (e.g., in response to) the NnrfMSG 51 3424, may receive the Nnrf MSG 52. The Nnrf MSG 52 3426 may indicate one or more SMFs supporting the feature of dualsteer. For example, the Nnrf MSG 52 may indicate IP address and/or ID (e.g., SMF ID 1) of the SMF 3408.

A AMF may send Nsmf MSG 51 3428 to the SMF 3408 (e.g., of SMF ID 1). The Nsmf MSG 51 3428 may be a Nsmf_PDUSession_CreateSMContext request and/or the like. The Nsmf MSG 51 3428 may indicate that the wireless device 3402 (e.g., UE) is requesting the PDU session for dualsteer and/or that the PDU session with more than access paths of the access type is requested. For example, Nsmf MSG 51 3428 may comprise the PDU session establishment request message. The PDU session establishment request message may indicate that the wireless device 3402 (e.g., UE) is requesting the PDU session for dualsteer.

A SMF 3408 may receive the Nsmf MSG 51 3428. The SMF 3408 may establish SM policy session with a PCF 3410 and/or may receive SM policy (e.g., Dualsteer PDU session control policy, MA-PDU session control policy, and/or the like) from the PCF 3410. The SMF 3408 may send a Npcf MSG 51 3430 to the PCF 3410. For example, the Npcf MSG 51 3430 may be similar to the Npcf MSG 13 and/or the Npcf MSG 1. The Npcf MSG 51 3430 may indicate that the wireless device 3402 (e.g., UE) supports the feature of the dualsteer, the SMF 3408 supports the feature of dualsteer, that the wireless device 3402 (e.g., UE) requests a PDU session for the dualsteer, that the wireless device 3402 (e.g., UE) requests the PDU session using more than one 3GPP access paths, and/or the like.

A PCF 3410 may send a Npcf MSG 52 3432. For example, the Npcf MSG 52 3432 may comprise one or more PCC rules. The one or more PCC rules may comprise configuration information for dualsteer. The one or more PCC rules, based on the Npcf MSG 51 3430, may comprise the configuration information if the PCF 3410 allows the wireless device 3402 (e.g., UE) (or the PDU session) for the dualsteer. The configuration information for dualsteer may indicate how a traffic of the PDU session needs to be delivered. The configuration information may indicate whether one or more 3GPP access paths are allowed for the PDU session or not, what portion of the traffic needs to be a 3GPP access path of the one or more 3GPP access paths.

A SMF 3408 may receive the Npcf MSG 52 3432. The SMF 3408 may send a N4 PFCP 3434 (packet forwarding control protocol) message to a UPF (e.g., UPF 2 3414) because the Npcf MSG 52 3432 indicates that the dualsteer is allowed for the PDU session. For example, the N4 PFCP may indicate that the PDU session is for dualsteer, that the PDU session is allowed for multiple 3GPP access, one or more second parameter (e.g., second QoS parameter) for a second access path of the multiple 3GPP access, and/or one or more third parameter (e.g., third QoS parameter) for a third access path of the multiple 3GPP access. The N4 PFCP message 3434 may indicate whether the second access path is active access (e.g., whenever available, the second access path is used), whether the third access path is standby access (e.g., whenever the active access is available, the third access path is not used), and/or the like. The UPF may act as indicated by the N4 PFCP message 3434.

A SMF, based on (e.g., in response to) the Nsmf MSG 51 3428, may send Nsmf MSG 52 3436 to the AMF (e.g., AMF 2 3406). The Nsmf MSG 52 3436 may comprise a PDU session establishment response message. The Nsmf MSG 52 3436 or the PDU session establishment response message may indicate whether the PDU session is allowed for dualsteer, whether the PDU session is established for dualsteer, whether the network supports the feature of dualsteer, whether the wireless device 3402 (e.g., UE) is allowed to add additional access path of the access type to the PDU session, and/or the like. The PDU session establishment response message may indicate that the PDU session is established for dualsteer. The AMF (e.g., AMF 2 3406), based on (e.g., in response to) receiving the Nsmf MSG 52 3436, may send the NAS MSG 52 3438 comprising the PDU session establishment response message, to the wireless device 3402 (e.g., UE).

A wireless device 3402 (e.g., UE) may determine to add additional access path (e.g., the third access path) to the PDU session. The wireless device 3402 (e.g., UE) may determine to send a NAS MSG 53 3440 because the policy information indicates that the wireless device 3402 (e.g., UE) is allowed/preferred to establish dualsteer PDU session for the PDU session (or for the data, for the data flow), because the PDU session establishment response indicates that the PDU session is allowed for the dualsteer, and/or because the wireless device 3402 (e.g., UE) is registered simultaneously via the second access path and the third access path,. The NAS MSG 53 3440 may comprise a 53th PDU session establishment request message and/or a 53th PDU session modification request message. The wireless device 3402 (e.g., UE) may send the NAS MSG 53 3440 via the third access path (e.g., via the RAN 3 3416) to the AMF3 3416. The NAS MSG 53 3440 may indicate that the NAS MSG 53 3440 is for dualsteer, that the wireless device 3402 (e.g., UE) is adding additional access path of the access type for the PDU session, and/or the indication of the third access path.

An AMF 3, based on (e.g., in response to) receiving the NAS MSG 53 3440, may send a Nsmf MSG 53 3442 to the SMF 3408. The Nsmf MSG 53 3442 may comprise the 53th PDU session establishment request message and/or a 53th PDU session modification request. The Nsmf MSG 53 3442 may indicate that the wireless device 3402 (e.g., UE) is adding additional access path (e.g., access path 3) of the 3GPP access type to the PDU session, and/or that the Nsmf MSG 53 3442 is associated with dualsteer. The SMF 3408, based on (e.g., in response to) receiving the Nsmf MSG 53 3442, may send updated configuration, such as N4 PCFP message 3444 (configuration (e.g., dualsteer)), to the UPF (e.g., UPS 2 3414) and/or may send Nsmf MSG 54 3446 to the AMF 3 3416. The Nsmf MSG 54 3446 may comprise a 54th PDU session establishment response and/or a 54th PDU session modification response. The AMF 3 3416 may deliver to the wireless device 3402 (e.g., UE), a NAS MSG 54 3448, comprising the 54th PDU session establishment response and/or the 54th PDU session modification response. The updated configuration may comprise information whether the UPF (e.g., UPS 2 3414) needs to allocated resources for multiple access paths of the access type and/or a first monitoring key for the second access path and/or a second monitoring key for the third access path.

A wireless device 3402 (e.g., UE) may receive the 54th NAS MSG 3448. The 54th NAS MSG 3448 may indicate that the PDU session is updated for dualsteer, and/or that the PDU session is allowed for dualsteer. The wireless device 3402 (e.g., UE), based on the 54th NAS MSG 3448, may send data packets for the PDU session (for the service data flow), over the one or more access paths (e.g., the second access path, the third access path) of the access type.

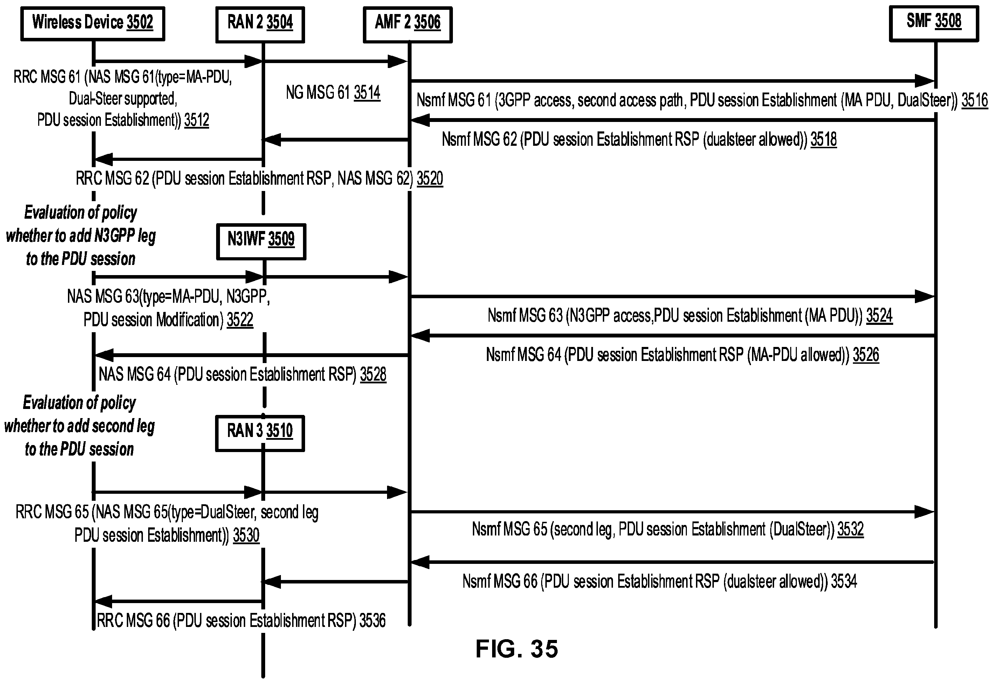

FIG. 35 shows an example of a wireless device using dualsteer policy to establish a PDU session. A wireless device 3502 (e.g., UE) may use dualsteer policy to determine whether to establish a PDU session using a plurality of first access paths of a first access type and/or using one or more second access paths of a second access type. The dualsteer policy may assist a wireless device (e.g., UE) to determine one or more access paths to use for a the PDU session. For brevity, based on the other part of the present disclosure, redundant details will be omitted.

A wireless device 3502 (e.g., UE) may receive policy information for the PDU session in relation to the dualsteer. The example of FIG. 23 may be used to deliver the dualsteer policy to the wireless device (e.g., UE). The dualsteer policy may be similar to the policy information described in FIG. 27 and/or FIG. 26. The dualsteer policy may comprise one or more rules. The dualsteer policy may be a URSP. The URSP may comprise a first rule, a second rule and/or a third rule. The first rule may comprise a first traffic descriptor. The first traffic descriptor may indicate a first application (or an identifier of the first application), a first IP address (e.g., a first source IP address, a first target IP address), and/or the like. The first rule may comprise a first route selection descriptor. The first route selection descriptor may indicate a first network slice, that MA-PDU session is preferred/allowed, that dual-steer is preferred/allowed, and/or the like. The wireless device 3502 (e.g., UE) based on the first rule, may use (establish) a first PDU session established over one or more 3GPP access paths, a N3GPP access paths, and/or the first network, for a first traffic described by the first traffic descriptor. The second rule may comprise a second traffic descriptor. The second traffic descriptor may indicate a second application (or an identifier of the second application), a second IP address (e.g., a second source IP address, a second target IP address), and/or the like. The second rule may comprise a second route selection descriptor. The second route selection descriptor may indicate a second network slice, that MA-PDU session is preferred/allowed, that dual-steer is not preferred/allowed, and/or the like. The wireless device 3502 (e.g., UE), based on the second rule, may use a second PDU session established over a 3GPP access path, and/or a N3GPP access path, and the second network, but not more than one 3GPP access path, for a second traffic described by the second traffic descriptor. The third rule may comprise a third traffic descriptor. The third traffic descriptor may indicate a third application (or an identifier of the third application), a third IP address (e.g., a third source IP address, a third target IP address), and/or the like. The third rule may comprise a third route selection descriptor. The third route selection descriptor may indicate a third network slice, that MA-PDU session is not preferred/allowed, that dual-steer is preferred/allowed, and/or the like. The wireless device 3502 (e.g., UE), based on the third rule, may use a third PDU session established over one or more 3GPP access paths, and the third network, but not over N3GPP access path, for a third traffic described by the third traffic descriptor. The wireless device 3502 (e.g., UE), based on the dualsteer policy, may determine whether to add/ establish/ modify one or more access paths of 3GPP access type for a PDU session, to add/ establish/ modify one or more access paths of N3GPP access type for the PDU session, and/or the like.

A wireless device 3502 (e.g., UE) in FIG. 35 may send an RRC MSG 61 3512 to a RAN 2 3504. The RRC MSG 61 3512 may comprise a NAS MSG 61. The NAS MSG 61 may comprise a field indicating that the NAS MSG 61 is for a MA-PDU session, a field indicating that the wireless device 3502 (e.g., UE) supports the feature of dualsteer, a field indicating that the wireless device 3502 (e.g., UE) supports the feature of MA-PDU session, a field indicating a PDU session, a field indicating that the PDU session is associated with dualsteer, a field indicating that the PDU session is associated with MA-PDU session, and/or a 61st PDU session establishment (modification) request message. The RAN 2 3504 may send a NG MSG 61 comprising the NAS MSG 61 3514, to a AMF 2 3506. The AMF 2 3506 may receive the NAS MSG 61 via the NG MSG 61 3514.

The AMF 2 3506 may send a Nsmf MSG 61 3516 to a SMF 3508. The AMF 2 3506 may select the SMF 3508 supporting the feature of dualsteer and/or the feature of MA-PDU session. The Nsmf MSG 61 3516 may comprise a field indicating 3GPP access type, a field indicating a second access path (e.g., second 3GPP access), and/or the 61 PDU session establishment request message. The 61 PDU session establishment request message may indicate that the PDU session is for MA-PDU session, and/or that the PDU session is for dualsteer (e.g., using more than one 3GPP access paths).

A SMF 3508, based on (e.g., in response to) receiving the Nsmf MSG 61 3516, may determine whether to allow/accept establishment/ modification request for the PDU session. The SMF 3508, based on the policy information received from the PCF, based on the subscription of the wireless device 3502 (e.g., UE), based on the capability of the wireless device (e.g., UE), based on the capability of the UPF, and/or based on the QoS requirements, may determine whether to allow the PDU session as MA-PDU session, and/or whether to allow dualsteer for the PDU session.

A SMF 3508 may send to the AMF 3506, a Nsmf MSG 62 3518. The Nsmf MSG 62 3518 may comprise a 62nd PDU session establishment/modification response message. The 62nd PDU session establishment/modification response message may comprise a field indicating that dualsteer is allowed for the PDU session, and/or the identifier of the PDU session. The 62nd PDU session establishment/modification response message may indicate that the PDU session is rejected for the dualsteer, that the PDU session is allowed/established as non-dualsteer, and/or that dualsteer is not allowed for the PDU session if the SMF determines to not allow dualsteer for the PDU session.

A AMF (e.g., AMF 2 3506) may receive the Nsmf MSG 62 3518. The AMF may send to the wireless device 3502 (e.g., UE), a NAS MSG 62 3520. The NAS MSG 62 may comprise the 62nd PDU session establishment/ modification response message.

A wireless device 3502 (e.g., UE) may determine whether to add a N3GPP access path to the PDU session. The wireless device 3502 (e.g., UE) may determine that adding N3GPP access path (or N3GPP access type) to the PDU session is allowed if the 62nd PDU session establishment/modification response message indicates that the PDU session is MA-PDU session, and/or that MA-PDU session is allowed for the PDU session. The wireless device 3502 (e.g., UE) may check the URSP. The wireless device (e.g., UE) may determine to add the N3GPP access path to the PDU session if the URSP indicates that the wireless device 3502 (e.g., UE) is allowed to use MA-PDU session for the traffic (e.g., a traffic triggered establishment of the PDU session, a traffic using the PDU session). The wireless device 3502 (e.g., UE) may determine not to add N3GPP access path (or N3GPP access type) to the PDU session if the 62nd PDU session establishment/modification response message indicates that the PDU session is not MA-PDU session, and/or that MA-PDU session is not allowed for the PDU session (or for the traffic). A MA-PDU session may refer as a PDU Session allowed to use both 3GPP access path and N3GPP access path. In some scenarios, a dualsteer PDU session (e.g., a PDU session for dualsteer) may refer as a PDU Session allowed to use more than one access paths of an access type.

A wireless device 3502 (e.g., UE), based on that the PDU session is allowed for the MA-PDU session, may send a NAS MSG 63 3522. The NAS MSG 63 3522 may comprise a field indicating that the NAS MSG 63 3522 is for the MA-PDU session, a field indicating that the wireless device 3502 (e.g., UE) supports the feature of dualsteer, a field indicating that the wireless device 3502 (e.g., UE) supports the feature of MA-PDU session, a field indicating a PDU session, a field indicating that the PDU session is associated with dualsteer, a field indicating that the PDU session is associated with MA-PDU session, a field indicating N3GPP access and/or a 63rd PDU session establishment (modification) request message. The wireless device 3502 (e.g., UE) may send the NAS MSG 63 3522 to the AMF 2 3506 via a N3IWF 3509. The AMF 2 3506 may receive the NAS MSG 63 3522.

A AMF (e.g., AMF 2 3506) may send a Nsmf MSG 63 3524 to the SMF 3508. The Nsmf MSG 63 3524 may comprise a field indicating N3GPP access type, and/or the 63rd PDU session establishment (modification) request message. For example, the 63rd PDU session establishment (modification) request message may indicate that the PDU session is for MA-PDU session, and/or that the PDU session is for adding N3GPP access path for the PDU session.

A SMF 3508 may determine whether to allow/accept establishment/ modification request for the PDU session. The SMF 3508 may determine to allow adding N3GPP access path to the PDU session, based on the policy information received from the PCF, based on the subscription of the wireless device (e.g., UE), based on the capability of the wireless device (e.g., UE), based on the capability of the UPF, and/or based on the QoS requirements. The SMF 3508 may send a message to UPF to request adding resources of the N3GPP access to the PDU session.

A SMF 3508 may send to the AMF (e.g., AMF 2 3506), a Nsmf MSG 64 3526. The Nsmf MSG 64 3526 may comprise a 64th PDU session establishment/modification response message. The 64th PDU session establishment/modification response message may comprise a field indicating that the identifier of the PDU session and/or that N3GPP access path is added to the PDU session.

A wireless device 3502 (e.g., UE) may determine whether to add additional 3GPP access path (e.g., third 3GPP access, third access path) to the PDU session. For example, the wireless device 3502 (e.g., UE) may determine that adding additional 3GPP access path to the PDU session is allowed, if the 62nd PDU session establishment/modification response message indicates that the PDU session is allowed for dualsteer, and/or that multiple 3GPP access paths are allowed for the PDU session. The wireless device 3502 (e.g., UE) may check the URSP (e.g., dualsteer policy). The wireless device 3502 (e.g., UE) may determine to add the additional 3GPP access path (e.g., third access path) to the PDU session if the URSP indicates that the wireless device 3502 (e.g., UE) is allowed to use dualsteer (e.g., a PDU session over multiple 3GPP access paths) for the traffic (e.g., a traffic triggered establishment of the PDU session, a traffic using the PDU session). The wireless device (e.g., UE) may determine not to add additional 3GPP access path to the PDU session if the 62nd PDU session establishment/modification response message indicates that the PDU session is not MA-PDU session, and/or that the PDU session is not allowed for dualsteer (e.g., multiple 3GPP access paths).

A wireless device 3502 (e.g., UE), based on that the PDU session is allowed for dualsteer, may send a NAS MSG 65 3530, via RAN 3 3510 (e.g., via third access path). The NAS MSG 65 3530 may comprise a field indicating that the NAS MSG 65 3530 is for dualsteer, a field indicating that the wireless device 3502 (e.g., UE) supports the feature of dualsteer, a field indicating that the wireless device 3502 (e.g., UE) is add/modifying a 3GPP access path for the PDU session, a field indicating the PDU session with multiple 3GPP access paths, a field indicating that the PDU session is associated with dualsteer, a field indicating 3GPP access, a field indicating the additional 3GPP access path (e.g., an identifier for the third access path) and/or a 65th PDU session establishment (modification) request message. The wireless device 3502 (e.g., UE) may send the NAS MSG 65 3530 to the AMF 2 3506 via RAN 3 3510. The AMF 2 3506 may receive the NAS MSG 65 3530 via the RAN 3 3510.

A AMF (e.g., AMF 2 3506) may send a Nsmf MSG 65 3532 to the SMF 3508. The Nsmf MSG 65 3508 may comprise a field indicating 3GPP access type, the identifier of the PDU session, a field indicating the additional 3GPP access path (e.g., an identifier of the third access path) and/or the 65th PDU session establishment (modification) request message. For example, the 65th PDU session establishment (modification) request message may indicate that the PDU session is for dualsteer session, the identifier of the third access path, and/or that the PDU session is for adding/modifying 3GPP access path (e.g., the additional 3GPP access path, the third access path) for the PDU session.

A SMF 3508 may determine whether to allow/accept establishment/ modification request for the PDU session. For example, the SMF 3508 may determine to allow adding/modifying the additional 3GPP access path to the PDU session based on the policy information received from the PCF, based on the subscription of the wireless device (e.g., UE), based on the capability of the wireless device (e.g., UE), based on the capability of the UPF, and/or based on the QoS requirements. The SMF 3508 may send a message to the UPF (e.g., UPF 3434 not shown in FIG. 35), to request allocation (configuration) of resources of the third access path to the PDU session.

A SMF 3508 may send to the AMF (e.g., AMF 2 3506), a Nsmf MSG 66 3534. For example, the Nsmf MSG 66 3534 may comprise a 66th PDU session establishment/modification response message. The 66th PDU session establishment/modification response message may comprise a field indicating the identifier of the PDU session, and/or that the additional 3GPP access path is added/modified to the PDU session.

A 62nd PDU session establishment/modification response message (or the 64th PDU session establishment/modification response message, the 66th PDU session establishment/modification response message, the dualsteer policy information, and/or the URSP) may indicate a second policy. The second policy may indicate how a traffic needs to be distributed among the one or more access paths of the access type. For example, how a traffic needs to be distributed among the one or more access paths of the access type may indicate which access path of the one or more access paths of the access type is used primary (e.g., whenever available, the primary path is used), what portion (e.g., percentage) of traffic is transferred per each access path of the one or more access paths, or criterion for the each access path (e.g., PER, PDB, delay) with which the wireless device (e.g., UE) determine whether to use the access path of the one or more access paths of the access type for data delivery or not. The wireless device (e.g., UE), based on the second policy, may determine (and send) how much data is transferred per each access path of the access type, and act based on that determination.

An policy information may indicate that a first ratio (e.g., a first percentage, a first percent, a first amount) of data is sent over the second access path and/or a second ratio (e.g., a second percentage, a second percent, a second amount) of data is sent over the third access path. The wireless device (e.g., UE), the UPF, and/or the RAN, based on the policy information, may communicate date, following instruction indicated by the policy information.

An policy information can be dynamically transferred to the wireless device/UE/UPF and/or from the UPF/wireless device/UE. The UPF may send the determination (e.g., to send 70% of data via the third access path of the 3GPP access) to the wireless device (e.g., UE) if a UPF determines that 70 % of data is communicated over the third access path and that 30% of data is communicated over the second access path. The wireless device/UE/UPF may use a PMF (performance management function) protocol message to deliver the determination. The wireless device (e.g., UE) may send the 30% of data via the second access path, for the PDU session, if the wireless device (e.g., UE) receives a PMF message indicating that 30% of data is transmitted over the second access path. Similarly, the wireless device (e.g., UE) may send the determination to the UPF via the PMF message.

A SMF 3508 handling the PDU session may communicate with the PCF (e.g., UPF 3434 not shown in FIG. 35) managing the PDU session if the PDU session is established. The PCF may send to the SMF, a SM policy information. The SM policy information may comprise the dualsteer policy information. The PCF may send the dualsteer policy information, if the SMF indicates to the PCF that the wireless device (e.g., UE) supports the feature of dualsteer and/or that the SMF supports the feature of dualsteer. The SM policy information may indicate whether the PDU session is allowed for a dualsteer or not. The SMF may determine based on the SM policy information if the SMF determines whether to allow the wireless device (e.g., UE) to use the PDU session with multiple 3GPP access. The SMF may respond to the wireless device (e.g., UE) that the PDU session is allowed for the dualsteer and/or to configure resources one or more resources using one or more 3GPP access, if the SM policy information indicates that the wireless device (e.g., UE) is allowed for the feature of dualsteer. The SM policy information, in addition, may indicate to the SMF, one or more monitoring keys for one or more access paths. The one or more monitoring keys may comprise a first monitoring key (for the second access path) and/or a second monitoring key (for the third access path). The SMF (and/or the UPF), based on the SM policy information, may measure a first amount of data transferred via the second access path and via a second amount of data transferred via the third access path. The characteristics (and/or used amount of resources) of the third access path may be different from that of the second access path. Using (and indicating) separate monitoring keys for one or more access paths of 3GPP access type may assist for a network function to determine (control) how much data is transferred for each access path. In addition, the SM policy information may comprise one or more reporting thresholds (e.g., second reporting threshold, first reporting threshold) for the one or more access paths. For example, the first reporting threshold may indicate a first threshold (e.g., first time, first volume) for the second access path, the second reporting threshold may indicate a second threshold (e.g., second time, second volume) for the third access path. The UPF/SMF may perform measurement of data transfer per each access path. The UPF/SMF may send a message to the PCF, indicating a monitoring key (e.g., the second monitoring key) and/or measurement value (e.g., amount of data associated with the second access path), if the first threshold is met for the second access path. The UPF/SMF may send a message to the PCF, indicating a monitoring key (e.g., the second monitoring key) and/or measurement value (e.g., amount of data associated with the third access path), if the second threshold is met for the third access path. This may help the PCF to control whether to allow further data transfer per each access paths of the 3GPP access.

An SM policy information may be a PCC rule. For example, the PCC rule may indicate application description, steering functionality, steering mode, steering mode indicator, and/or the like. The application description may indicate a characteristic of a data flow (e.g., traffic descriptor, OS identifier, OS App identifier, a service data flow) for which the steering functionality, steering mode, steering mode indicator may apply. The steering functionality may indicate how the data flow is delivered. The steering mode may indicate how a data of the data flow is transferred over the one or more access paths of the access type. The steering mode may indicate which access path (e.g., second access path) of the 3GPP access is stand-by access and/or which access path (e.g., third access path) of the 3GPP access is active access. This may help the wireless device/UE/UPF to determine which access paths of the 3GPP access needs to be used if more than one access paths of the 3GPP access are available. The wireless device (e.g., UE) may not use the second access path for data communication (regardless of whether the third access path is usable or not) if the third access path is available for data communication, because the third access path is 'active' access path. The SMF based on the PCC rule received from PCF for the PDU session allowed for dualsteer, may send a configuration information (e.g., on how to support one or more access paths of 3GPP access) to the wireless device (e.g., UE) and/or to the UPF.

A SMF 3508 may reject the request from the wireless device 3502 (e.g., UE) if the PDU session is not allowed for dualsteer (e.g., because resources are not enough, change of network configuration, change of policy, and/or the like). The Nsmf MSG 62 3518 may comprise an indication (e.g., rejection cause) that the dualsteer is not allowed for the PDU session, and/or that the dualsteer is not supported if the SMF receives the Nsmf MSG 61 3516, and/or if the SMF determines not to allow the dualsteer for the PDU session. The wireless device 3502 (e.g., UE), because of the indication, may not send the NAS MSG 65 3530 (e.g., request to add additional 3GPP access path to the PDU session) and/or the UE may add additional access path to the PDU session.

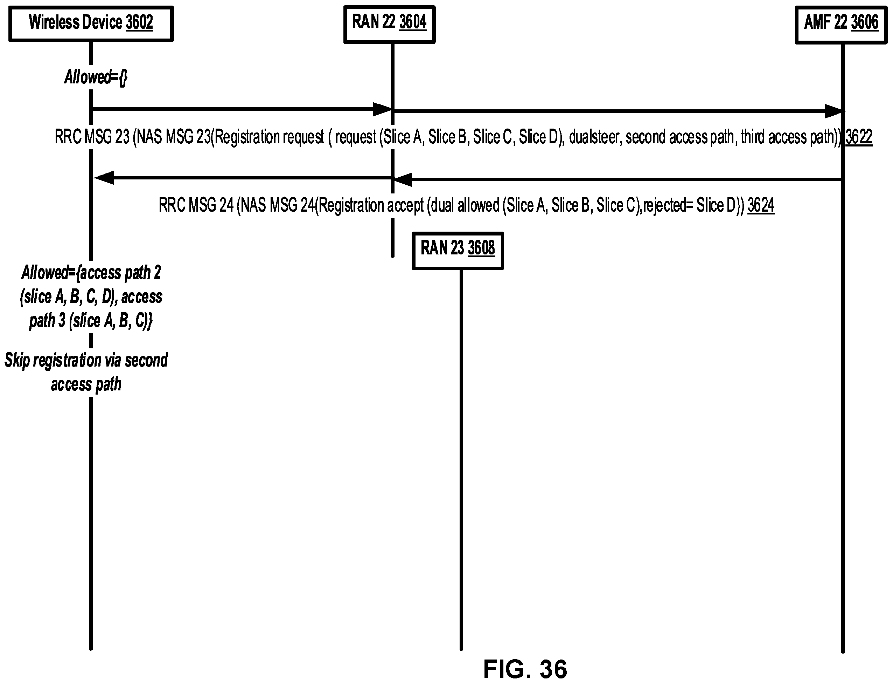

FIG. 36 shows an example of sending a message, indicating registration of a network slice, to a wireless device. A network may send to the wireless device 3602 (e.g., UE), a message indicating registration of a network slice over one or more access paths of an access type. The message may help reducing a signaling message between a wireless device 3602 (e.g., UE) and a AMF (e.g., AMF 22 3606). For brevity, based on the other part of the present disclosure, redundant details will be omitted.

A wireless device (e.g., UE) may send the NAS MSG 23 3622 to the AMF 22 3606. The NAS MSG 23 3622 may indicate that the wireless device 3602 (e.g., UE) requests registration of the slice A, slice B, slice C, and/or the slice D. The NAS MSG 23 3622 may indicate that the wireless device 3602 (e.g., UE) supports the feature of dualsteer, that the wireless device 3602 (e.g., UE) is registering for dualsteer, an information of the second access path (e.g., identifier of the second access path, an PLMN of the second access path, a radio access network of the second access path, identifier of the wireless device 3602 (e.g., UE) for the second access path, and/or the like), an information of the third access path (e.g., identifier of the third access path, a third PLMN of the third access path, a third radio access network of the third access path, a third identifier of the wireless device 3602 (e.g., UE) for the third access path, and/or the like). and/or the like.

A AMF 22 3606, based on (e.g., in response to) the NAS MSG 23 3622, may send the NAS MSG 24 3624, via the second access path (e.g., the RAN 22 3604), to the wireless device 3602 (e.g., UE). The NAS MSG 24 3624 may indicate that the slice A, slice B, slice C are allowed for dualsteer, and/or that the slice A, slice B, slice C are allowed for the second access path and/or for the third access path, that the slice D is rejected. The NAS MSG 24 3624 may indicate one or more second network slices allowed for the second access path, one or more third network slices allowed for the third access path.

A wireless device 3602 (e.g., UE) may receive the NAS MSG 24 3624 from the AMF 22 3606 via the RAN 22 3604 (e.g., the second access path of the 3GPP access type). The wireless device 3602 (e.g., UE) may consider that the wireless device (e.g., UE) is registered for the third access path, and/or the slice A, slice B, and the slice C is allowed for the third access path because the NAS MSG 24 3624 indicates that the network slice A, slice B, and slice C is allowed for dualsteer, that the network slice A, the slice B, and the slice C is allowed for the third access path. This may help in reducing signaling, because the wireless device 3602 (e.g., UE) knows the allowed network slices for the third access path, without sending a registration message for the third access path, or the wireless device 3602 (e.g., UE) may skip registration procedure for the third access path.

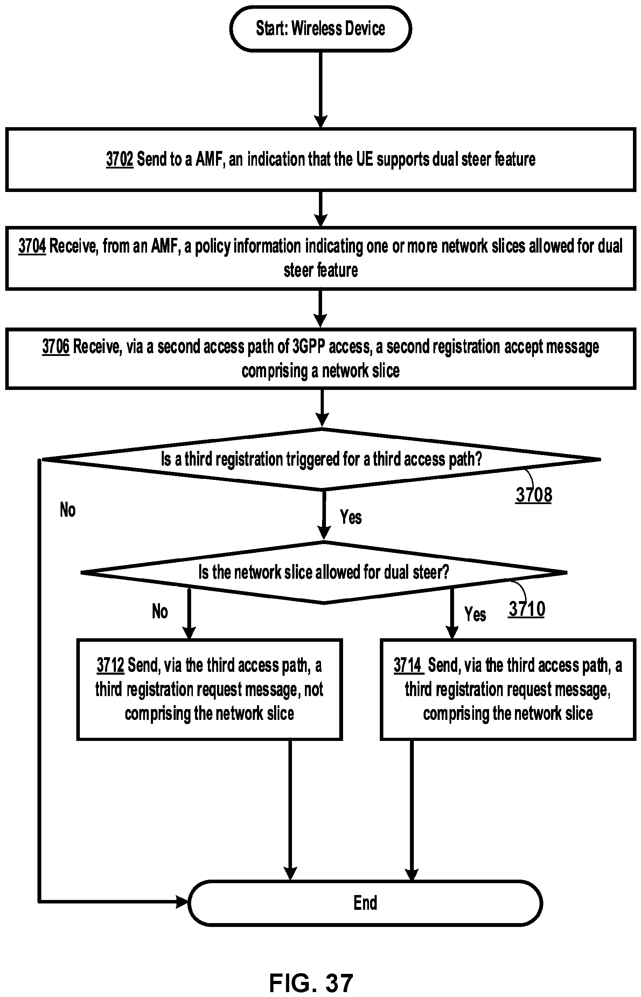

FIG. 37 shows an example of a wireless device using a dualsteer policy to register a network slice. At 3702, a wireless device (e.g., UE) may send to a first AMF, a first message comprising an indication that the wireless device (e.g., UE) supports the feature of dualsteer (dual steer). At 3704, the wireless device (e.g., UE) may receive from the first AMF, a second message after sending the first message. For example, the second message may comprise a policy information. The policy information may indicate one or more first network slices allowed for the feature of dual steer and/or one or more second network slices not allowed for the feature of dual steer (e.g., dual steer feature). The one or more first network slices may comprise a first network slice and/or the one or more second network slices may comprise a second network slice.

At 3706, a wireless device (e.g., UE) may receive via a second access path, a second registration accept message indicating an allowed network slice (e.g., slice A). The wireless device (e.g., UE) may determine whether additional registration is required. For example, based on QoS requirement (e.g., higher data rate, higher reliability), the wireless device (e.g., UE) may determine to perform additional registration for additional 3GPP access. The wireless device (e.g., UE), based on (e.g., in response to) determining to do additional registration (e.g., multiple registration, dualsteer registration), may select a third access path (e.g., third 3GPP access).

At 3708, the wireless device (e.g., UE) may determine which network slices to request over the third access path. At 3710, the wireless device (e.g., UE), for each network slice which is allowed by the existing (available, primary, previous) registration (e.g., registration over the second access path), may check whether the network slice is required for registration and/or whether the network slice is allowed for dualsteer.

At 3714, a wireless device (e.g., UE) may request registration of the first network slice via the third access path because the first network slice is allowed via the second access path, and/or because the first network slice is allowed for dualsteer (e.g., additional registration for the access type). For example, the wireless device (e.g., UE) may construct a third registration request message comprising the first network slice and/or the wireless device (e.g., UE) may send the third registration request message.

At 3712, a wireless device (e.g., UE) may not request registration of the second network slice via the third access path because the second network slice is allowed via the second access path, and/or because the second network slice is not allowed for dualsteer (e.g., additional registration for the access type). For example, the wireless device (e.g., UE) may construct a third registration request message not comprising the second network slice and/or the wireless device (e.g., UE) may send the third registration request message.

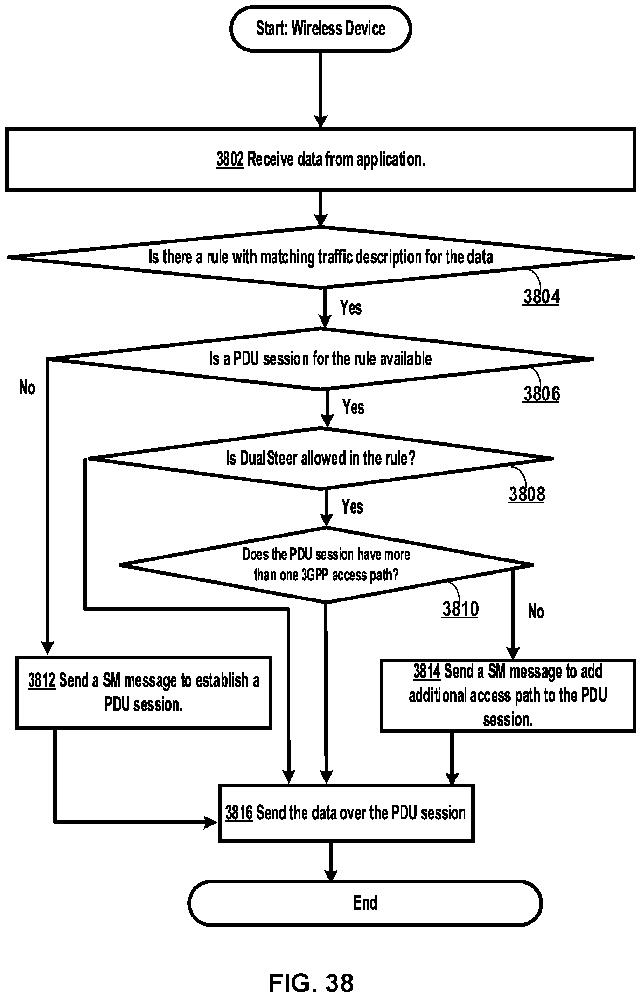

FIG. 38 shows an example of a wireless device establishing a PDU session. A wireless device (e.g., UE), at 3802, may receive a data from an application. The wireless device (e.g., UE), at 3804, may check whether there is a rule (e.g., policy rule). For example, the wireless device (e.g., UE) may determine whether there is a rule which traffic descriptor matches characteristics of the data.

A wireless device (e.g., UE), at 3806, may check whether there is an established PDU session. For example, the wireless device (e.g., UE) may check whether there is the established PDU session if the wireless device (e.g., UE) determines that there is the rule which traffic descriptor matches the data. The wireless device (e.g., UE) may determine whether a characteristic of the established PDU session matches a route selection descriptor of the rule.

A wireless device (e.g., UE), at 3812, may determine to send a SM message to establish a first PDU session if the wireless device (e.g., UE) determine that there is no established PDU session whose characteristic matches the route selection descriptor of the rule.

A wireless device (e.g., UE), at 3808, may determine whether dualsteer (e.g., using more than one 3GPP access paths) is allowed for the data. For example, the wireless device (e.g., UE) may determine whether dualsteer is allowed, if there is the rule whose traffic descriptor matches the data. The wireless device (e.g., UE) may determine whether dualsteer is allowed, if there is the established PDU session whose characteristics (e.g., network slice, access path, access type) matches the route selection descriptor of the rule. The route selection descriptor of the rule may indicate that the dualsteer is allowed.

A wireless device (e.g., UE), at 3810, may determine whether the PDU session has more than one 3GPP access path or not. The wireless device (e.g., UE) may determine whether the PDU session has more than one 3GPP access path or not, if the rule indicates that the dualsteer is allowed for the PDU session (and/or the data). The wireless device (e.g., UE), at 3814, may send a second message (e.g., PDU session establishment request, PDU session modification request) to a SMF, to add additional 3GPP access path to the PDU session if the PDU session does not have more than one 3GPP access paths. The wireless device (e.g., UE) may add a third access path to the PDU session, by sending the second message if the PDU session is using a second 3GPP access path. The wireless device (e.g., UE) may send a third message (e.g., a registration request message) to an AMF to register additional access path (e.g., third access path) if the PDU session does not have more than one 3GPP access paths, and/or if more than access paths are not registered. The wireless device (e.g., UE), at 3816, may send the data over the PDU session.

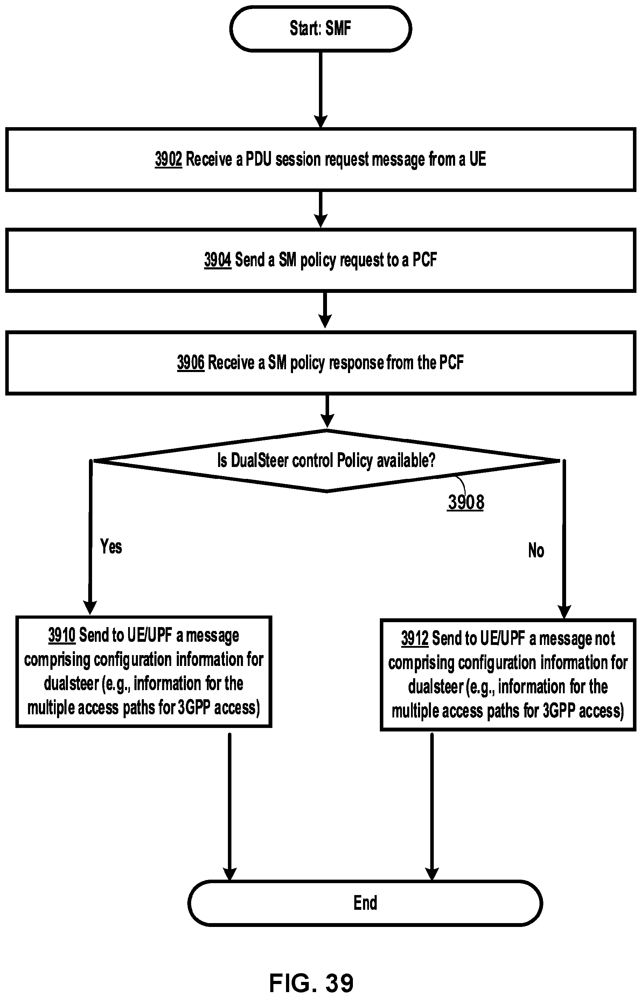

FIG. 39 shows an example of a session management function (SMF) sending dualsteer configuration information. A SMF, at 3902, may receive from a wireless device (e.g., UE), a PDU session (establishment/ modification) request message, via a second access path of 3GPP access type.

A SMF, at 3904, may send a SM Policy (establishment/ modification) request message to a PCF. The SM policy request message may indicate that the wireless device (e.g., UE) supports a feature of dualsteer, that the SMF is supporting the feature of dualsteer, and/or that a PDU session is requested from the wireless device (e.g., UE) for dualsteer.

A SMF, at 3906, may receive from the PCF, a SM policy (establishment/modification) response message. The SM policy response message may comprise an SM policy information. The SM policy information may be a PCC rule, a SM policy information, a dualsteer policy information and/or the like. The SMF at 3908 may determine if the SM policy information comprises a dualsteer (e.g., multiple access 3GPP access paths, multiple access paths of an access type) policy control information.

A SMF at 3910 may determine to configure the wireless device (e.g., UE) and/or a UPF, with dualsteer configuration information and/or to send the dualsteer configuration information if the SM policy information comprises a dualsteer (e.g., multiple access 3GPP access paths, multiple access paths of an access type) policy control information. For example, the dualsteer configuration information (e.g., the example of FIG. 26, FIG. 27) may indicate that the use of more than one access paths for the access type is allowed, may comprise the dualsteer policy information, may comprise one or more parameters that the wireless device/UE (or UPF) may use to configure bearers over the one or more access paths, may indicate an authorization (allowance) to use the feature of the dualsteer, may comprise a first configuration parameter for the second access path, may comprise a second configuration parameter for the third access path, and/or the like. The configuration parameter may indicate when to use the second access path, and/or the third access path, how much data to send over the second access path of a first access type and/or the third access path of the first access type and/or a fourth access path of a second access type.

A SMF at 3912 may determine not to configure the wireless device (e.g., UE) and/or a UPF, with dualsteer configuration information, not to send authorization for the dualsteer and/or not to send the dualsteer configuration information, to the UPF and/or to the wireless device (e.g., UE) if the SM policy information does not comprise information of the dualsteer (e.g., multiple access 3GPP access paths, multiple access paths of an access type) policy control information.

As described herein, examples in the disclosure, using more than one 3GPP access paths are described. Similar principles may be applicable to a case where more than one N3GPP access paths (and/or with one or more 3GPP access paths) are used.

A wireless device (e.g., UE) may send a request message. For example, the request message may be sent to a core network node. The core network node may be at least one of an AMF, an SMF, and UDM, a PCF, and/or the like. The request message may comprise a request for one or more parameters, and/or an indication that the wireless device (e.g., UE) supports a feature of dualsteer. for example, the feature of dualsteer may be using more than one access paths for an access type. Each access path of the more than one access paths may be associated with a 3GPP cell, a 3GPP RAN, a 3GPP RAT, and/or the like.

A wireless device (e.g., an UE) may receive, a configuration message. The configuration message may comprise at least one of a network slice identifier of a network slice (e.g., a network slice A) of plurality of network slices of a network, an indication that the network slice is allowed for multiple 3GPP access. The multiple 3GPP access may comprise at least a first 3GPP access and a second 3GPP access. The multiple 3GPP access may be established using one or more 3GPP RATs and/or using one or more 3GPP RANs (e.g., NG-RANs, E-UTRANs). The plurality of network slices may comprise one or more first network slices and/or one or more second network slices. The one or more first network slices may comprise the network slice (e.g., the network slice A). The one or more second network slices may comprise a second network slice. The network slice identifier may be a S-NSSAI (or NSSAI) of the network slice. The configuration message may further comprise a second network slice identifier for the second network slice and/or a second indication that indicates the second network slice is not allowed for the multiple 3GPP access. The configuration message may further comprise an indicator indicating whether the network slice is allowed for use over an N3GPP access path of an N3GPP access type. The configuration message may further comprise a traffic descriptor. The configuration message may further comprise a policy control information indicating whether a PDU session for a service data flow matching the traffic descriptor is preferred to use resources over more than one 3GPP access paths (e.g., multiple 3GPP access).

A network slice is allowed for multiple 3GPP access may be that the network slice is allowed for use via the multiple access (e.g., multiple access paths, multiple 3GPP access paths), that the network slice is preferred for use via the multiple access, that the network slice is allowed for registration via the multiple access, and/or that the wireless device (e.g., UE) is allowed for being concurrently (simultaneously) registered for the network slice via the multiple access. The multiple access may be the multiple 3GPP access. That the wireless device (e.g., UE) is concurrently being registered for the network slice via the multiple access may be that a first portion of first time of the registration via the first access path may overlap at least with a second portion of second time of registration via the second access.

A wireless device (e.g., UE) may send via the first 3GPP access, a first registration request message requesting the network slice. For example, the first 3GPP access may be established via a first NG-RAN, a first E-UTRAN, an NTN (e.g., using a drone, a UAV, a satellite, and/or the like) radio access network, a NR RAT, a E-UTRA RAT, and/or the like. The first 3GPP access may be a 3GPP access type. The first registration request message may comprise the second network slice.

A wireless device (e.g., UE) may send via the second 3GPP access, a second registration request message requesting the network slice (e.g., the network slice A). For example, the second 3GPP access may be established via a second NG-RAN, a second E-UTRAN, a TN (e.g., using equipment on the ground, in the building, on the road) radio access network, a NR RAT, an E-UTRA RAT, and/or the like. The wireless device (e.g., UE) may send the second registration message, if the wireless device (e.g., UE) is registered via the first 3GPP access. The wireless device (e.g., UE) may send the second registration message, for additional registration while the wireless device (e.g., UE) is registered via the first 3GPP access. The wireless device (e.g., UE) may send the second registration request, because the parameter indicates that the network slice is allowed for multiple 3GPP access. The wireless device (e.g., UE) may not send the second registration request message if the parameter does not indicate that the network slice is allowed for multiple 3GPP access, or if the wireless device (e.g., UE) does not receive the parameter. The second 3GPP access may be a 3GPP access type. The second registration request message may not comprise the second network slice.

A wireless device (e.g., UE) may send a PDU session request message for a first PDU session via the first 3GPP access after the network slice is allowed (e.g., registered) via the first 3GPP access and/or via the second 3GPP access. The wireless device (e.g., UE) may send a second PDU session request message for the first PDU session via the second 3GPP access after the network slice is allowed (e.g., registered) via the first 3GPP access and/or via the second 3GPP access and/or after the first PDU session is established via the first 3GPP access.

A wireless device (e.g., UE) may receive a configuration information. The configuration information may comprise an identifier of a network slice and an indication indicating the network slice being allowed to use over a plurality of 3GPP access paths. The wireless device (e.g., UE) may receive an indication that a network slice is allowed to be used by the wireless device over multiple 3GPP access paths during an overlapping time period. The wireless device (e.g., UE) may receive via a first access path of the plurality of 3GPP access paths, a registration accept message indicating the network slice being allowed. The wireless device (e.g., UE), based on the indication, may send via a second access of the plurality of 3GPP access paths, a registration request message requesting the network slice.

A wireless device (e.g., UE) may receive from a first core network node, a configuration information comprising a first indication indicating a first network slice being allowed for registration over a plurality of 3GPP access paths and a second indication indicating a second network slice being allowed for registration over a 3GPP access path. The wireless device (e.g., UE) may receive via a first 3GPP access path of the plurality of 3GPP access paths, a registration accept message for the first network slice. The wireless device (e.g., UE), based on the first indication, may send via a second 3GPP access path of the plurality of 3GPP access paths, a registration request message requesting the first network slice.

A wireless device (e.g., UE) may send an indication that the wireless device (e.g., UE) supports concurrently using a plurality of 3GPP access paths. The wireless device (e.g., UE) may receive from a first core network node, a configuration information comprising a traffic description indicating a service data flow and an indication indicating that a plurality of 3GPP access paths is preferred for the service data flow. In an example, the wireless device (e.g., UE) may receive via a first 3GPP access path of the plurality of 3GPP access paths, an establishment accept message for a protocol data unit (PDU) session, wherein the PDU session is used for the service data flow. The wireless device (e.g., UE) may send, based on the indication, via a second 3GPP access paths of the plurality of 3GPP access paths, a PDU session request message for the PDU session.

A wireless device (e.g., UE) may receive, a configuration information comprising an identifier of a network slice and an indication indicating the network slice being allowed for registration over a plurality of 3GPP access paths comprising a first access path and a second access path. The wireless device (e.g., UE), based on the indication, may send while the network slice being allowed for the first access path and via a second access of the plurality of 3GPP access paths, a registration request message requesting the network slice.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: receiving, by a wireless device, a configuration message comprising: a network slice identifier indicating a network slice of a plurality of network slices; an indication that the network slice is allowed for multiple 3rd Generation Partnership Project (3GPP) access, wherein the multiple 3GPP access comprise at least a first 3GPP access and a second 3GPP access.

Clause 1B. The method of clause 1A, further comprising: sending, by the wireless device and via the first 3GPP access, a first registration request message requesting the network slice.

Clause 1C. The method of clause 1B, further comprising: sending, by the wireless device, and via the second 3GPP access, a second registration request message requesting the network slice, wherein the network slice is allowed via the first 3GPP access. Reference to clause 1 herein may refer to one or each of clause 1A, clause 1B and clause 1C.

Clause 2. The method of clause 1, further comprising: receiving, by the wireless device and via a plurality of 3GPP access, a plurality of registration accept messages indicating one or more of a second network slice of the plurality of network slices is allowed, or a third network slice of the plurality of network slices is rejected for one or more of the plurality of 3GPP access; and sending, based on one of the plurality of registration accept messages and via a third 3GPP access of the plurality of 3GPP access, a third registration request message deregistering the second network slice.

Clause 3. The method of any one of clauses 1-2, further comprising: sending, by the wireless device, a request message for the parameter, wherein: the request message comprises an indication that the wireless device supports a feature of dualsteer; the feature of dualsteer is using a plurality of access paths for an 3GPP access type; and at least one access path of the plurality of access paths is associated with at least one of: a 3GPP cell; or a 3GPP radio access network (RAN).

Clause 4. The method of any one of clauses 1-3, wherein the configuration message further comprises: a second network slice identifier indicating a second network slice of the plurality of network slices; and a second indication that indicates the second network slice is not allowed for the multiple 3GPP access.

Clause 5. The method of clause 4, wherein the sending the first registration request message further comprises: sending, based on the second parameter and via the first 3GPP access, the first registration request message requesting the network slice and the second network slice; and wherein the sending the second registration request message further comprises: sending. based on the second parameter and via the second 3GPP access, the second registration request message requesting the network slice, wherein the second slice is excluded in the second registration request message.

Clause 6. The method of any one of clauses 1-5, further comprising: concurrently registering for the network slice via the multiple 3GPP access by sending the first registration request message and the second registration request message, wherein: a portion of time of the registration via the first 3GPP access overlaps a time of registration via the second 3GPP access.

Clause 7. The method of any one of clauses 1-6, wherein the configuration message further comprises: a traffic descriptor; and a policy control information, wherein the policy control information indicates that a protocol data unit (PDU) session for a service data flow matching the traffic descriptor is preferred to use more than one 3GPP access paths.

Clause 8. The method of any one of clauses 1-7, further comprising: sending, via the first 3GPP access, a first protocol data unit (PDU) session request message for a first PDU session; and sending, via the second 3GPP access, a second PDU session request message for the first PDU session.

Clause 9. The method of any one of clauses 1-8, further comprising: receiving, based on the first registration request message and via the first 3GPP access, a first registration accept message indicating the network slice is allowed; and receiving, based on the second registration request message and via the second 3GPP access, a second registration accept message indicating the network slice is allowed.

Clause 10. The method of any one of clauses 1-9, wherein the configuration message further comprises an indicator indicating whether the network slice is allowed for use over a non-3GPP (N3GPP) access path of a N3GPP access type.

Clause 11A. A method comprising: receiving, by a wireless device and via a first 3rd Generation Partnership Project (3GPP) access, a first registration accept message indicating a network slice of a plurality of network slices is allowed.

Clause 11B. The method of clause 11A, further comprising: receiving, by the wireless device and via a second 3GPP access, a second registration accept message, wherein: the second registration accept message indicates the network slice is rejected for multiple 3GPP access; and the multiple 3GPP access comprise at least the first 3GPP access and the second 3GPP access.

Clause 11C. The method of clause 11B, further comprising: sending, based on the second registration accept message and via the first 3GPP access, a first registration request message deregistering the network slice. Reference to clause 11 herein may refer to one or each of clause 11A, clause 11B and clause 11C.

Clause 12. The method of clause 11, further comprising: sending, based on the second registration accept message and via the second 3GPP access, a second registration request message registering the network slice; and receiving, based on the second registration request message, a third registration accept message indicating the network slice being allowed.

Clause 13. The method of any one of clauses 11-12, wherein the first registration request message further comprises: an indication requesting a second network slice of the plurality of network slices; and wherein the method further comprising: sending, based on the second registration accept message and via the second 3GPP access, a second registration request message registering the second network slice.

Clause 14. The method of any one of clauses 11-13, further comprising: sending, based on the second registration accept message and via the second 3GPP access, a second registration request message registering: the network slice; and a second network slice of the plurality of network slices; and receiving, based on the second registration request message, a third registration accept message indicating both the network slice and the second network slice are allowed.

Clause 15. The method of any one of clauses 11-14, further comprising: determining, based on the second registration accept message and quality of service associated with the second 3GPP access, to register the network slice via the second 3GPP access; and sending, based on the determination and via the second 3GPP access, a second registration request message registering the network slice.

Clause 16. The method of any one of clauses 11-15, further comprising: sending, via the first 3GPP access, a third registration request message registering the network slice; and wherein receiving the first registration accept message further comprises: receiving, based on the third registration request message and via the first 3GPP access, the first registration accept message.

Clause 17A. A method comprising: receiving, by a access and mobility management function (AMF) and via a second multiple 3rd Generation Partnership Project (3GPP) access, a first registration request message registering a network slice of a plurality of network slices, wherein the network slice is allowed via a first 3GPP access.

Clause 17B. The method of clause 17A, further comprising: sending, by the AMF and via a second 3GPP access, a first registration accept message, wherein: the first registration accept message indicates the network slice is rejected for multiple 3GPP access; and the multiple 3GPP access comprise at least the first 3GPP access and the second 3GPP access.

Clause 17C. The method of clause 17A, further comprising: receiving, based on the first registration accept message and via the second 3GPP access, a second registration request message registering the network slice, wherein the network slice is deregistered via the first 3GPP access. Reference to clause 17 herein may refer to one or each of clause 17A, clause 17B and clause 17C.

Clause 18. The method of claim 17, further comprising: sending, based on the second registration request message and via the second 3GPP access, a second registration accept message indicating the network slice is allowed.

Clause 19. The method of any one of clauses 17-18, wherein: a second network slice of the plurality of network slices is allowed via the first 3GPP access; and the receiving the second registration request message further comprising: receiving the second registration request message registering: the network slice; and the second network slice.

Clause 20. The method of any one of clauses 17-19, wherein the receiving the second registration request message further comprises: receiving the second registration request message registering: the network slice; and a second network slice of the plurality of network slices; and sending, based on the second registration request message, a second registration accept message indicating both the network slice and the second network slice are allowed.

Clause 21A. A method comprising: sending, by a wireless device, an indication that wireless device supports concurrently using a plurality of multiple 3rd Generation Partnership Project (3GPP) access paths.

Clause 21B. The method of clause 21A, further comprising: receiving, by a wireless device from a first core network node, a configuration information comprising: a traffic description indicating a service data flow; and an indication indicating that a plurality of 3GPP access paths is preferred for the service data flow.

Clause 21C. The method of clause 21B, further comprising: receiving, by the wireless device and via a first 3GPP access path of the plurality of 3GPP access paths, an establishment accept message for a protocol data unit (PDU) session, wherein the PDU session is used for the service data flow.

Clause 21D. The method of clause 21C, further comprising: based on the indication, sending by the wireless device and via a second 3GPP access paths of the plurality of 3GPP access paths, a PDU session request message for the PDU session. Reference to clause 21 herein may refer to one or each of clause 21A, clause 22B, clause 22C and clause 22D.

Clause 22. A computing device comprising: one or more processors; and memory storing instructions that, when executed by the one or more processors, cause the computing device to perform the method of any one of clauses 1-21.

Clause 23. A system comprising: a wireless device configured to perform the method of any one of clauses 1-16, 21; and a access and mobility management function (AMF) configured to perform the method of any one of clauses 17-20.

Clause 24. A computer-readable medium storing instructions that, when executed, cause performance of the method of any one of clauses 1-21.

Clause 25. The method of any one of clauses 1-21, wherein the first access and the second access are 3GPP access type.

Clause 26. The method of any one of clauses 1-21, 25, wherein the first access and the second access are 3GPP access type.

Clause 27. The method of any one of clauses 1-21, 25-26, wherein that the network slice is configured for use via the multiple access is that the network slice is allowed for use via the multiple access.

Clause 28. The method of any one of clauses 1-21, 25-27, wherein that the network slice is configured for use via the multiple access is that the network slice is preferred for use via the multiple access.

Clause 29. The method of any one of clauses 1-21, 25-28, wherein that the network slice is configured for use via the multiple access is that the network slice is allowed for registration via the multiple access.

A wireless device may perform a method comprising multiple operations. The wireless device may receive a configuration message comprising: a network slice identifier indicating a network slice of a plurality of network slices; an indication that the network slice is allowed for multiple 3rd Generation Partnership Project (3GPP) access, wherein the multiple 3GPP access may comprise at least a first 3GPP access and a second 3GPP access; may send, via the first 3GPP access, a first registration request message requesting the network slice; may send, via the second 3GPP access, a second registration request message requesting the network slice, wherein the network slice may be allowed via the first 3GPP access. The wireless device may receive, via a plurality of 3GPP access, a plurality of registration accept messages indicating one or more of a second network slice of the plurality of network slices is allowed, or a third network slice is rejected for multiple 3GPP access; and may send, based on one of the plurality or registration accept messages and via the third 3GPP access of the plurality of 3GPP access, a third registration request message deregistering the second network slice. The wireless device may send a request message for the parameter, wherein: the request message may comprise an indication that the wireless device supports a feature of dual steer; the feature of dualsteer is using a plurality of access paths for an 3GPP access type; and at least one access path of the plurality of access paths may be associated with at least one of: a 3GPP cell; or a 3GPP radio access network (RAN); wherein the configuration message may further comprise: a second network slice identifier indicating a second network slice of the plurality of network slices; and a second indication that indicates the second network slice is not allowed for the multiple 3GPP access; wherein the sending the first registration request message may further comprise: sending, based on the second parameter and via the first 3GPP access, the first registration request message requesting the network slice and the second network slice; and wherein the sending the second registration request message may further comprise: sending, based on the second parameter and via the second 3GPP access, the second registration request message requesting the network slice, wherein the second slice may be excluded in the second registration request message. The wireless device may concurrently register for the network slice via the multiple 3GPP access by sending the first registration request message and the second registration request message, wherein: a portion of time of the registration via the first 3GPP access may overlap a time of registration via the second 3GPP access; wherein the configuration message may further comprise: a traffic descriptor; and a policy control information, wherein the policy control information may indicate that a protocol data unit (PDU) session for a service data flow matching the traffic descriptor is preferred to use more than one 3GPP access paths. The wireless device may send, via the first 3GPP access, a first protocol data unit (PDU) session request message for a first PDU session; and may send, via the second 3GPP access, a second PDU session request message for the first PDU session. The wireless device may receive, based on the first registration request message and via the first 3GPP access, a first registration accept message indicating the network slice is allowed; and may receive, based on the second registration request message and via the second 3GPP access, a second registration accept message indicating the network slice is allowed; wherein the configuration message may further comprise an indicator indicating whether the network slice is allowed for use over a non-3GPP (N3GPP) access path of a N3GPP access type; wherein the first access and the second access may be 3GPP access type; wherein the first access and the second access may be 3GPP access type; wherein that the network slice may be configured for use via the multiple access may be that the network slice may be allowed for use via the multiple access; wherein that the network slice may be configured for use via the multiple access may be that the network slice may be preferred for use via the multiple access; wherein that the network slice may be configured for use via the multiple access may be that the network slice may be allowed for registration via the multiple access. A computing device may comprise: one or more processors; and memory storing instructions that, when executed by the one or more processors, cause the computing device to perform the described method, additional operations and/or include the additional elements. A system may comprise: a wireless device configured to perform the described method, additional operations and/or include the additional elements; and a access and mobility management function (AMF) configured to receive a registration request message. A computer-readable medium storing instructions that, when executed, cause performance of the described method, additional operations and/or include the additional elements.

A wireless device may perform a method comprising multiple operations. The wireless device may receive, via a first 3rd Generation Partnership Project (3GPP) access, a first registration accept message indicating a network slice of a plurality of network slices is allowed; may receive, via a second 3GPP access, a second registration accept message, wherein: the second registration accept message may indicate the network slice is rejected for multiple 3GPP access; and the multiple 3GPP access may comprise at least the first 3GPP access and the second 3GPP access; may send, based on the second registration accept message and via the first 3GPP access, a first registration request message deregistering the network slice. The wireless device may send, based on the second registration accept message and via the second 3GPP access, a second registration request message registering the network slice; and may receive, based on the second registration request message, a third registration accept message indicating the network slice being allowed, wherein the first registration request message may further comprise: an indication requesting a second network slice of the plurality of network slices. The wireless device may send, based on the second registration accept message and via the second 3GPP access, a second registration request message registering the second network slice. The wireless device may send, based on the second registration accept message and via the second 3GPP access, a second registration request message registering: the network slice; and a second network slice of the plurality of network slices; and may receive, based on the second registration request message, a third registration accept message indicating both the network slice and the second network slice are allowed. The wireless device may determine, based on the second registration accept message and quality of service associated with the second 3GPP access, to register the network slice via the second 3GPP access; and may send, based on the determination and via the second 3GPP access, a second registration request message registering the network slice. The wireless device may send, via the first 3GPP access, a third registration request message registering the network slice; and wherein receiving the first registration accept message may further comprise: receiving, based on the third registration request message and via the first 3GPP access, the first registration accept message; wherein the first access and the second access may be 3GPP access type; wherein the first access and the second access may be 3GPP access type; wherein that the network slice may be configured for use via the multiple access may be that the network slice may be allowed for use via the multiple access; wherein that the network slice may be configured for use via the multiple access may be that the network slice may be preferred for use via the multiple access; wherein that the network slice may be configured for use via the multiple access may be that the network slice may be allowed for registration via the multiple access. A computing device may comprise: one or more processors; and memory storing instructions that, when executed by the one or more processors, cause the computing device to perform the described method, additional operations and/or include the additional elements. A system may comprise: a wireless device configured to perform the described method, additional operations and/or include the additional elements; and a access and mobility management function (AMF) configured to receive a registration request message. A computer-readable medium storing instructions that, when executed, cause performance of the described method, additional operations and/or include the additional elements.

A access and mobility management function (AMF) may perform a method comprising multiple operations. The AMF may receive, via a second multiple 3rd Generation Partnership Project (3GPP) access, a first registration request message registering a network slice of a plurality of network slices, wherein the network slice may be allowed via a first 3GPP access. The AMF may send, via a second 3GPP access, a first registration accept message, wherein: the first registration accept message may indicate the network slice is rejected for multiple 3GPP access; and the multiple 3GPP access may comprise at least the first 3GPP access and the second 3GPP access. The AMF may receive, based on the first registration accept message and via the second 3GPP access, a second registration request message registering the network slice, wherein the network slice nay be deregistered via the first 3GPP access. The AMF may send, based on the second registration request message and via the second 3GPP access, a second registration accept message indicating the network slice is allowed; wherein: a second network slice of the plurality of network slices may be allowed via the first 3GPP access; and the receiving the second registration request message may further comprise: receiving the second registration request message registering: the network slice; and the second network slice; wherein the receiving the second registration request message may further comprise: receiving the second registration request message registering: the network slice; and a second network slice of the plurality of network slices; and sending, based on the second registration request message, a second registration accept message indicating both the network slice and the second network slice are allowed; wherein the first access and the second access may be 3GPP access type; wherein the first access and the second access may be 3GPP access type; wherein that the network slice may be configured for use via the multiple access may be that the network slice may be allowed for use via the multiple access; wherein that the network slice may be configured for use via the multiple access may be that the network slice may be preferred for use via the multiple access; wherein that the network slice may be configured for use via the multiple access may be that the network slice may be allowed for registration via the multiple access. A computing device may comprise: one or more processors; and memory storing instructions that, when executed by the one or more processors, cause the computing device to perform the described method, additional operations and/or include the additional elements. A system may comprise: a wireless device configured to send a registration request message; and a AMF configured to perform the described method, additional operations and/or include the additional elements. A computer-readable medium storing instructions that, when executed, cause performance of the described method, additional operations and/or include the additional elements.

A wireless device may perform a method comprising multiple operations. The wireless device may send an indication that wireless device supports concurrently using a plurality of multiple 3rd Generation Partnership Project (3GPP) access paths; may receive, from a first core network node, a configuration information comprising: a traffic description indicating a service data flow; and an indication indicating that a plurality of 3GPP access paths may be preferred for the service data flow; may receive, via a first 3GPP access path of the plurality of 3GPP access paths, an establishment accept message for a protocol data unit (PDU) session, wherein the PDU session may be used for the service data flow. Based on the indication, the wireless device may send, via a second 3GPP access paths of the plurality of 3GPP access paths, a PDU session request message for the PDU session; wherein the first access and the second access may be 3GPP access type; wherein the first access and the second access may be 3GPP access type; wherein that the network slice may be configured for use via the multiple access may be that the network slice may be allowed for use via the multiple access; wherein that the network slice may be configured for use via the multiple access may be that the network slice may be preferred for use via the multiple access; wherein that the network slice may be configured for use via the multiple access may be that the network slice may be allowed for registration via the multiple access. A computing device may comprise: one or more processors; and memory storing instructions that, when executed by the one or more processors, cause the computing device to perform the described method, additional operations and/or include the additional elements. A system may comprise: a wireless device configured to perform the described method, additional operations and/or include the additional elements; and a access and mobility management function (AMF) configured to receive a registration request message. A computer-readable medium storing instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. Various examples may be used, for example, if the one or more criteria are met. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, or other 3GPP or non-3GPP technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or Lab VIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a wireless device, a configuration message comprising:
a network slice identifier indicating a network slice of a plurality of network slices;
an indication that the network slice is allowed for multiple 3rd Generation Partnership Project (3GPP) access, wherein the multiple 3GPP access comprise at least a first 3GPP access and a second 3GPP access;
sending, by the wireless device and via the first 3GPP access, a first registration request message requesting the network slice; and
sending, by the wireless device, and via the second 3GPP access, a second registration request message requesting the network slice, wherein the network slice is allowed via the first 3GPP access.

2. The method of claim 1, further comprising:
receiving, by the wireless device and via a plurality of 3GPP access, a plurality of registration accept messages indicating one or more of:
a second network slice, of the plurality of network slices, is allowed, or;
a third network slice, of the plurality of network slices, is rejected for one or
more of the plurality of 3GPP access; and
sending, based on one of the plurality of registration accept messages and via a third 3GPP access of the plurality of 3GPP access, a third registration request message deregistering the second network slice.

3. The method of any one of claims 1-2, further comprising:
sending, by the wireless device, a request message for the parameter, wherein:
the request message comprises an indication that the wireless device supports a feature of dual steer;
the feature of dualsteer is using a plurality of access paths for an 3GPP access type; and
at least one access path of the plurality of access paths is associated with at least one of:
a 3GPP cell; or
a 3GPP radio access network (RAN).

4. The method of any one of claims 1-3, wherein the configuration message further comprises:
a second network slice identifier indicating a second network slice of the plurality of network slices; and
a second indication that indicates the second network slice is not allowed for the multiple 3GPP access.

5. The method of claim 4, wherein the sending the first registration request message further comprises:
sending, based on the second parameter and via the first 3GPP access, the first registration request message requesting the network slice and the second network slice; and
wherein the sending the second registration request message further comprises:
sending. based on the second parameter and via the second 3GPP access, the second registration request message requesting the network slice, wherein the second slice is excluded in the second registration request message.

6. The method of any one of claims 1-5, further comprising:
concurrently registering for the network slice via the multiple 3GPP access by sending the first registration request message and the second registration request message,
wherein:
a portion of time of the registration via the first 3GPP access overlaps a time of registration via the second 3GPP access.

7. The method of any one of claims 1-6, wherein the configuration message further comprises:
a traffic descriptor; and
a policy control information, wherein the policy control information indicates that a protocol data unit (PDU) session for a service data flow matching the traffic descriptor is preferred to use more than one 3GPP access paths.

8. The method of any one of claims 1-7, further comprising:
sending, via the first 3GPP access, a first protocol data unit (PDU) session request message for a first PDU session; and
sending, via the second 3GPP access, a second PDU session request message for the first PDU session.

9. The method of any one of claims 1-8, further comprising:
receiving, based on the first registration request message and via the first 3GPP access, a first registration accept message indicating the network slice is allowed; and
receiving, based on the second registration request message and via the second 3GPP access, a second registration accept message indicating the network slice is allowed.

10. The method of any one of claims 1-9, wherein the configuration message further comprises an indicator indicating whether the network slice is allowed for use over a non-3GPP (N3GPP) access path of a N3GPP access type.

11. The method of claim 2, further comprising:
sending, based on the second registration accept message and via the second 3GPP access, a fourth registration request message registering the network slice; and
receiving, based on the second registration request message, a third registration accept message indicating the network slice being allowed.

12. The method of any one of claims 2 or 11, wherein the first registration request message further comprises:
an indication requesting a second network slice of the plurality of network slices; and
wherein the method further comprises:
sending, based on the second registration accept message and via the second 3GPP access, a fourth registration request message registering the second network slice.

13. A computing device comprising:
one or more processors; and
memory storing instructions that, when executed by the one or more processors, cause the computing device to perform the method of any one of claims 1-12.

14. A system comprising:
a wireless device configured to perform the method of any one of claims 1-12; and
a access and mobility management function (AMF) configured to receive a registration request.

15. A computer-readable medium storing instructions that, when executed, cause performance of the method of any one of claims 1-12.
